# EUROPEAN PATENT SPECIFICATION

(11) **EP 3 004 286 B1**
(45) Date of publication and mention of the grant of the patent: **28.08.2019**
(21) Application number: 14803554.6
(22) Date of filing: 02.06.2014
(51) Int. Cl.: C09K 11/07, C09K 11/02

(54) **BROAD TEMPERATURE PERFORMANCE CHEMILUMINESCENT SYSTEMS AND METHODS**
CHEMILUMINESZENTE SYSTEME UND VERFAHREN MIT BREITEM TEMPERATURBEREICH
SYSTÈMES ET PROCÉDÉS À CHIMILUMINESCENCE EFFICACES SUR UNE GAMME ÉTENDUE DE TEMPÉRATURES

(30) Priority: 01.06.2013 US 201361830070 P; 01.06.2013 US 201361830071 P; 01.06.2013 US 201361830075 P; 01.06.2013 US 201361830072 P
(43) Date of publication of application: 13.04.2016
(73) Proprietor: Cyalume Technologies, Inc, West Springfield MA 01089 (US)
(72) Inventor: CRANOR, Earl, Longmeadow, MA 01106 (US); JACOB, Linda, Woodbridge, CT 06525 (US); TAYLOR, Patrick, Holyoke, MA 01040 (US)
(74) Representative: Trinks, Ole
(86) International application number: PCT/US2014/040573
(87) International publication number: WO 2014/194332

(56) References cited:
- WO-A1-2012/101848
- US-A1- 2012 097 063
- US-A1- 2012 097 063
- US-A1- 2012 126 188

## Description

### RELATED APPLICATIONS

This application claims the priority of U.S. provisional applications Ser. No. 61/830,070, filed June 1, 2013, entitled "BROAD TEMPERATURE PERFORMANCE CHEMILUMINESCENT SYSTEMS AND METHODS", Ser. No. 61/830,071, filed June 1, 2013, entitled "LOW TEMPERATURE OXALATE SYSTEMS AND METHODS FOR CHEMILUMINESCENT REACTIONS", Ser. No. 61/830,072, filed June 1, 2013, entitled "LOW TEMPERATURE ACTIVATOR SYSTEMS AND METHODS FOR CHEMILUMINESCENT REACTIONS", and Ser. No. 61/830,075, filed June 1, 2013, entitled "MIXED CATALYST SYSTEMS AND METHODS FOR CHEMILUMINESCENT REACTIONS."

### TECHNICAL FIELD

In some embodiments of the present disclosure, the present invention relates to chemiluminescent systems and methods.

### BACKGROUND

WO 2012/101848 A1 dicloses a chemiluminescent system comprising an oxalate system and an activator system, where the activator system includes two or more solvents such as specified citrates, benzoates, trimellitates, adipates, glycols, and glycol ethers. Neither the oxalate system nor the activator system described in WO 2012/101848 A1 includes an inorganic salt.

US 2012/0097063 A1 also discloses a chemiluminescent system comprising an oxalate system and an activator system. The activator system described in US 20120097063 includes at least one peroxide, at least one catalyst chosen from specified salicylates, triazoles, and imidazoles, and at least one solvent such as dimethyl phthalate, triethyl citrate, ethylene glycol dibenzoate. The oxalate system described in US 20120097063 includes at least one oxalate ester, at least one fluorescer, at least one inorganic salt, and at least one solvent such as specified citrates, glycols, phthalates and benzoates.

Chemiluminescence is the emission of light as a result of a chemical reaction. There may also be limited emission of heat during the chemical reaction. Typically, a reaction beginning with reactants A and B, with an excited intermediate, yields products and light. Typically, there are many applications that use chemiluminescence. For example, chemiluminescence is used in gas analysis, analysis of inorganic and/or organic species, detection and assay of biomolecules, DNA sequencing, lighting objects, and children's toys.

### BRIEF SUMMARY OF INVENTION

The invention relates to a chemiluminescent system as defined by independent claim 1, wherein further developments of the inventive chemiluminescent system are provided by the sub-claims.

Accordingly, the present invention relates to a chemiluminescent system, including: an oxalate system, including: (a) at least one oxalate ester in an amount ranging from 3 to 60 percent by weight based on a total weight of the oxalate system, (b) at least one first solvent selected from the group consisting of: alkyl benzoates, dialkyl phthalates, trialkyl acetylcitrates, 2-acetyloxy isobutyrates, paraffinic liquids, isoparaffinic liquids, toluene, nitroethane, and a combination thereof, where the at least one first solvent is present in an amount ranging from 10 to 97 percent by weight based on the total weight of the oxalate system; (c) at least one second solvent selected from the group consisting of: dialkyl malonates, dialkyl dialkylmalonates, dialkyl arylalkylmalonates, dialkyl succinates, dialkyl glutarates, dialkyl adipates, dialkyl pimelates, dialkyl polyalkylmalonates and a combination thereof, where the at least one second solvent is present in an amount ranging from 5 to 85 percent by weight based on the total weight of the oxalate system; (d) at least one fluorescer, and (e) at least one inorganic salt, in an amount ranging from 0.1 to 30 percent by weight based on the total weight of the oxalate system, and an activator system, including: (a) at least one peroxide, (b) at least one third solvent selected from the group consisting of: tert-butanol, 3-methyl-3-pentanol, 2- methyl-2-butanol, ethyl 2-hydroxyisobutyrate, methyl 2- hydroxyisobutyrate, ethylene glycol, propylene glycol, ethylene glycol monomethyl ether, ethylene glycol diethyl ether, ethylene glycol monobutyl ether, ethylene glycol dibutyl ether, and propylene glycol dimethyl ether, and a combination thereof; where the at least one third solvent is present in an amount ranging from 5 to 85 percent by weight based on the total weight of the activator system, (c) at least one fourth solvent selected from the group consisting of: trialkyl citrates, dialkyl phthalates, and a combination thereof; where the at least one fourth solvent is present in an amount ranging from 15 to 95 percent by weight based on a total weight of the activator system, and (d) at least one catalyst, and where the chemiluminescent system, at a temperature ranging from -110 degrees Celsius to 75 degrees Celsius, is configured to produce a light having an illuminescence.

According to the invention, the at least one oxalate ester may be represented by formula (I): 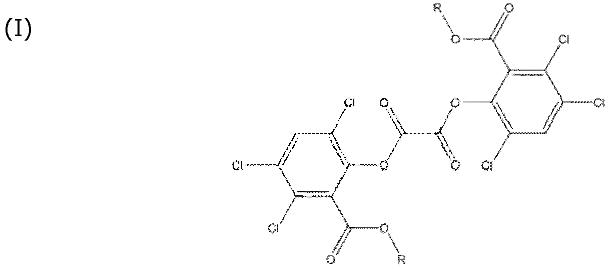 where R=CH2A, and A is selected from the group consisting of an alkyl chain, alkyl ring, an aromatic ring, and a combination thereof, where R is linear or branched, and where R is from C4-15.

According to the invention, the at least one oxalate ester may be selected from the group consisting of: bis{3,4,6-trichloro-2-[(2-methylpropoxy)carbonyl]phenyl}oxalate, bis{3,4,6-trichloro-2-[(cyclopropylmethoxy)carbonyl]phenyl}oxalate, bis{3,4,6-trichloro-2-[(2-methylbutoxy)carbonyl]phenyl}oxalate, bis{3,4,6-trichloro-2-[(3-methylbutoxy)carbonyl]phenyl}oxalate, bis{3,4,6-trichloro-2-[(2,2-dimethylpropoxy)carbonyl]phenyl}oxalate, bis{3,4,6-trichloro-2-[(2-methylpentyloxy)carbonyl]phenyl}oxalate, bis{3,4,6-trichloro-2-[(3-methylpentyloxy)carbonyl]phenyl}oxalate, bis{3,4,6-trichloro-2-[(4-methylpentyloxy)carbonyl]phenyl}oxalate, bis{3,4,6-trichloro-2-[(3,3-dimethylbutoxy)carbonyl]phenyl}oxalate, bis{3,4,6-trichloro-2-[(2-ethylbutoxy)carbonyl]phenyl}oxalate, bis{3,4,6-trichloro-2-[(cyclopentylmethoxy)carbonyl]phenyl}oxalate, bis{3,4,6-trichloro-2-[(2-methylhexyloxy)carbonyl]phenyl}oxalate, bis{3,4,6-trichloro-2-[(3-methylhexyloxy)carbonyl]phenyl}oxalate, bis{3,4,6-trichloro-2-[(4-methylhexyloxy)carbonyl]phenyl}oxalate, bis{3,4,6-trichloro-2-[(5-methylhexyloxy)carbonyl]phenyl}oxalate, bis{3,4,6-trichloro-2-[(cyclohexylmethoxy)carbonyl]phenyl}oxalate, bis{3,4 6-trichloro-2-[(phenylmethoxy)carbonyl]phenyl}oxalate, bis{3,4,6-trichloro-2-[(2-phenylethoxy)carbonyl]phenyl}oxalate, bis(3,4, 6-trichloro-2-{[(2-methylphenyl)methoxy]carbonyl}phenyl)oxalate, bis(3,4,6-trichloro-2-{[(3-methylphenyl)methoxy]carbonyl}phenyl)oxalate, bis(3,4,6-trichloro-2-{[(4-methylphenyl)methoxy]carbonyl}phenyl)oxalate, bis(3,4,6-trichloro-2-{[(2,3-dimethylphenyl)methoxy]carbonyl}phenyl)oxalate, bis(3,4,6-trichloro-2-{[(2,4-dimethylphenyl)methoxy]carbonyl}phenyl)oxalate, bis(3,4,6-trichloro-2-{[3,4-dimethylphenyl)methoxy]carbonyl}phenyl)oxalate, bis(3,4,6-trichloro-2-{[(3,5-dimethylphenyl)methoxy]carbonyl}phenyl)oxalate, bis(3,4,6-trichloro-2-{[(2,6-dimethylphenyl)methoxy]carbonyl}phenyl)oxalate, bis(3,4,6-trichloro-2-{[(2-ethylphenyl)methoxy]carbonyl}phenyl)oxalate, bis(3,4,6-trich!oro-2-{[(3-ethylphenyl)methoxy]carbonyl}phenyl)oxalate, bis(3,4,6-trichloro-2-{[(4-ethylphenyl)methoxy]carbonyl}phenyl)oxalate, bis(3,4,6-trichloro-2-{[2-(2-methylphenyl)ethoxy]carbonyl}phenyl)oxalate, bis(3,4,6-trichloro-2-{[2-(3-methylphenyl)ethoxy]carbonyl}phenyl)oxalate, bis(3,4,6-trichloro-2-{[2-(4-methylphenyl)ethoxy]carbonyl}phenyl)oxalate, bis{3,4,6-trichloro-2-[(2-phenylpropoxy)carbonyl]phenyl}oxalate, bis{3,4,6-trichloro-2-[(3-phenylpropoxy)carbonyl]phenyl}oxalate, bis{3,4,6-trichloro-2-[1-naphthalenylmethoxy)carbonyl]phenyl}oxalate, bis{3,4,6-trichloro-2-[2-naphthalenylmethoxy)carbonyl]phenyl}oxalate, bis{3,4,6-trichloro-2-[(2,2-diphenylethoxy)carbonyl]phenyl}oxalate, bis{3,4,6-trichloro-2-[(9-fluorenylmethoxy)carbonyl]phenyl}oxalate, and bis{3,4,6-trichloro-2-[(9-anthracenylmethoxy)carbonyl]phenyl}oxalate.

According to the invention, the at least one fluorescer may be present in an amount ranging from 0.05 to 0.9 percent by weight based on the total weight of the chemiluminescent system.

According to the invention, the at least one inorganic salt may be selected from the group consisting of sodium thiosulphate, potassium thiosulphate, cobalt acetate, copper acetate, lead acetate, cupric chloride, ferric chloride, calcium iodide, potassium iodide, silver nitrate, and a combination thereof.

According to the invention, the at least one peroxide may be selected from the group consisting of hydrogen peroxide, sodium peroxide, sodium perborate, sodium pyrophosphate peroxide, urea peroxide, histidine peroxide, t-butylhydroperoxide, peroxynehzoic acid, sodium percarbonate, and a combination thereof.

According to the invention, the at least one peroxide may be present in an amount ranging from 0.25 to 25 percent by weight based on the total weight of the chemiluminescent system.

According to the invention, the at least one catalyst may be selected from the group consisting of: dimethylbenzylamine, N,N-dimethyl-1-phenylethylamine, N-ethyl-N-methylbenzylamine, diethylbenzylamine, N-methyl-N-propylbenzylamine, N,N-dibutylbenzylamine, N,N-bis(1-methylethyl)benzenemethanamine, methyl dibenzylamine, ethyl dibenzylamine, n-propyl dibenzylamine, iso-propyl dibenzylamine, butyl dibenzylamine, iso-butyl dibenzylamine, N,N-dibenzyl-2-phenylethanamine, hexyl dibenzylamine, tribenzyl amine, 4-methyl-N,N-bis[(4-methylphenyl)methyl]benzenemethanamine, 4-methyl-N,N-bis(phenylmethyl)benzenemethanamine, N-methyl-N-phenylbenzenemethanamine, N-ethyl-N-phenylbenzenemethanamine, N,4-dimethyl-N-phenylbenzenemethanamine, N-propyl-N-phenylbenzenemethanamine, N, N-diphenylbenzenemethanamine, N,N-bis(4-methylphenyl)benzenemethanamine, lithium benzoate, sodium benzoate, potassium benzoate, cesium benzoate, lithium salicylate, sodium salicylate, potassium salicylate, cesium salicylate, lithium o-anisate, sodium o-anisate, potassium o-anisate, cesium o-anisate, lithium p-anisate, sodium p-anisate, potassium p-anisate, and/or cesium p-anisate.

According to the invention, the at least one catalyst may be present in an amount ranging from 5 to 0.0005 percent by weight based on the total weight of the chemiluminescent system.

### BRIEF DESCRIPTION OF THE DRAWINGS

The chemiluminescent system of the present invention and additional embodiments thereof will be further explained with reference to the attached figures. The figures constitute a part of this specification and include illustrative embodiments of the present invention and illustrate various objects and features thereof. The figures shown are not necessarily to scale, with emphasis instead generally being placed upon illustrating the principles of the present invention. Further, some features may be exaggerated to show details of particular components.
- Figure 1: illustrates aspects of some embodiments of the present disclosure.
- Figure 2: illustrates some further aspects of some embodiments of the present disclosure.
- Figure 3: illustrates further aspects of some embodiments of the present disclosure.
- Figure 4: illustrates aspects of some embodiments of the present disclosure.
- Figure 5: illustrates aspects of some embodiments of the present disclosure.
- Figure 6: illustrates yet further aspects of some embodiments of the present disclosure.
- Figure 7: illustrates aspects of some embodiments of the present disclosure.
- Figure 8: illustrates further aspects of some embodiments of the present disclosure.

Further, the figures are not necessarily to scale, some features may be exaggerated to show details of particular components. In addition, any measurements, specifications and the like shown in the figures are intended to be illustrative, and not restrictive. Therefore, specific structural and functional details disclosed herein are not to be interpreted as limiting, but merely as a representative basis for teaching one skilled in the art to variously employ the present invention.

### DETAILED DESCRIPTION

### Broad Temperature Performance Chemiluminescent Systems and Methods

Among those benefits and improvements that have been disclosed, other objects and advantages of this invention will become apparent from the following description taken in conjunction with the accompanying figures. Detailed embodiments of the present invention are disclosed herein; however, it is to be understood that the disclosed embodiments are merely illustrative of the invention that may be embodied in various forms. In addition, each of the examples given in connection with the various embodiments of the invention which are intended to be illustrative, and not restrictive.

Throughout the specification and claims, the following terms take the meanings explicitly associated herein, unless the context clearly dictates otherwise. The phrases "in one embodiment" and "in some embodiments" as used herein do not necessarily refer to the same embodiment(s), though it may. Furthermore, the phrases "in another embodiment" and "in some other embodiments" as used herein do not necessarily refer to a different embodiment, although it may. Thus, as described below, various embodiments of the invention may be readily combined.

In addition, as used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise. In addition, throughout the specification, the meaning of "a," "an," and "the" include plural references. The meaning of "in" includes "in" and "on."

"Activation" and variations thereof, as used herein, means that the oxalate system and the activator system of the present invention have been sufficiently combined such as by mixing to provide useable light in a broad temperature range.

In some embodiments of the present disclosure, the present disclosure relates to chemiluminescent systems. In some embodiments of the present disclosure, an exemplary chemiluminescent system of the present disclosure can be utilized for tracing rounds in munitions that performs at a broad temperature range.

In some embodiments of the present disclosure, the present disclosure is a chemiluminescent system that includes an oxalate system and an activator system, wherein the oxalate system includes at least one oxalate ester, at least one first solvent, at least one dye and at least one inorganic salt, wherein the activator system includes at least one peroxide, at least one second solvent, and at least one catalyst, and wherein the chemiluminescent system is configured so as to provide light in a temperature range from -110 deg C to 75 deg C.

In some embodiments of the present disclosure, the oxalate system includes at least one oxalate ester selected from the group consisting of bis(2,4,5-trichloro-6-carbopentoxyphenyl)oxalate; bis(2,4,5-trichlorophenyl)oxalate; bis(2,4,5-tribromo-6-carbohexoxyphenyl)oxalate; bis(2,4,5-trichloro-6-carboisopentoxyphenyl)oxalate; bis(2,4,5-trichloro-6-carbobenzoxyphenyl)oxalate; bis(2-nitrophenyl)oxalate; bis(2,4-dinitrophenyl)oxalate; bis(2,6-dichloro-4-nitrophenyl)oxalate; bis(2,4,6-trichlorophenyl)oxalate; bis(3-trifluoromethyl-4-nitrophenyl)oxalate; bis(2-methyl-4,6-dinitrophenyl)oxalate; bis(1,2-dimethyl-4,6-dinitrophenyl)oxalate; bis(2,4-dichlorophenyl)oxalate; bis(2,4-dinitrophenyl)oxalate; bis(2,5-dinitrophenyl)oxalate; bis(2-formyl-4-nitrophenyl)oxalate; bis(pentachlorophenyl)oxalate; bis(1,2-dihydro-2-oxo-1-pyridyl)glyoxal; bis(2,4-dinitro-6-methylphenyl)oxalate; and bis-N-phthalimidyl oxalate.

In some embodiments of the present disclosure, the at least one oxalate ester is selected from the group consisting of oxalate esters represented by the general formula (I), 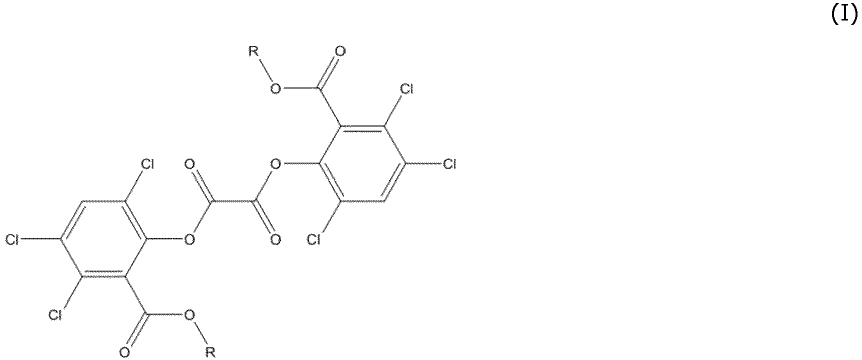 wherein R=CH2A, and A is chosen from alkyl chains, alkyl rings, and aromatic rings or combinations thereof, and wherein R is linear or nonlinear (i.e., branched), and comprises from 4-15 carbon atoms.

In some embodiments of the present disclosure, the at least one oxalate ester is selected from the group consisting of bis{3,4,6-trichloro-2-[(2-methylpropoxy)carbonyl]phenyl}oxalate; bis{3,4,6-trichloro-2-[(cyclopropylmethoxy)carbonyl]phenyl}oxalate; bis{3,4,6-trichloro-2-[(2-methylbutoxy)carbonyl]phenyl}oxalate; bis{3,4,6-trichloro-2-[(3-methylbutoxy)carbonyI]phenyl}oxalate; bis{3,4,6-trichloro-2-[(2,2-dimethylpropoxy)carbonyl]phenyl}oxalate; bis{3,4,6-trichloro-2-[(2-methylpentyloxy)carbonyl]phenyl}oxalate; bis{3,4,6-trichloro-2-[(3-methylpentyloxy)carbonyl]phenyl}oxalate; bis{3,4,6-trichloro-2-[(4-methylpentyloxy)carbonyl]phenyl}oxalate; bis{3,4,6-trichloro-2-[(3,3-dimethylbutoxy)carbonyl]phenyl }oxalate; bis{3,4,6-trichloro-2-[(2-ethylbutoxy)carbonyl]phenyI}oxalate; bis{3,4, 6-trichloro-2-[(cyclopentylmethoxy)carbonyl]phenyl}oxalate; bis{3,4,6-trichloro-2-[(2-methylhexyloxy)carbonyl]phenyl}oxalate; bis{3,4,6-trichloro-2-[(3-methylhexyloxy)carbonyl]phenyl}oxalate; bis{3,4,6-trichloro-2-[(4-methylhexyloxy)carbonyI]phenyl}oxalate; bis{3,4,6-trichloro-2-[(5-methylhexyloxy)carbonyl]phenyl}oxalate; bis{3,4,6-trichloro-2-[(cyclohexylmethoxy)carbonyl]phenyl}oxalate; bis{3,4,6-trichloro-2-[(phenylmethoxy)carbonyl]phenyl}oxalate; bis{3,4,6-trichloro-2-[(2-phenylethoxy)carbonyI]phenyl}oxalate; bis(3,4,6-trichloro-2-{[(2-methylphenyl)methoxy]carbonyl}phenyl)oxalate; bis(3,4,6-trichloro-2-{[(3-methylphenyl)methoxy]carbonyl}phenyl)oxalate; bis(3,4,6-trichloro-2-{[(4-methylphenyl)methoxy]carbonyl}phenyl)oxalate; bis(3,4,6-trichloro-2-{[(2,3-dimethylphenyl)methoxy]carbonyl}phenyl)oxalate; bis(3,4,6-trichloro-2-{[(2,4-dimethylphenyl)methoxy]carbonyl}phenyl)oxalate; bis(3,4,6-trichloro-2-{[3,4-dimethylphenyl)methoxy]carbonyl}phenyl)oxalate; bis(3,4,6-trichloro-2-{[(3,5-dimethylphenyl)methoxy]carbonyl}phenyl)oxalate; bis(3,4,6-trichloro-2-{[(2,6-dimethylphenyl)methoxy]carbonyl}phenyl)oxalate; bis(3,4,6-trichloro-2-{[(2-ethylphenyl)methoxy]carbonyI)phenyl)oxalate; bis(3,4,6-trichloro-2-{[(3-ethylphenyl)methoxy]carbonyl}phenyl)oxalate; bis(3,4,6-trichloro-2-{[(4-ethylphenyl)methoxy]carbonyl}phenyl)oxalate; bis(3,4,6-trichloro-2-{[2-(2-methylphenyl)ethoxy]carbonyl}phenyl)oxalate; bis(3,4,6-trichloro-2-{[2-(3-methylphenyl)ethoxy]carbonyl}phenyl)oxalate; bis(3,4,6-trichloro-2-{[2-(4-methylphenyl)ethoxy]carbonyl}phenyl)oxalate; bis{3,4,6-trichloro-2-[(2-phenylpropoxy)carbonyl]phenyl}oxalate; bis(3,4,6-trichloro-2-[(3-phenylpropoxy)carbonyl]phenyl}oxalate; bis{3,4,6-trichloro-2[1-naphthalenylmethoxy)carbonyl]phenyl}oxalate; bis{3,4,6-trichloro-2-[2-naphthalenylmethoxy)carbonyl]phenyl}oxalate; bis{3,4,6-trichloro-2-[(2,2-diphenylethoxy)carbonyl]phenyl}oxalate; bis{3,4,6-trichloro-2-[(9-fluorenylmethoxy)carbonyl]phenyl}oxalate; and bis{3,4,6-trichloro-2-[(9-anthracenylmethoxy)carbonyl]phenyl}oxalate.

In some embodiments of the present disclosure, the at least one oxalate ester is present in an amount ranging from 3 percent to 60 percent by weight, based upon the total weight of the combined activator system and oxalate system.

In some embodiments of the present disclosure, the at least one dye is a fluorescer selected from the group consisting of 1-methoxy-9,10-bis(phenylethynyl)anthracene, perylene, rubrene, 16,17-didecycloxyviolanthrone, 2-ethyl-9,10-bis(phenylethynyl)anthracene; 2-chloro-9,10-bis(4-ethoxyphenyl)anthracene;2-chloro-9,10-bis(4-methoxyphenyl)anthracene; 9,10-bis(phenylethynyl)anthracene; 1-chloro-9,10-bis(phenylethynyl)anthracene; 1,8-dichloro-9,10-bis(phenylethynyl)anthracene; 1,5-dichloro-9,10-bis(phenylethynyl)anthracene; 2,3-dichloro-9,10-bis (phenylethynyl)anthracene; 5,12-bis(phenylethynyl)tetracene, 9,10-diphenylanthracene; 1,6,7,12-tetraphenoxy-N,N'-bis(2,6-diisopropylpheny 1)-3,4,9,10-perylene dicarboximide; 1,6,7,12-tetraphenoxy-N,N'bis(2,5-di-t-butylphenyl)-3,4,9,10-perylene dicarboximide; 1,7-dichloro-6,12-diphenoxy-N,N'-bis(2,6-diisopropylphenyl)-3,4,9,10-perylene dicarboximide; 1,6,7,12-tetra(p-bromophenoxy)-N,N' -bis(2,6-diisopropylphenyl)-3 ,4,9,10-perylene dicarboximide; 1,6,7,12-tetraphenoxy-N,N'dineopentyl-3,4,9,10-perylene dicarboximide; 1,6,7,12-tetra-(p-t-butylphenoxy)-N,N'-dineopentyl-3,4,9,10-perylenedicarboximide; 1,6,7,12-tetra(o-chlorophenoxy)-N,N'-bis(2,6-diisopropylphenyl)-3,4,9,10-perylene dicarboximide; 1,6,7,12-tetra(p-chlorophenoxy)-N,N'-bis(2,6-diisopropylphenyl)-3,4,9,10-perylene dicarboximide; 1,6,7,12-tetra(o-fluorophenoxy)-N,N'-bis(2,6-diisopropylphenyl)-3,4,9,10-perylene dicarboximide; 1,6,7,12-tetra(p-fluorophenoxy)-N,N' -bis(2,6-diisopropylphenyl)-3 ,4,9,10-perylenedicarboximide; 1,6,7,12-tetraphenoxy-N,N'-diethyl-3,4,9,10-perylene dicarboximide; 1,7-dibromo-6,12-diphenoxy-N,N'-bis(2-isopropylphenyl)-3,4,9,10-perylene dicarboximide; 16,17-dihexyloxyviolanthrone; and 1,4-dimethyl-9,10-bis(phenylethynyl)anthracene.

In some embodiments of the present disclosure, the at least one dye is a fluorescer present in an amount ranging from 0.05 percent to 0.9 percent by weight, based on the total weight of the oxalate system.

In some embodiments of the present disclosure, the at least one first solvent is a low melting solvents selected from the group consisting of alkyl benzoates, dialkyl malonates, dialkyl dialkylmalonates, dialkyl arylalkylmalonates, dialkyl succinates, dialkyl glutarates, dialkyl adipates, dialkyl pimelates, dialkyl polyalkylmalonates, acetyl trialkyl citrates, 2-acetyloxy isobutyrates, paraffinic liquids, isoparaffinic liquids, toluene, and nitroethane.

In some embodiments of the present disclosure, the at least one inorganic salt is selected from the group consisting of sodium thiosulphate, potassium thiosulphate, cobalt acetate, copper acetate, lead acetate, cupric chloride, ferric chloride, calcium iodide, potassium iodide, and silver nitrate.

In some embodiments of the present disclosure, the at least one inorganic salt is present in an amount ranging from 0.05 percent to 30 percent by weight, based on the total weight of the oxalate system.

In some embodiments of the present disclosure, the at least one peroxide is selected from the group consisting of hydrogen peroxide; sodium peroxide; sodium perborate; sodium pyrophosphate peroxide; urea peroxide; histidine peroxide; t-butylhydroperoxide; peroxybenzoic acid, and sodium percarbonate.

In some embodiments of the present disclosure, the at least one peroxide is present in an amount ranging from 0.25 percent to 25 percent by weight, based on the total weight of the combined activator system and oxalate system.

In some embodiments of the present disclosure, the at least one second solvent is selected from the group consisting of trialkyl citrates, dialkyl phthalates, glycols, and glycol ethers.

In some embodiments of the present disclosure, the at least one catalyst is selected from the group consisting of dimethylbenzylamine, N,N-dimethyl-1-phenylethylamine, N-ethyl-N-methylbenzylamine, diethylbenzylamine, N-methyl-N-propylbenzylamine, N,N-dibutylbenzylamine, N,N-bis(1-methylethyl)benzenemethanamine, methyl dibenzylamine, ethyl dibenzylamine, n-propyl dibenzylamine, iso-propyl dibenzylamine, butyl dibenzylamine, iso-butyl dibenzylamine, N,N-dibenzyl-2-phenylethanamine, hexyl dibenzylamine, tribenzyl amine, 4-methyl-N,N-bis[(4-methylphenyl)methyl]benzenemethanamine, 4-methyl-N,N-bis(phenylmethyl)benzenemethanamine, N-methyl-N-phenylbenzenemethanamine, N-ethyl-N-phenylbenzenemethanamine, N,4-dimethyl-N-phenylbenzenemethanamine, N-propyl-N-phenylbenzenemethanamine, N,N-diphenylbenzenemethanamine, N,N-bis(4-methylphenyl)benzenemethanamine, lithium benzoate, sodium benzoate, potassium benzoate, cesium benzoate, lithium salicylate, sodium salicylate, potassium salicylate, cesium salicylate, lithium o-anisate, sodium o-anisate, potassium o-anisate, cesium o-anisate, lithium p-anisate, sodium p-anisate, potassium p-anisate, and/or cesium p-anisate,
In some embodiments of the present disclosure, the at least one catalyst is present at a concentration ranging from 5% to 0.0005% of the total weight of the activator system and oxalate system.

In some embodiments of the present disclosure, the chemiluminescent system further includes a third solvent configured to dissolve the at least one catalyst and allow mixing of the at least one peroxide, wherein the third solvent is selected from the group consisting of aliphatic tertiary alcohols, chosen from, but not restricted to, tert-butanol, 3-methyl-3-pentanol, 2-methyl-2-butanol, ethyl 2-hydroxyisobutyrate, and methyl 2-hydroxyisobutyrate; glycols chosen from, but not restricted to ethylene glycol and propylene glycol; and glycol ethers chosen from, but not restricted to ethylene glycol monomethyl ether, ethylene glycol diethyl ether, ethylene glycol monobutyl ether, ethylene glycol dibutyl ether, and propylene glycol dimethyl ether.

In some embodiments of the present disclosure, the third solvent is present in a concentration ranging from 0% to 90% based on the total weight of activator system.
In some embodiments of the present disclosure, the broad temperature chemiluminescent system and method of the present disclosure is configured for use with munitions to produce useable light at a broad temperature range when activated.

In some embodiments of the present disclosure, the system of the present disclosure, when activated, is configured to produce useable light in a temperature range of -110oC to 75oC. In some embodiments of the present disclosure, the components of the system of the present disclosure, when activated, are configured to produce useable light in a temperature range of - 80oC to 50oC. In some embodiments of the present disclosure, the components of the system of the present disclosure, when activated, are configured to produce useable light in a temperature range of -110oC to 50oC. In some embodiments of the present disclosure, the components of the system of the present disclosure, when activated, are configured to produce useable light in a temperature range of -80oC to 75oC. In some embodiments of the present disclosure, the components of the system of the present disclosure, when activated, are configured to produce useable light in a temperature range of - 30oC to 30oC. In some embodiments of the present disclosure, the components of the system of the present disclosure, when activated, are configured to produce useable light in a temperature range of -100oC to 0oC. In some embodiments of the present disclosure, the components of the system of the present disclosure, when activated, are configured to produce useable light in a temperature range of -20oC to 75oC. In some embodiments of the present disclosure, the components of the system of the present disclosure, when activated, are configured to produce useable light in a temperature down to - 110oC. In some embodiments of the present disclosure, the components of the system of the present disclosure, when activated, are configured to produce useable light in a temperature range of -60oC to 20oC. In some embodiments of the present disclosure, the components of the system of the present disclosure, when activated, are configured to produce useable light in a temperature range of -110oC to -10oC.

In some embodiments of the present disclosure, the system and method of the present disclosure may include, but are not limited to, at least one activator system combined with at least one oxalate system. Combining may include any suitable method of contacting one system with another system such as by mixing or equivalent. In some embodiments of the present disclosure, the oxalate system may include, but is not limited to, an oxalate solution with at least one oxalate ester, at least one dye such as a fluorescer, at least one solvent, and/or at least one inorganic salt. In some embodiments of the present disclosure, the activator system may include, but is not limited to, at least one catalyst, at least one peroxide, and/or at least one solvent such as a bridging solvent, if required, to allow sufficient mixing of the peroxide component, and at least one solvent such as a low melting solvent.

In some embodiments of the present disclosure, the ratio of the weight of the oxalate system to the weight of the activator system ranges from 1:9 to 4:1. In some embodiments of the present disclosure, the ratio of the weight of the oxalate system to the weight of the activator system ranges from 1:5 to 2:1. In some embodiments of the present disclosure, the ratio of the weight of the oxalate system to the weight of the activator system ranges from 1:1 to 3:1. In some embodiments of the present disclosure, the ratio of the weight of the oxalate system to the weight of the activator system ranges from 1:3 to 3:1. In some embodiments of the present disclosure, the ratio of the weight of the oxalate system to the weight of the activator system ranges from 1:2 to 2:1. In some embodiments of the present disclosure, the ratio of the weight of the oxalate system to the weight of the activator system ranges from 2:1 to 4:1. In some embodiments of the present disclosure, the ratio of the weight of the oxalate system to the weight of the activator system ranges from 1:6 to 2:1. In some embodiments of the present disclosure, the ratio of the weight of the oxalate system to the weight of the activator system ranges from 1:1 to 4:1.

In some embodiments of the present disclosure, the ratio of the weight of the oxalate system to the weight of the activator system is 1:2. In some embodiments of the present disclosure, the ratio of the weight of the oxalate system to the weight of the activator system is 2:1. In some embodiments of the present disclosure, the ratio of the weight of the oxalate system to the weight of the activator system is 3:1. In some embodiments of the present disclosure, the ratio of the weight of the oxalate system to the weight of the activator system is 1:8. In some embodiments of the present disclosure, the ratio of the weight of the oxalate system to the weight of the activator system is 1:9. In some embodiments of the present disclosure, the ratio of the weight of the oxalate system to the weight of the activator system is 4:1. In some embodiments of the present disclosure, the ratio of the weight of the oxalate system to the weight of the activator system is 8:2. In some embodiments of the present disclosure, the ratio of the weight of the oxalate system to the weight of the activator system is 1:5. In some embodiments of the present disclosure, the ratio of the weight of the oxalate system to the weight of the activator system is 1:3.

In some embodiments of the present disclosure, the at least one oxalate ester may include, but is not limited to, bis(2,4,5-trichloro-6-carbopentoxyphenyl)oxalate (CPPO); bis(2,4,5-trichlorophenyl)oxalate; bis(2,4,5-tribromo-6-carbohexoxyphenyl)oxalate; bis(2,4,5-trichloro-6-carboisopentoxyphenyl)oxalate; bis(2,4,5-trichloro-6-carbobenzoxyphenyl)oxalate; bis(2-nitrophenyl)oxalate; bis(2,4-dinitrophenyl)oxalate; bis(2,6-dichloro-4-nitrophenyl)oxalate; bis(2,4,6-trichlorophenyl)oxalate; bis(3-trifluoromethyl-4-nitrophenyl)oxalate; bis(2-methyl-4,6-dinitrophenyl)oxalate; bis(1,2-dimethyl-4,6-dinitrophenyl)oxalate; bis(2,4-dichlorophenyl)oxalate; bis(2,4-dinitrophenyl)oxalate; bis(2,5-dinitrophenyl)oxalate; bis(2-formyl-4-nitrophenyl)oxalate; bis(pentachlorophenyl)oxalate; bis(1,2-dihydro-2-oxo-1-pyridyl)glyoxal; bis(2,4-dinitro-6-methylphenyl)oxalate; and/or bis-N-phthalimidyl oxalate.

In some embodiments of the present disclosure, the at least one oxalate ester may include, but is not limited to, oxalates represented by the general formula (I) 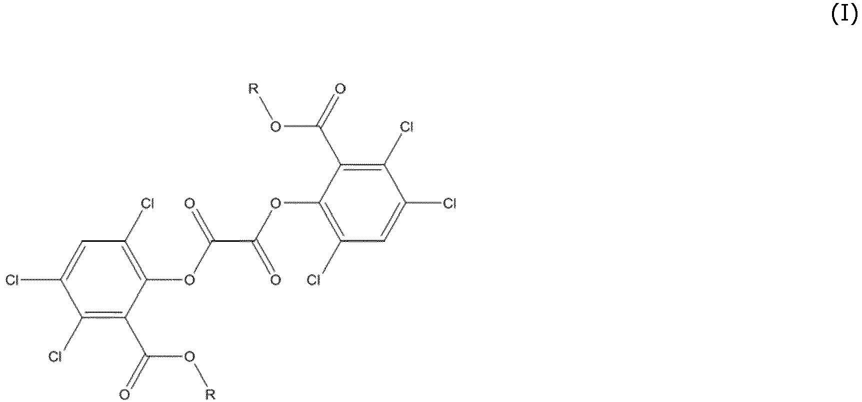 wherein R=CH2A, and A is chosen from alkyl chains, alkyl rings, and aromatic rings or combinations thereof, and wherein R is linear or nonlinear, and comprises from 4-15 carbon atoms.

In some embodiments of the present disclosure, the at least one oxalate ester may include, but is not limited to, bis{3,4,6-trichloro-2-[(2-methylpropoxy)carbonyl]phenyl}oxalate; bis{3,4,6-trichloro-2-[(cyclopropylmethoxy)carbonyl]phenyl}oxalate; bis {3,4,6-trichloro-2-[(2-methylbutoxy)carbonyl]phenyl}oxalate; bis{3,4,6-trichloro-2-[(3-methylbutoxy)carbonyI]phenyl}oxalate; bis{3,4,6-trichloro-2-[(2,2-dimethylpropoxy)carbonyl]phenyl}oxalate; bis{3,4,6-trichloro-2-[(2-methylpentyloxy)carbonyl]phenyl}oxalate; bis{3,4,6-trichloro-2-[(3-methylpentyloxy)carbonyl]phenyl}oxalate; bis{3,4,6-trichloro-2-[(4-methylpentyloxy)carbonyl]phenyl}oxalate; bis{3,4,6-trichloro-2-[(3,3-dimethylbutoxy)carbonyl]phenyl }oxalate; bis{3,4,6-trichloro-2-[(2-ethylbutoxy)carbonyl]phenyI}oxalate; bis{3,4,6-trichloro-2-[(cyclopentylmethoxy)carbonyl]phenyl}oxalate; bis{3,4,6-trichloro-2-[(2-methylhexyloxy)carbonyl]phenyl}oxalate; bis{3,4,6-trichloro-2-[(3-methylhexyloxy)carbonyl]phenyl}oxalate; bis{3,4,6-trichloro-2-[(4-methylhexyloxy)carbonyI]phenyl}oxalate; bis{3,4,6-trichloro-2-[(5-methylhexyloxy)carbonyl]phenyl}oxalate; bis{3,4,6-trichloro-2-[(cyclohexylmethoxy)carbonyl]phenyl}oxalate; bis{3,4,6-trichloro-2-[(phenylmethoxy)carbonyl]phenyl}oxalate; bis{3,4,6-trichloro-2-[(2-phenylethoxy)carbonyI]phenyl}oxalate; bis(3,4,6-trichloro-2-{[(2-methylphenyl)methoxy]carbonyl}phenyl)oxalate; bis(3,4,6-trichloro-2-{[(3-methylphenyl)methoxy]carbonyl}phenyl)oxalate; bis(3,4,6-trichloro-2-{[(4-methylphenyl)methoxy]carbonyl}phenyl)oxalate; bis(3,4,6-trichloro-2-{[(2,3-dimethylphenyl)methoxy]carbonyl}phenyl)oxalate; bis(3,4,6-trichloro-2-{[(2,4-dimethylphenyl)methoxy]carbonyl}phenyl)oxalate; bis(3,4,6-trichloro-2-{[3,4-dimethylphenyl)methoxy]carbonyl}phenyl)oxalate; bis(3,4,6-trichloro-2-{[(3,5-dimethylphenyl)methoxy]carbonyl}phenyl)oxalate; bis(3,4,6-trichloro-2-{[(2,6-dimethylphenyl)methoxy]carbonyl}phenyl)oxalate; bis(3,4,6-trichloro-2-{[(2-ethylphenyl)methoxy]carbonyI)phenyl)oxalate; bis(3,4,6-trichloro-2-{[(3-ethylphenyl)methoxy]carbonyl}phenyl)oxalate; bis(3,4,6-trichloro-2-{[(4-ethylphenyl)methoxy]carbonyl}phenyl)oxalate; bis(3,4,6-trichloro-2-{[2-(2-methylphenyl)ethoxy]carbonyl}phenyl)oxalate; bis(3,4,6-trichloro-2-{[2-(3-methylphenyl)ethoxy]carbonyl}phenyl)oxalate; bis(3,4,6-trichloro-2-{[2-(4-methylphenyl)ethoxy]carbonyl}phenyl)oxalate; bis{3,4,6-trichloro-2-[(2-phenylpropoxy)carbonyl]phenyl}oxalate; bis(3,4,6-trichloro-2-[(3-phenylpropoxy)carbonyI]phenyl}oxalate; bis{3,4,6-trichloro-2[1-naphthalenylmethoxy)carbonyl]phenyl}oxalate; bis{3,4,6-trichloro-2-[2-naphthalenylmethoxy)carbonyl]phenyl}oxalate; bis{3,4,6-trichloro-2-[(2,2-diphenylethoxy)carbonyl]phenyl}oxalate; bis{3,4,6-trichloro-2-[(9-fluorenylmethoxy)carbonyl]phenyl}oxalate; and/or bis{3,4,6-trichloro-2-[(9-anthracenylmethoxy)carbonyl]phenyl}oxalate.

In some embodiments of the present disclosure, the at least one oxalate ester is present in an amount ranging from 3 percent to 60 percent by weight, based upon the total weight of the combined activator system and oxalate system. In some embodiments of the present disclosure, the at least one oxalate ester is present in an amount ranging from 8 percent to 50 percent by weight, based upon the total weight of the combined activator system and oxalate system. In some embodiments of the present disclosure, the at least one oxalate ester is present in an amount ranging from 15 percent to 60 percent by weight, based upon the total weight of the combined activator system and oxalate system. In some embodiments of the present disclosure, the at least one oxalate ester is present in an amount ranging from 10 percent to 40 percent by weight, based upon the total weight of the combined activator system and oxalate system. In some embodiments of the present disclosure, the at least one oxalate ester is present in an amount ranging from 3 percent to 30 percent by weight, based upon the total weight of the combined activator system and oxalate system. In some embodiments of the present disclosure, the at least one oxalate ester is present in an amount ranging from 5 percent to 30 percent by weight, based upon the total weight of the combined activator system and oxalate system.

In some embodiments of the present disclosure, the at least one oxalate ester is present in an amount ranging from 20 percent to 60 percent by weight, based upon the total weight of the combined activator system and oxalate system. In some embodiments of the present disclosure, the at least one oxalate ester is present in an amount ranging from 40 percent to 60 percent by weight, based upon the total weight of the combined activator system and oxalate system. In some embodiments of the present disclosure, the at least one oxalate ester is present in an amount ranging from 3 percent to 20 percent by weight, based upon the total weight of the combined activator system and oxalate system.

In some embodiments of the present disclosure, the at least one oxalate ester is present at 3 percent by weight, based upon the total weight of the combined activator system and oxalate system. In some embodiments of the present disclosure, the at least one oxalate ester is present at 60 percent by weight, based upon the total weight of the combined activator system and oxalate system. In some embodiments of the present disclosure, the at least one oxalate ester is present at more than 3 percent by weight, based upon the total weight of the combined activator system and oxalate system.

In some embodiments of the present disclosure, the at least oxalate ester is present at the weight percents and the weight percent ranges detailed above, based on the weight of the oxalate system.

In some embodiments of the present disclosure, the at least one dye such as a fluorescer may include, but is not limited to, 1-methoxy-9,10-bis(phenylethynyl)anthracene, perylene, rubrene, 16,17-didecycloxyviolanthrone, 2-ethyl-9,10-bis(phenylethynyl)anthracene; 2-chloro-9,10-bis(4-ethoxyphenyl)anthracene;2-chloro-9,10-bis(4-methoxyphenyl)anthracene; 9,10-bis(phenylethynyl)anthracene; 1-chloro-9,10-bis(phenylethynyl)anthracene; 1,8-dichloro-9,10-bis(phenylethynyl)anthracene; 1,5-dichloro-9,10-bis(phenylethynyl)anthracene; 2,3-dichloro-9,10-bis (phenylethynyl)anthracene; 5,12-bis(phenylethynyl)tetracene, 9,10-diphenylanthracene; 1,6,7,12-tetraphenoxy-N,N' -bis(2,6-diisopropylpheny 1)-3,4,9,10-perylene dicarboximide; 1,6,7,12-tetraphenoxy-N,N'bis(2,5-di-t-butylphenyl)-3,4,9,10-perylene dicarboximide; 1,7-dichloro-6,12-diphenoxy-N,N'-bis(2,6-diisopropylphenyl)-3,4,9,10-perylene dicarboximide; 1,6,7,12-tetra(p-bromophenoxy)-N,N' -bis(2,6-diisopropylphenyl)-3 ,4,9,10-perylene dicarboximide; 1,6,7,12-tetraphenoxy-N,N'dineopentyl-3,4,9,10-perylene dicarboximide; 1,6,7,12-tetra-(p-t-butylphenoxy)-N,N'-dineopentyl-3,4,9,10-perylenedicarboximide; 1,6,7,12-tetra(o-chlorophenoxy)-N,N'-bis(2,6-diisopropylphenyl)-3,4,9,10-perylene dicarboximide; 1,6,7,12-tetra(p-chlorophenoxy)-N,N'-bis(2,6-diisopropylphenyl)-3,4,9,10-perylene dicarboximide; 1,6,7,12-tetra(o-fluorophenoxy)-N,N'-bis(2,6-diisopropylphenyl)-3,4,9,10-perylene dicarboximide; 1,6,7,12-tetra(p-fluorophenoxy)-N,N' -bis(2,6-diisopropylphenyl)-3 ,4,9,10-perylenedicarboximide; 1,6,7,12-tetraphenoxy-N,N'-diethyl-3,4,9,10-perylene dicarboximide; 1,7-dibromo-6,12-diphenoxy-N,N'-bis(2-isopropylphenyl)-3,4,9,10-perylene dicarboximide; 16,17-dihexyloxyviolanthrone; and/or 1,4-dimethyl-9,10-bis(phenylethynyl)anthracene.

In some embodiments of the present disclosure, the at least one dye such as a fluorescer is present in an amount ranging from 0.05 percent to 0.9 percent by weight, based on the total weight of the combined activator system and oxalate system. In some embodiments of the present disclosure, the at least one dye such as a fluorescer is present in an amount ranging from 0.1 percent to 0.8 percent by weight, based on the total weight of the combined activator system and oxalate system. In some embodiments of the present disclosure, the at least one dye such as a fluorescer is present in an amount ranging from 0.15 percent to 0.9 percent by weight, based on the total weight of the combined activator system and oxalate system. In some embodiments of the present disclosure, the at least one dye such as a fluorescer is present in an amount ranging from 0.05 percent to 0.5 percent by weight, based on the total weight of the combined activator system and oxalate system. In some embodiments of the present disclosure, the at least one dye such as a fluorescer is present in an amount ranging from 0.2 percent to 0.7 percent by weight, based on the total weight of the combined activator system and oxalate system. In some embodiments of the present disclosure, the at least one dye such as a fluorescer is present in an amount ranging from 0.05 percent to 0.1 percent by weight, based on the total weight of the combined activator system and oxalate system. In some embodiments of the present disclosure, the at least one dye such as a fluorescer is present in an amount ranging from 0.05 percent to 0.3 percent by weight, based on the total weight of the combined activator system and oxalate system.

In some embodiments of the present disclosure, the at least one dye such as a fluorescer is present at 0.05 percent by weight, based on the total weight of the combined activator system and oxalate system. In some embodiments of the present disclosure, the at least one dye such as a fluorescer is present at 0.2 percent by weight, based on the total weight of the combined activator system and oxalate system. In some embodiments of the present disclosure, the at least one dye such as a fluorescer is present at 0.5 percent by weight, based on the total weight of the combined activator system and oxalate system. In some embodiments of the present disclosure, the at least one dye such as a fluorescer is present at 0.9 percent by weight, based on the total weight of the combined activator system and oxalate system.

In some embodiments of the present disclosure, the at least one dye such as a fluorescer is present at the weight percents and the weight percent ranges detailed above, based on the weight of the oxalate system.

In some embodiments of the present disclosure, the at least one solvent of the oxalate system may include, but is not limited to low melting solvents. In some embodiments of the present disclosure, the at least one solvent of the oxalate system may include, but is not limited to, alkyl benzoates, dialkyl malonates, dialkyl dialkylmalonates, dialkyl arylalkylmalonates, dialkyl succinates, dialkyl glutarates, dialkyl adipates, dialkyl pimelates, dialkyl polyalkylmalonates, acetyl trialkyl citrates, 2-acetyloxy isobutyrates, paraffinic liquids, isoparaffinic liquids, toluene, nitroethane, and/or any combination thereof.

In some embodiments of the present disclosure, the at least one first solvent is present in an amount ranging from 10 percent to 97 percent of the total weight of the oxalate system. In some embodiments of the present disclosure, the at least one first solvent is present in an amount ranging from 20 percent to 80 percent of the total weight of the oxalate system. In some embodiments of the present disclosure, the at least one first solvent is present in an amount ranging from 10 percent to 75 percent of the total weight of the oxalate system. In some embodiments of the present disclosure, the at least one first solvent is present in an amount ranging from 30 percent to 80 percent of the total weight of the oxalate system. In some embodiments of the present disclosure, the at least one first solvent is present in an amount ranging from 15 percent to 50 percent of the total weight of the oxalate system. In some embodiments of the present disclosure, the at least one first solvent is present in an amount ranging from 50 percent to 97 percent of the total weight of the oxalate system. In some embodiments of the present disclosure, the at least one first solvent is present in an amount ranging from 70 percent to 97 percent of the total weight of the oxalate system.

In some embodiments of the present disclosure, the at least one first solvent is present at 10 percent of the total weight of the oxalate system. In some embodiments of the present disclosure, the at least one first solvent is present at 40 percent of the total weight of the oxalate system. In some embodiments of the present disclosure, the at least one first solvent is present at 60 percent of the total weight of the oxalate system. In some embodiments of the present disclosure, the at least one first solvent is present at 75 percent of the total weight of the oxalate system. In some embodiments of the present disclosure, the at least one first solvent is present at 97 percent of the total weight of the oxalate system.

In some embodiments of the present disclosure, the at least one second solvent is present in an amount ranging from 10 percent to 97 percent of the total weight of the oxalate system. In some embodiments of the present disclosure, the at least one second solvent is present in an amount ranging from 20 percent to 80 percent of the total weight of the oxalate system. In some embodiments of the present disclosure, the at least one second solvent is present in an amount ranging from 10 percent to 75 percent of the total weight of the oxalate system. In some embodiments of the present disclosure, the at least one second solvent is present in an amount ranging from 30 percent to 80 percent of the total weight of the oxalate system. In some embodiments of the present disclosure, the at least one second solvent is present in an amount ranging from 15 percent to 50 percent of the total weight of the oxalate system. In some embodiments of the present disclosure, the at least one second solvent is present in an amount ranging from 50 percent to 97 percent of the total weight of the oxalate system. In some embodiments of the present disclosure, the at least one second solvent is present in an amount ranging from 70 percent to 97 percent of the total weight of the oxalate system.

In some embodiments of the present disclosure, the at least one second solvent is present at 10 percent of the total weight of the oxalate system. In some embodiments of the present disclosure, the at least one second solvent is present at 40 percent of the total weight of the oxalate system. In some embodiments of the present disclosure, the at least one second solvent is present at 60 percent of the total weight of the oxalate system. In some embodiments of the present disclosure, the at least one second solvent is present at 75 percent of the total weight of the oxalate system. In some embodiments of the present disclosure, the at least one second solvent is present at 97 percent of the total weight of the oxalate system.

In some embodiments of the present disclosure, the at least one inorganic salt may include, but is not limited to, sodium thiosulphate, potassium thiosulphate, cobalt acetate, copper acetate, lead acetate, cupric chloride, ferric chloride, calcium iodide, potassium iodide, and/or silver nitrate.

In some embodiments of the present disclosure, the at least one inorganic salt is present in an amount ranging from 0.05 percent to 30 percent by weight, based on the total weight of the combined activator system and oxalate system. In some embodiments of the present disclosure, the at least one inorganic salt is present in an amount ranging from 0.5 percent to 25 percent by weight, based on the total weight of the combined activator system and oxalate system. In some embodiments of the present disclosure, the at least one inorganic salt is present in an amount ranging from 5 percent to 20 percent by weight, based on the total weight of the combined activator system and oxalate system. In some embodiments of the present disclosure, the at least one inorganic salt is present in an amount ranging from 10 percent to 15 percent by weight, based on the total weight of the combined activator system and oxalate system. In some embodiments of the present disclosure, the at least one inorganic salt is present in an amount ranging from 1 percent to 20 percent by weight, based on the total weight of the combined activator system and oxalate system. In some embodiments of the present disclosure, the at least one inorganic salt is present in an amount ranging from 0.05 percent to 10 percent by weight, based on the total weight of the combined activator system and oxalate system. In some embodiments of the present disclosure, the at least one inorganic salt is present in an amount ranging from 0.1 percent to 5 percent by weight, based on the total weight of the combined activator system and oxalate system.

In some embodiments of the present disclosure, the at least one inorganic salt is present at 0.05 percent by weight, based on the total weight of the combined activator system and oxalate system. In some embodiments of the present disclosure, the at least one inorganic salt is present at 30 percent by weight, based on the total weight of the combined activator system and oxalate system. In some embodiments of the present disclosure, the at least one inorganic salt is present at 20 percent by weight, based on the total weight of the combined activator system and oxalate system. In some embodiments of the present disclosure, the at least one inorganic salt is present at 15 percent by weight, based on the total weight of the combined activator system and oxalate system. In some embodiments of the present disclosure, the at least one inorganic salt is present at 1 percent by weight, based on the total weight of the combined activator system and oxalate system. In some embodiments of the present disclosure, the at least one inorganic salt is present at 2 percent by weight, based on the total weight of the combined activator system and oxalate system. In some embodiments of the present disclosure, the at least one inorganic salt is present at 5 percent by weight, based on the total weight of the combined activator system and oxalate system.

In some embodiments of the present disclosure, the at least one inorganic salt is present at the weight percents and the weight percent ranges detailed above, based on the weight of the oxalate system.

In some embodiments of the present disclosure, the at least one peroxide may include, but is not limited to, hydrogen peroxide; sodium peroxide; sodium perborate; sodium pyrophosphate peroxide; urea peroxide; histidine peroxide; t-butylhydroperoxide; peroxybenzoic acid, and/or sodium percarbonate.

In some embodiments of the present disclosure, the at least one peroxide is present in an amount ranging from 0.25 percent to 25 percent by weight, based on the total weight of the combined activator system and oxalate system. In some embodiments of the present disclosure, the at least one peroxide is present in an amount ranging from 5 percent to 25 percent by weight, based on the total weight of the combined activator system and oxalate system. In some embodiments of the present disclosure, the at least one peroxide is present in an amount ranging from 1 percent to 20 percent by weight, based on the total weight of the combined activator system and oxalate system. In some embodiments of the present disclosure, the at least one peroxide is present in an amount ranging from 10 percent to 15 percent by weight, based on the total weight of the combined activator system and oxalate system. In some embodiments of the present disclosure, the at least one peroxide is present in an amount ranging from 0.25 percent to 5 percent by weight, based on the total weight of the combined activator system and oxalate system.

In some embodiments of the present disclosure, the at least one peroxide is present at 0.25 percent by weight, based on the total weight of the combined activator system and oxalate system. In some embodiments of the present disclosure, the at least one peroxide is present at 1 percent by weight, based on the total weight of the combined activator system and oxalate system. In some embodiments of the present disclosure, the at least one peroxide is present at 5 percent by weight, based on the total weight of the combined activator system and oxalate system. In some embodiments of the present disclosure, the at least one peroxide is present at 10 percent by weight, based on the total weight of the combined activator system and oxalate system. In some embodiments of the present disclosure, the at least one peroxide is present at 20 percent by weight, based on the total weight of the combined activator system and oxalate system. In some embodiments of the present disclosure, the at least one peroxide is present at 25 percent by weight, based on the total weight of the combined activator system and oxalate system.

In some embodiments of the present disclosure, the at least one peroxide is present at the weight percents and the weight percent ranges detailed above, based on the weight of the activator system.

In some embodiments of the present disclosure, the at least one solvent of the activator system may include, but is not limited to low melting solvents. In some embodiments of the present disclosure, the at least one solvent of the activator system may include, but is not limited to, trialkyl citrates, dialkyl phthalates and any combination thereof.

In some embodiments of the present disclosure, the at least one third solvent is present in an amount ranging from 0 percent to 95 percent of the total weight of the activator system. In some embodiments of the present disclosure, the at least one third solvent is present in an amount ranging from 10 percent to 80 percent of the total weight of the activator system. In some embodiments of the present disclosure, the at least one third solvent is present in an amount ranging from 10 percent to 60 percent of the total weight of the activator system. In some embodiments of the present disclosure, the at least one third solvent is present in an amount ranging from 30 percent to 90 percent of the total weight of the activator system. In some embodiments of the present disclosure, the at least one third solvent is present in an amount ranging from 15 percent to 90 percent of the total weight of the activator system. In some embodiments of the present disclosure, the at least one third solvent is present in an amount ranging from 50 percent to 95 percent of the total weight of the activator system. In some embodiments of the present disclosure, the at least one third solvent is present in an amount ranging from 0 percent to 10 percent of the total weight of the activator system.

In some embodiments of the present disclosure, the at least one third solvent is present at 0 percent of the total weight of the activator system. In some embodiments of the present disclosure, the at least one third solvent is present at 20 percent of the total weight of the activator system. In some embodiments of the present disclosure, the at least one third solvent is present at 40 percent of the total weight of the activator system. In some embodiments of the present disclosure, the at least one third solvent is present at 60 percent of the total weight of the activator system. In some embodiments of the present disclosure, the at least one third solvent is present at 95 percent of the total weight of the activator system.

In some embodiments of the present disclosure, the at least one fourth solvent is present in an amount ranging from 0 percent to 95 percent of the total weight of the activator system. In some embodiments of the present disclosure, the at least one fourth solvent is present in an amount ranging from 10 percent to 80 percent of the total weight of the activator system. In some embodiments of the present disclosure, the at least one fourth solvent is present in an amount ranging from 10 percent to 60 percent of the total weight of the activator system. In some embodiments of the present disclosure, the at least one fourth solvent is present in an amount ranging from 30 percent to 90 percent of the total weight of the activator system. In some embodiments of the present disclosure, the at least one fourth solvent is present in an amount ranging from 15 percent to 90 percent of the total weight of the activator system. In some embodiments of the present disclosure, the at least one fourth solvent is present in an amount ranging from 50 percent to 95 percent of the total weight of the activator system. In some embodiments of the present disclosure, the at least one fourth solvent is present in an amount ranging from 0 percent to 10 percent of the total weight of the activator system.

In some embodiments of the present disclosure, the at least one fourth solvent is present at 0 percent of the total weight of the activator system. In some embodiments of the present disclosure, the at least one fourth solvent is present at 20 percent of the total weight of the activator system. In some embodiments of the present disclosure, the at least one fourth solvent is present at 40 percent of the total weight of the activator system. In some embodiments of the present disclosure, the at least one fourth solvent is present at 60 percent of the total weight of the activator system. In some embodiments of the present disclosure, the at least one fourth solvent is present at 95 percent of the total weight of the activator system.

In some embodiments of the present disclosure, the at least one catalyst may include, but is not limited to, dimethylbenzylamine, N,N-dimethyl-1-phenylethylamine, N-ethyl-N-methylbenzylamine, diethylbenzylamine, N-methyl-N-propylbenzylamine, N,N-dibutylbenzylamine, N,N-bis(1-methylethyl)benzenemethanamine, methyl dibenzylamine, ethyl dibenzylamine, n-propyl dibenzylamine, iso-propyl dibenzylamine, butyl dibenzylamine, iso-butyl dibenzylamine, N,N-dibenzyl-2-phenylethanamine, hexyl dibenzylamine, tribenzyl amine, 4-methyl-N,N-bis[(4-methylphenyl)methyl]benzenemethanamine, 4-methyl-N,N-bis(phenylmethyl)benzenemethanamine, N-methyl-N-phenylbenzenemethanamine, N-ethyl-N-phenylbenzenemethanamine, N,4-dimethyl-N-phenylbenzenemethanamine, N-propyl-N-phenylbenzenemethanamine, N, N-diphenylbenzenemethanamine, N,N-bis(4-methylphenyl)benzenemethanamine, lithium benzoate, sodium benzoate, potassium benzoate, cesium benzoate, lithium salicylate, sodium salicylate, potassium salicylate, cesium salicylate, lithium o-anisate, sodium o-anisate, potassium o-anisate, cesium o-anisate, lithium p-anisate, sodium p-anisate, potassium p-anisate, and/or cesium p-anisate.

In some embodiments of the present disclosure, the at least one catalyst is present at a concentration ranging from 5% to 0.0005% by weight, based on the total weight of the combined activator system and oxalate system. In some embodiments of the present disclosure, the at least one catalyst is present at a concentration ranging from 2% to 0.1% by weight, based on the total weight of the combined activator system and oxalate system. In some embodiments of the present disclosure, the at least one catalyst is present at a concentration ranging from 1% to 0.0005% by weight, based on the total weight of the combined activator system and oxalate system. In some embodiments of the present disclosure, the at least one catalyst is present at a concentration ranging from 5% to 2% by weight, based on the total weight of the combined activator system and oxalate system. In some embodiments of the present disclosure, the at least one catalyst is present at a concentration ranging from 0.7% to 0.0005% by weight, based on the total weight of the combined activator system and oxalate system. In some embodiments of the present disclosure, the at least one catalyst is present at a concentration ranging from 0.5% to 0.05% by weight, based on the total weight of the combined activator system and oxalate system. In some embodiments of the present disclosure, the at least one catalyst is present at a concentration ranging from 5% to 3% by weight, based on the total weight of the combined activator system and oxalate system.

In some embodiments of the present disclosure, the at least one catalyst is present at 5% by weight, based on the total weight of the combined activator system and oxalate system. In some embodiments of the present disclosure, the at least one catalyst is present at 0.5% by weight, based on the total weight of the combined activator system and oxalate system. In some embodiments of the present disclosure, the at least one catalyst is present at 0.05% by weight, based on the total weight of the combined activator system and oxalate system. In some embodiments of the present disclosure, the at least one catalyst is present at 0.005% by weight, based on the total weight of the combined activator system and oxalate system. In some embodiments of the present disclosure, the at least one catalyst is present at 0.0005% by weight, based on the total weight of the combined activator system and oxalate system. In some embodiments of the present disclosure, the at least one catalyst is present at 2% by weight, based on the total weight of the combined activator system and oxalate system. In some embodiments of the present disclosure, the at least one catalyst is present at 3% by weight, based on the total weight of the combined activator system and oxalate system.

In some embodiments of the present disclosure, the at least one catalyst is present at the weight percents and the weight percent ranges detailed above, based on the weight of the activator system.

In some embodiments of the present disclosure, the at least one catalyst is dissolved in a solvent. In some embodiments of the present disclosure, the solvent may include at least one bridging solvent suitable to allow sufficient mixing of the peroxide. In some embodiments of the present disclosure, the solvent may include, but is not limited to, aliphatic tertiary alcohols, chosen from, but not restricted to, tert-butanol, 3-methyl-3-pentanol, 2-methyl-2-butanol, ethyl 2-hydroxyisobutyrate, and methyl 2-hydroxyisobutyrate; glycols chosen from, but not restricted to ethylene glycol and propylene glycol; and glycol ethers chosen from, but not restricted to ethylene glycol monomethyl ether, ethylene glycol diethyl ether, ethylene glycol monobutyl ether, ethylene glycol dibutyl ether, and propylene glycol dimethyl ether or any combination thereof.

In some embodiments of the present disclosure, the at least one solvent is present in an amount ranging from 0 percent to 95 percent of the total weight of the activator system. In some embodiments of the present disclosure, the at least one solvent is present in an amount ranging from 10 percent to 80 percent of the total weight of the activator system. In some embodiments of the present disclosure, the at least one solvent is present in an amount ranging from 10 percent to 60 percent of the total weight of the activator system. In some embodiments of the present disclosure, the at least one solvent is present in an amount ranging from 30 percent to 90 percent of the total weight of the activator system. In some embodiments of the present disclosure, the at least one solvent is present in an amount ranging from 15 percent to 90 percent of the total weight of the activator system. In some embodiments of the present disclosure, the at least one solvent is present in an amount ranging from 50 percent to 95 percent of the total weight of the activator system. In some embodiments of the present disclosure, the at least one solvent is present in an amount ranging from 0 percent to 10 percent of the total weight of the activator system.

In some embodiments of the present disclosure, the at least one solvent is present at 0 percent of the total weight of the activator system. In some embodiments of the present disclosure, the at least one solvent is present at 20 percent of the total weight of the activator system. In some embodiments of the present disclosure, the at least one solvent is present at 40 percent of the total weight of the activator system. In some embodiments of the present disclosure, the at least one solvent is present at 60 percent of the total weight of the activator system. In some embodiments of the present disclosure, the at least one solvent is present at 95 percent of the total weight of the activator system.

### Non-limiting Example 1

The experiments in Table I illustrate the effect of changing catalyst ratios on the light output of a low temperature formulated oxalate ester. The Oxalate A was made from a mixture of 14% bis(2,4,5-trichloro-6-carbopentoxyphenyl)oxalate (CPPO) and 0.31% rubrene in a solvent made from 50% butyl benzoate and 50% diethyl diethyl malonate. Activator A was composed of 0.1% sodium salicylate and 0.05% tribenzyl amine with 10% of a 50% aqueous hydrogen peroxide solution in a solvent mixture of 80% triethyl citrate and 20% methyl 2-hydroxyisobutyrate. Activator B was composed of 0.05% sodium salicylate and 0.05% tribenzyl amine with 10% of a 50% aqueous hydrogen peroxide solution in a solvent mixture of 80% triethyl citrate and 20% methyl 2-hydroxyisobutyrate. Activator C was composed of 0.005% sodium salicylate and 0.05% tribenzyl amine with 10% of a 50% aqueous hydrogen peroxide solution in a solvent mixture of 80% triethyl citrate and 20% methyl 2-hydroxyisobutyrate. The tests were conducted measuring the light output with an ILT 1700 light meter. The reaction vessel was placed into the high speed mixer, then 1.8 g of the oxalate ester was added and the mixer was turned on and 4.0 g of the activator solution added. The results are shown in Table I.

**Table I**

| [Adjustment of light output profile with multiple catalyst ratio.] | | | | |
|---|---|---|---|---|
| **Seconds** | | **Activator A (lux)** | **Activator B (lux)** | **Activator C (lux)** |
| **1.0** | | 178 | 178 | 177 |
| **1.5** | | 18390 | 18140 | 8127 |
| **2** | | 11055 | 13660 | 7763 |
| **2.5** | | 7850 | 10430 | 7393 |
| **3** | | 5635 | 8130 | 7043 |
| **3.5** | | 4080 | 6400 | 6703 |
| **4** | | 2975 | 5075 | 6387 |
| **4.5** | | 2197 | 4050 | 6093 |
| **5** | | 1636 | 3270 | 5800 |
| **5.5** | | 1235 | 2655 | 5557 |
| **6** | | 945 | 2170 | 5333 |
| **6.5** | | 730 | 1790 | 5087 |
| **7** | | 570 | 1487 | 4883 |
| **7.5** | | 450 | 1240 | 4703 |
| **8** | | 357 | 1039 | 4513 |
| **8.5** | | 286 | 875 | 4323 |
| **9** | | 230 | 739 | 4167 |
| **9.5** | | 188 | 629 | 4007 |
| **10** | | 155 | 536 | 3860 |
| **10.5** | | 128 | 460 | 3713 |
| **11** | | 108 | 395 | 3583 |
| **11.5** | | 91 | 343 | 3463 |
| **12** | | 77 | 298 | 3337 |
| **12.5** | | 66 | 259 | 3223 |
| **13** | | 57 | 228 | 3117 |
| **13.5** | | 49 | 200 | 3007 |
| **14** | | 43 | 177 | 2917 |
| **14.5** | | 38 | 156 | 2823 |
| **15** | | 33 | 139 | 2740 |

### Non-Limiting Example 2

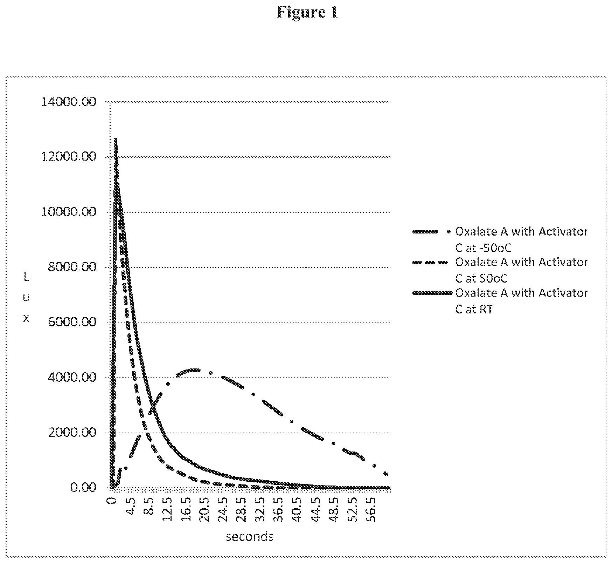

A reaction vessel was placed in a high speed mixer and 200 mg of sodium thiosulfate was added to the cup. Oxalate A was reacted with Activator C at three different temperatures in the same fashion with both solutions maintained at the indicated temperature for at least 1 hour before combining and reacted as described in Example 1. The results are shown in Figure 1. Figure 1 represents the chemical light output of Oxalate A and Activator C at room temperature, 50 degrees C, and -50 degrees C.

In some embodiments of the present disclosure, the present disclosure is a chemiluminescent system, including: an oxalate system, including: (a) at least one oxalate ester in an amount ranging from 3 to 60 percent by weight based on a total weight of the oxalate system, (b) at least one first solvent selected from the group consisting of: alkyl benzoates, dialkyl phthalates, trialkyl acetylcitrates, 2-acetyloxy isobutyrates, paraffinic liquids, isoparaffinic liquids, toluene, nitroethane, and a combination thereof, where the at least one first solvent is present in an amount ranging from 10 to 97 percent by weight based on the total weight of the oxalate system; (c) at least one second solvent selected from the group consisting of: dialkyl malonates, dialkyl dialkylmalonates, dialkyl arylalkylmalonates, dialkyl succinates, dialkyl glutarates, dialkyl adipates, dialkyl pimelates, dialkyl polyalkylmalonates and a combination thereof, where the at least one second solvent is present in an amount ranging from 5 to 85 percent by weight based on the total weight of the oxalate system; (d) at least one fluorescer, and (e) at least one inorganic salt, in an amount ranging from 0.1 to 30 percent by weight based on the total weight of the oxalate system, and an activator system, including: (a) at least one peroxide, (b) at least one third solvent selected from the group consisting of: tert-butanol, 3-methyl-3-pentanol, 2- methyl-2-butanol, ethyl 2-hydroxyisobutyrate, methyl 2- hydroxyisobutyrate, ethylene glycol, propylene glycol, ethylene glycol monomethyl ether, ethylene glycol diethyl ether, ethylene glycol monobutyl ether, ethylene glycol dibutyl ether, and propylene glycol dimethyl ether, and a combination thereof; where the at least one third solvent is present in an amount ranging from 5 to 85 percent by weight based on the total weight of the activator system, (c) at least one fourth solvent selected from the group consisting of: trialkyl citrates, dialkyl phthalates, and a combination thereof; where the at least one fourth solvent is present in an amount ranging from 15 to 95 percent by weight based on a total weight of the activator system, and (d) at least one catalyst, and where the chemiluminescent system, at a temperature ranging from -110 degrees Celsius to 75 degrees Celsius, is configured to produce a light having an illuminescence.

In some embodiments of the present disclosure, the at least one oxalate ester is represented by formula (I): 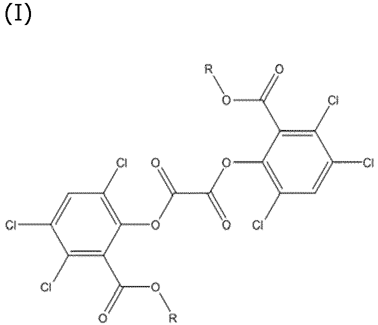 where R=CH2A, and A is selected from the group consisting of an alkyl chain, alkyl ring, an aromatic ring, and a combination thereof, where R is linear or branched, and where R is from C4-15.

In some embodiments of the present disclosure, the at least one oxalate ester is selected from the group consisting of: bis{3,4,6-trichloro-2-[(2-methylpropoxy)carbonyl]phenyl}oxalate, bis{3,4,6-trichloro-2-[(cyclopropylmethoxy)carbonyl]phenyl}oxalate, bis{3,4,6-trichloro-2-[(2-methylbutoxy)carbonyl]phenyl}oxalate, bis{3,4,6-trichloro-2-[(3-methylbutoxy)carbonyl]phenyl}oxalate, bis{3,4,6-trichloro-2-[(2,2-dimethylpropoxy)carbonyl]phenyl}oxalate, bis{3,4,6-trichloro-2-[(2-methylpentyloxy)carbonyl]phenyl}oxalate, bis{3,4,6-trichloro-2-[(3-methylpentyloxy)carbonyl]phenyl}oxalate, bis{3,4,6-trichloro-2-[(4-methylpentyloxy)carbonyl]phenyl}oxalate, bis{3,4,6-trichloro-2-[(3,3-dimethylbutoxy)carbonyl]phenyl}oxalate, bis{3,4,6-trichloro-2-[(2-ethylbutoxy)carbonyl]phenyl}oxalate, bis{3,4,6-trichloro-2-[(cyclopentylmethoxy)carbonyl]phenyl}oxalate, bis{3,4,6-trichloro-2-[(2-methylhexyloxy)carbonyl]phenyl}oxalate, bis{3,4,6-trichloro-2-[(3-methylhexyloxy)carbonyl]phenyl}oxalate, bis{3,4,6-trichloro-2-[(4-methylhexyloxy)carbonyl]phenyl}oxalate, bis{3,4,6-trichloro-2-[(5-methylhexyloxy)carbonyl]phenyl}oxalate, bis{3,4,6-trichloro-2-[(cyclohexylmethoxy)carbonyl]phenyl}oxalate, bis{3,4,6-trichloro-2-[(phenylmethoxy)carbonyl]phenyl}oxalate, bis{3,4,6-trichloro-2-[(2-phenylethoxy)carbonyl]phenyl}oxalate, bis(3,4,6-trichloro-2-{[(2-methylphenyl)methoxy]carbonyl}phenyl)oxalate, bis(3,4,6-trichloro-2-{[(3-methylphenyl)methoxy]carbonyl}phenyl)oxalate, bis(3,4,6-trichloro-2-{[(4-methylphenyl)methoxy]carbonyl}phenyl)oxalate, bis(3,4,6-trichloro-2-{[(2,3-dimethylphenyl)methoxy]carbonyl}phenyl)oxalate, bis(3,4,6-trichloro-2-{[(2,4-dimethylphenyl)methoxy]carbonyl}phenyl)oxalate, bis(3 ,4,6-trichloro-2-{[3,4-dimethylphenyl)methoxy]carbonyl}phenyl)oxalate, bis(3,4,6-trichloro-2-{[(3,5-dimethylphenyl)methoxy]carbonyl}phenyl)oxalate, bis(3,4,6-trichloro-2-{[(2,6-dimethylphenyl)methoxy]carbonyl}phenyl)oxalate, bis(3,4,6-trichloro-2-{[(2-ethylphenyl)methoxy]carbonyl}phenyl)oxalate, bis(3,4,6- trichloro-2-{[(3-ethylphenyl)methoxy]carbonyl}phenyl)oxalate, bis(3,4,6-trichloro-2-{[(4-ethylphenyl)methoxy]carbonyl}phenyl)oxalate, bis(3,4,6-trichloro-2-{[2-(2-methylphenyl)ethoxy]carbonyl}phenyl)oxalate, bis(3,4,6-trichloro-2-{[2-(3-methylphenyl)ethoxy]carbonyl}phenyl)oxalate, bis(3,4,6-trichloro-2-{[2-(4-methylphenyl)ethoxy]carbonyl}phenyl)oxalate, bis{3,4,6-trichloro-2-[(2-phenylpropoxy)carbonyl]phenyl}oxalate, bis{3,4,6-trichloro-2-[(3-phenylpropoxy)carbonyl]phenyl}oxalate, bis{3,4,6-trichloro-2-[1-naphthalenylmethoxy)carbonyl]phenyl}oxalate, bis{3,4,6-trichloro-2-[2-naphthalenylmethoxy)carbonyl]phenyl}oxalate, bis{3,4,6-trichloro-2-[(2,2-diphenylethoxy)carbonyl]phenyl}oxalate, bis{3,4,6-trichloro-2-[(9-fluorenylmethoxy)carbonyl]phenyl}oxalate, and bis{3,4,6-trichloro-2-[(9-anthracenylmethoxy)carbonyl]phenyl}oxalate.

In some embodiments of the present disclosure, the at least one fluorescer is present in an amount ranging from 0.05 to 0.9 percent by weight based on the total weight of the chemiluminescent system.

In some embodiments of the present disclosure, the at least one inorganic salt is selected from the group consisting of sodium thiosulphate, potassium thiosulphate, cobalt acetate, copper acetate, lead acetate, cupric chloride, ferric chloride, calcium iodide, potassium iodide, silver nitrate, and a combination thereof.

In some embodiments of the present disclosure, the at least one peroxide is selected from the group consisting of hydrogen peroxide, sodium peroxide, sodium perborate, sodium pyrophosphate peroxide, urea peroxide, histidine peroxide, t-butylhydroperoxide, peroxynehzoic acid, sodium percarbonate, and a combination thereof.

In some embodiments of the present disclosure, the at least one peroxide is present in an amount ranging from 0.25 to 25 percent by weight based on the total weight of the chemiluminescent system.

In some embodiments of the present disclosure, the at least one catalyst is selected from the group consisting of: dimethylbenzylamine, N,N-dimethyl-1-phenylethylamine, N-ethyl-N-methylbenzylamine, diethylbenzylamine, N-methyl-N-propylbenzylamine, N,N-dibutylbenzylamine, N,N-bis(1-methylethyl)benzenemethanamine, methyl dibenzylamine, ethyl dibenzylamine, n-propyl dibenzylamine, iso-propyl dibenzylamine, butyl dibenzylamine, iso-butyl dibenzylamine, N,N-dibenzyl-2-phenylethanamine, hexyl dibenzylamine, tribenzyl amine, 4-methyl-N,N-bis[(4-methylphenyl)methyl]benzenemethanamine, 4-methyl-N,N-bis(phenylmethyl)benzenemethanamine, N-methyl-N-phenylbenzenemethanamine, N-ethyl-N-phenylbenzenemethanamine, N,4-dimethyl-N-phenylbenzenemethanamine, N-propyl-N-phenylbenzenemethanamine, N, N-diphenylbenzenemethanamine, N,N-bis(4-methylphenyl)benzenemethanamine, lithium benzoate, sodium benzoate, potassium benzoate, cesium benzoate, lithium salicylate, sodium salicylate, potassium salicylate, cesium salicylate, lithium o-anisate, sodium o-anisate, potassium o-anisate, cesium o-anisate, lithium p-anisate, sodium p-anisate, potassium p-anisate, and/or cesium p-anisate.

In some embodiments of the present disclosure, the at least one catalyst is present in an amount ranging from 5 to 0.0005 percent by weight based on the total weight of the chemiluminescent system.

### Low Temperature Activator Systems and Methods for Chemiluminescent Reactions

"Activation" and variations thereof, as used herein, means that the activation system of the present disclosure and a suitable oxalate system comprised of an oxalate solution containing one or more suitable oxalate esters with one or more dyes in a suitable solvent with or without other components known to one skilled in the art have been sufficiently combined such as by mixing to provide useable light in a short period such as less than a minute at low temperatures such as down -110 degrees C.

In some embodiments of the present disclosure, the present disclosure relates to an activator system for a chemiluminescent reaction for production of useable light in a short period such as less than a minute at low temperatures down to - 110 degrees C. In some embodiments of the present disclosure, the activator system can be used in military and non-military training, emergency, and situations where potential ignition sources are hazardous when combined with a suitable oxalate system.

Tracers are employed that allow an observer to visually trace a projectile's trajectory, such as after the firing of munitions in training or combat situations. Winter and high altitude conditions can greatly diminish the effectiveness of current chemiluminescent markers.

In some embodiments of the present disclosure, the present disclosure is an activator system for a chemiluminescent system, where the activator system includes at least one peroxide, at least one catalyst, at least one first solvent, and at least one second solvent configured to allow sufficient mixing of the at least one peroxide, and where, when the activator system is mixed with an oxalate system for the chemiluminescent system, the chemiluminescent system is configured to provide light at a temperature of -110 degrees C.

In some embodiments of the present disclosure, the at least one peroxide is selected from the group consisting of hydrogen peroxide; sodium peroxide; sodium perborate; sodium pyrophosphate peroxide; urea peroxide; histidine peroxide; t-butylhydroperoxide; peroxybenzoic acid, and sodium percarbonate.

In some embodiments of the present disclosure, the at least one peroxide is present in an amount ranging from 0.25 percent to 25 percent by weight, based on the total weight of the combined activator system and oxalate system.

In some embodiments of the present disclosure, the at least one first solvent is selected from the group consisting of trialkyl citrates, dialkyl phthalates, glycols, and glycol ethers.

In some embodiments of the present disclosure, the at least one catalyst is selected from the group consisting of dimethylbenzylamine, N,N-dimethyl-1-phenylethylamine, N-ethyl-N-methylbenzylamine, diethylbenzylamine, N-methyl-N-propylbenzylamine, N,N-dibutylbenzylamine, N,N-bis(1-methylethyl)benzenemethanamine, methyl dibenzylamine, ethyl dibenzylamine, n-propyl dibenzylamine, iso-propyl dibenzylamine, butyl dibenzylamine, iso-butyl dibenzylamine, N,N-dibenzyl-2-phenylethanamine, hexyl dibenzylamine, tribenzyl amine, 4-methyl-N,N-bis[(4-methylphenyl)methyl]benzenemethanamine, 4-methyl-N,N-bis(phenylmethyl)benzenemethanamine, N-methyl-N-phenylbenzenemethanamine, N-ethyl-N-phenylbenzenemethanamine, N,4-dimethyl-N-phenylbenzenemethanamine, N-propyl-N-phenylbenzenemethanamine, N, N-diphenylbenzenemethanamine, N,N-bis(4-methylphenyl)benzenemethanamine, lithium benzoate, sodium benzoate, potassium benzoate, cesium benzoate, lithium salicylate, sodium salicylate, potassium salicylate, cesium salicylate, lithium o-anisate, sodium o-anisate, potassium o-anisate, cesium o-anisate, lithium p-anisate, sodium p-anisate, potassium p-anisate, and cesium p-anisate.

In some embodiments of the present disclosure, the at least one catalyst is present in a concentration ranging from 5 percent to 0.0005 percent of the total weight of the combined activator system and oxalate system.

In some embodiments of the present disclosure, the activator system includes a second solvent configured to dissolve the at least one catalyst and allow mixing of the at least one peroxide, wherein the second solvent is selected from the group consisting of aliphatic tertiary alcohols, chosen from, but not restricted to, tert-butanol, 3-methyl-3-pentanol, 2-methyl-2-butanol, ethyl 2-hydroxyisobutyrate, alkyl 2-hydroxyisobutyrates, and methyl 2-hydroxyisobutyrate; glycols; ethylene glycol and propylene glycol; glycol ethers; ethylene glycol monomethyl ether, ethylene glycol diethyl ether, ethylene glycol monobutyl ether, ethylene glycol dibutyl ether, and propylene glycol dimethyl ether.

In some embodiments of the present disclosure, the at least second solvent is present in a concentration ranging from 0 percent to 90 percent of the total weigh to activator system.

In some embodiments of the present disclosure, the activator system, when combined with a suitable oxalate system, provides a chemiluminescent activator system that performs at low temperatures to provide usable light.

In some embodiments of the present disclosure, the activator system, when combined with a suitable oxalate system, emits light. In some embodiments of the present disclosure, the activator system includes at least one peroxide, at least one catalyst, at least one bridging solvent (i.e., "second solvent") to assist with the solubility of the peroxide component if necessary, and at least one solvent that has a sufficiently low melting point and is compatible with the chemical reactions required to produce chemiluminesence.

In some embodiments of the present disclosure, the activator system of the present disclosure produces useable light at low temperatures when activated.

In some embodiments of the present disclosure, the oxalate system may include, but is not limited to, at least one oxalate ester, at least one dye such as a fluorescer, at least one inorganic salt, wherein the at least one inorganic salt is chosen from sodium thiosulphate, potassium thiosulphate, cobalt acetate, copper acetate, lead acetate, cupric chloride, ferric chloride, calcium iodide, potassium iodide, and silver nitrate, and at least one low boiling solvent chosen from, but not restricted to, alkyl benzoates, dialkyl malonates, dialkyl dialkylmalonates, dialkyl arylalkylmalonates, dialkyl succinates, dialkyl glutarates, dialkyl adipates, dialkyl pimelates, dialkyl polyalkylmalonates, acetyl trialkyl citrates, 2-acetyloxy isobutyrates, paraffinic liquids, isoparaffinic liquids, toluene, nitroethane, or a mixture of any of the above.

In some embodiments of the present disclosure, the ratio of the weight of the oxalate system to the weight of the activator system ranges from 1:9 to 4:1. In some embodiments of the present disclosure, the ratio of the weight of the oxalate system to the weight of the activator system ranges from 1:5 to 2:1. In some embodiments of the present disclosure, the ratio of the weight of the oxalate system to the weight of the activator system ranges from 1:1 to 3:1. In some embodiments of the present disclosure, the ratio of the weight of the oxalate system to the weight of the activator system ranges from 1:3 to 3:1. In some embodiments of the present disclosure, the ratio of the weight of the oxalate system to the weight of the activator system ranges from 1:2 to 2:1. In some embodiments of the present disclosure, the ratio of the weight of the oxalate system to the weight of the activator system ranges from 2:1 to 4:1. In some embodiments of the present disclosure, the ratio of the weight of the oxalate system to the weight of the activator system ranges from 1:6 to 2:1. In some embodiments of the present disclosure, the ratio of the weight of the oxalate system to the weight of the activator system ranges from 1:1 to 4:1.

In some embodiments of the present disclosure, the ratio of the weight of the oxalate system to the weight of the activator system is 1:2. In some embodiments of the present disclosure, the ratio of the weight of the oxalate system to the weight of the activator system is 2:1. In some embodiments of the present disclosure, the ratio of the weight of the oxalate system to the weight of the activator system is 3:1. In some embodiments of the present disclosure, the ratio of the weight of the oxalate system to the weight of the activator system is 1:8. In some embodiments of the present disclosure, the ratio of the weight of the oxalate system to the weight of the activator system is 8:2. In some embodiments of the present disclosure, the ratio of the weight of the oxalate system to the weight of the activator system is 4:1. In some embodiments of the present disclosure, the ratio of the weight of the oxalate system to the weight of the activator system is 1:9. In some embodiments of the present disclosure, the ratio of the weight of the oxalate system to the weight of the activator system is 1:5. In some embodiments of the present disclosure, the ratio of the weight of the oxalate system to the weight of the activator system is 1:3.

In some embodiments of the present disclosure, the system, when activated, is configured to produce useable light in a temperature range of -110oC to 75oC. In some embodiments of the present disclosure, the system of the present disclosure, when activated, is configured to produce useable light in a temperature range of -80oC to 50oC. In some embodiments of the present disclosure, the system of the present disclosure, when activated, is configured to produce useable light in a temperature range of -110oC to 50oC. In some embodiments of the present disclosure, the system of the present disclosure, when activated, is configured to produce useable light in a temperature range of -80oC to 75oC. In some embodiments of the present disclosure, the system of the present disclosure, when activated, is configured to produce useable light in a temperature range of -30oC to 30oC. In some embodiments of the present disclosure, the system of the present disclosure, when activated, is configured to produce useable light in a temperature range of -100oC to 0oC. In some embodiments of the present disclosure, the system of the present disclosure, when activated, is configured to produce useable light in a temperature range of -20oC to 75oC. In some embodiments of the present disclosure, the system of the present disclosure, when activated, is configured to produce useable light in a temperature down to -110oC. In some embodiments of the present disclosure, the system of the present disclosure, when activated, is configured to produce useable light in a temperature range of -60oC to 20oC. In some embodiments of the present disclosure, the system of the present disclosure, when activated, is configured to produce useable light in a temperature range of -110oC to -10oC.

In some embodiments of the present disclosure, the system of the present disclosure, when activated, is configured to produce useable light for a duration of 1 second to 3 minutes. In some embodiments of the present disclosure, the system of the present disclosure, when activated, is configured to produce useable light for a duration of 10 seconds to 3 minutes. In some embodiments of the present disclosure, the system of the present disclosure, when activated, is configured to produce useable light for a duration of 1 second to 2 minutes. In some embodiments of the present disclosure, the system of the present disclosure, when activated, is configured to produce useable light for a duration of 30 seconds to 1 minute. In some embodiments of the present disclosure, the system of the present disclosure, when activated, is configured to produce useable light for a duration of 20 seconds to 2 minute. In some embodiments of the present disclosure, the system of the present disclosure, when activated, is configured to produce useable light for a duration of 2 minutes to 3 minutes. In some embodiments of the present disclosure, the system of the present disclosure, when activated, is configured to produce useable light for a duration of 1 minute to 2 minutes.

In some embodiments of the present disclosure, the system of the present disclosure, when activated, is configured to produce useable light for a duration of 10 seconds. In some embodiments of the present disclosure, the system of the present disclosure, when activated, is configured to produce useable light for a duration of 1 minute. In some embodiments of the present disclosure, the system of the present disclosure, when activated, is configured to produce useable light for a duration of 30 seconds. In some embodiments of the present disclosure, the system of the present disclosure, when activated, is configured to produce useable light for a duration of 2 minutes. In some embodiments of the present disclosure, the system of the present disclosure, when activated, is configured to produce useable light for a duration of 15 seconds. In some embodiments of the present disclosure, the system of the present disclosure, when activated, is configured to produce useable light for a duration of 1.5 minutes. In some embodiments of the present disclosure, the system of the present disclosure, when activated, is configured to produce useable light for a duration of 45 seconds.

In some embodiments of the present disclosure, the activator system for a chemiluminescent reaction system is comprised of at least one peroxide, at least one catalyst, at least one low melting point solvent and at least one bridging solvent, if required, to allow sufficient mixing of the peroxide component.

In some embodiments the at least one peroxide may include, but is not limited to, hydrogen peroxide; sodium peroxide; sodium perborate; sodium pyrophosphate peroxide; urea peroxide; histidine peroxide; t-butylhydroperoxide; peroxybenzoic acid, and/or sodium percarbonate.

In some embodiments of the present disclosure, the at least one peroxide is present in an amount ranging from 0.25 percent to 25 percent by weight, based on the total weight of the combined activator system and oxalate system. In some embodiments of the present disclosure, the at least one peroxide is present in an amount ranging from 5 percent to 25 percent by weight, based on the total weight of the combined activator system and oxalate system. In some embodiments of the present disclosure, the at least one peroxide is present in an amount ranging from 1 percent to 20 percent by weight, based on the total weight of the combined activator system and oxalate system. In some embodiments of the present disclosure, the at least one peroxide is present in an amount ranging from 10 percent to 15 percent by weight, based on the total weight of the combined activator system and oxalate system. In some embodiments of the present disclosure, the at least one peroxide is present in an amount ranging from 0.25 percent to 5 percent by weight, based on the total weight of the combined activator system and oxalate system.

In some embodiments of the present disclosure, the at least one peroxide is present at 0.25 percent by weight, based on the total weight of the combined activator system and oxalate system. In some embodiments of the present disclosure, the at least one peroxide is present at 1 percent by weight, based on the total weight of the combined activator system and oxalate system. In some embodiments of the present disclosure, the at least one peroxide is present at 5 percent by weight, based on the total weight of the combined activator system and oxalate system. In some embodiments of the present disclosure, the at least one peroxide is present at 10 percent by weight, based on the total weight of the combined activator system and oxalate system. In some embodiments of the present disclosure, the at least one peroxide is present at 20 percent by weight, based on the total weight of the combined activator system and oxalate system. In some embodiments of the present disclosure, the at least one peroxide is present at 25 percent by weight, based on the total weight of the combined activator system and oxalate system.

In some embodiments of the present disclosure, the at least one peroxide is present at the weight percents and the weight percent ranges detailed above, based on the weight of the activator system.

In some embodiments of the present disclosure, the at least one low melting point solvent (i.e., "first solvent") may include, but is not limited to, trialkyl citrates, dialkyl phthalates, glycols, glycol ethers and any combination thereof.

In some embodiments of the present disclosure, the at least one first solvent is present in an amount ranging from 0 percent to 95 percent of the total weight of the activator system. In some embodiments of the present disclosure, the at least one first solvent is present in an amount ranging from 10 percent to 97 percent of the total weight of the activator system. In some embodiments of the present disclosure, the at least one first solvent is present in an amount ranging from 10 percent to 80 percent of the total weight of the activator system. In some embodiments of the present disclosure, the at least one first solvent is present in an amount ranging from 10 percent to 60 percent of the total weight of the activator system. In some embodiments of the present disclosure, the at least one first solvent is present in an amount ranging from 30 percent to 90 percent of the total weight of the activator system. In some embodiments of the present disclosure, the at least one first solvent is present in an amount ranging from 15 percent to 90 percent of the total weight of the activator system. In some embodiments of the present disclosure, the at least one first solvent is present in an amount ranging from 50 percent to 95 percent of the total weight of the activator system. In some embodiments of the present disclosure, the at least one first solvent is present in an amount ranging from 0 percent to 10 percent of the total weight of the activator system.

In some embodiments of the present disclosure, the at least one first solvent is present at 0 percent of the total weight of the activator system. In some embodiments of the present disclosure, the at least one first solvent is present at 20 percent of the total weight of the activator system. In some embodiments of the present disclosure, the at least one first solvent is present at 40 percent of the total weight of the activator system. In some embodiments of the present disclosure, the at least one first solvent is present at 60 percent of the total weight of the activator system. In some embodiments of the present disclosure, the at least one first solvent is present at 95 percent of the total weight of the activator system. In some embodiments of the present disclosure, the at least one first solvent is present at 97 percent of the total weight of the activator system.

In some embodiments of the present disclosure, the at least one catalyst may include, but is not limited to, dimethylbenzylamine, N,N-dimethyl-1-phenylethylamine, N-ethyl-N-methylbenzylamine, diethylbenzylamine, N-methyl-N-propylbenzylamine, N,N-dibutylbenzylamine, N,N-bis(1-methylethyl)benzenemethanamine, methyl dibenzylamine, ethyl dibenzylamine, n-propyl dibenzylamine, iso-propyl dibenzylamine, butyl dibenzylamine, iso-butyl dibenzylamine, N,N-dibenzyl-2-phenylethanamine, hexyl dibenzylamine, tribenzyl amine, 4-methyl-N,N-bis[(4-methylphenyl)methyl]benzenemethanamine, 4-methyl-N,N-bis(phenylmethyl)benzenemethanamine, N-methyl-N-phenylbenzenemethanamine, N-ethyl-N-phenylbenzenemethanamine, N,4-dimethyl-N-phenylbenzenemethanamine, N-propyl-N-phenylbenzenemethanamine, N, N-diphenylbenzenemethanamine, N,N-bis(4-methylphenyl)benzenemethanamine, lithium benzoate, sodium benzoate, potassium benzoate, cesium benzoate, lithium salicylate, sodium salicylate, potassium salicylate, cesium salicylate, lithium o-anisate, sodium o-anisate, potassium o-anisate, cesium o-anisate, lithium p-anisate, sodium p-anisate, potassium p-anisate, and/or cesium p-anisate.

In some embodiments of the present disclosure, the at least one catalyst is present at a concentration ranging from 5% to 0.0005% by weight, based on the total weight of the combined activator system and oxalate system. In some embodiments of the present disclosure, the at least one catalyst is present at a concentration ranging from 2% to 0.1% by weight, based on the total weight of the combined activator system and oxalate system. In some embodiments of the present disclosure, the at least one catalyst is present at a concentration ranging from 1% to 0.0005% by weight, based on the total weight of the combined activator system and oxalate system. In some embodiments of the present disclosure, the at least one catalyst is present at a concentration ranging from 5% to 2% by weight, based on the total weight of the combined activator system and oxalate system. In some embodiments of the present disclosure, the at least one catalyst is present at a concentration ranging from 0.7% to 0.0005% by weight, based on the total weight of the combined activator system and oxalate system. In some embodiments of the present disclosure, the at least one catalyst is present at a concentration ranging from 0.5% to 0.05% by weight, based on the total weight of the combined activator system and oxalate system. In some embodiments of the present disclosure, the at least one catalyst is present at a concentration ranging from 5% to 3% by weight, based on the total weight of the combined activator system and oxalate system.

In some embodiments of the present disclosure, the at least one catalyst is present at 5% by weight, based on the total weight of the combined activator system and oxalate system. In some embodiments of the present disclosure, the at least one catalyst is present at 0.5% by weight, based on the total weight of the combined activator system and oxalate system. In some embodiments of the present disclosure, the at least one catalyst is present at 0.05% by weight, based on the total weight of the combined activator system and oxalate system. In some embodiments of the present disclosure, the at least one catalyst is present at 0.005% by weight, based on the total weight of the combined activator system and oxalate system. In some embodiments of the present disclosure, the at least one catalyst is present at 0.0005% by weight, based on the total weight of the combined activator system and oxalate system. In some embodiments of the present disclosure, the at least one catalyst is present at 2% by weight, based on the total weight of the combined activator system and oxalate system. In some embodiments of the present disclosure, the at least one catalyst is present at 3% by weight, based on the total weight of the combined activator system and oxalate system.

In some embodiments of the present disclosure, the at least one catalyst is present at the weight percents and the weight percent ranges detailed above, based on the weight of the activator system.

In some embodiments of the present disclosure, the at least one catalyst is dissolved in a suitable solvent wherein the at least one bridging solvent (i.e., second solvent), if necessary to allow sufficient mixing of the peroxide component may include, but is not limited to, tert-butanol, 3-methyl-3-pentanol, 2-methyl-2-butanol, ethyl 2-hydroxyisobutyrate, alkyl 2-hydroxyisobutyrates and methyl 2-hydroxyisobutyrate; glycols chosen from, but not restricted to ethylene glycol and propylene glycol; and glycol ethers chosen from, but not restricted to ethylene glycol monomethyl ether, ethylene glycol diethyl ether, ethylene glycol monobutyl ether, ethylene glycol dibutyl ether, propylene glycol dimethyl ether and any combination thereof. In some embodiments of the present disclosure, the at least one second solvent is present in an amount ranging from 0 percent to 95 percent of the total weight of the activator system. In some embodiments of the present disclosure, the at least one second solvent is present in an amount ranging from 10 percent to 97 percent of the total weight of the activator system. In some embodiments of the present disclosure, the at least one second solvent is present in an amount ranging from 10 percent to 80 percent of the total weight of the activator system. In some embodiments of the present disclosure, the at least one second solvent is present in an amount ranging from 10 percent to 60 percent of the total weight of the activator system. In some embodiments of the present disclosure, the at least one second solvent is present in an amount ranging from 30 percent to 90 percent of the total weight of the activator system. In some embodiments of the present disclosure, the at least one second solvent is present in an amount ranging from 15 percent to 90 percent of the total weight of the activator system. In some embodiments of the present disclosure, the at least one second solvent is present in an amount ranging from 50 percent to 95 percent of the total weight of the activator system. In some embodiments of the present disclosure, the at least one second solvent is present in an amount ranging from 0 percent to 10 percent of the total weight of the activator system.

In some embodiments of the present disclosure, the at least one second solvent is present at 0 percent of the total weight of the activator system. In some embodiments of the present disclosure, the at least one second solvent is present at 20 percent of the total weight of the activator system. In some embodiments of the present disclosure, the at least one second solvent is present at 40 percent of the total weight of the activator system. In some embodiments of the present disclosure, the at least one second solvent is present at 60 percent of the total weight of the activator system. In some embodiments of the present disclosure, the at least one second solvent is present at 95 percent of the total weight of the activator system. In some embodiments of the present disclosure, the at least one second solvent is present at 97 percent of the total weight of the activator system.

### Non-limiting Example 1

The experiments in Table I indicate that the ratio of the solvents, in this case triethylcitrate (TEC) or tributyl citrate (TBC) and an auxiliary solvent comprising either diethylene glycol diethyl ether (DEGDE) or methyl 2-hydroxybutyrate (MHB), used may be adjusted based, at least in part, on the desired operating temperature. The viscosities were measured using a Brookfield viscometer and the temperature of the solution recorded digitally during the experiment.

**Table I**

| Activator Formula | TEC (g) | TBC (g) | DEDGE (g) | MH B (g) | 50% aq. Hydrogen Peroxide (g) | Sodium Salicylate (g) | Temp (°C) | Viscosity (cP) |
|---|---|---|---|---|---|---|---|---|
| A | 199.5 | | 250 | | 50 | 0.5 | -31 | 210 |
| | 199.5 | | 250 | | 50 | 0.5 | -64 | 123,300 |
| B | 149.5 | | | 300 | 50 | 0.5 | -31 | 654 |
| | 149.5 | | | 300 | 50 | 0.5 | -60 | 127,300 |
| C | | 149.5 | 300 | | 50 | 0.5 | -31 | 180 |
| | | 149.5 | 300 | | 50 | 0.5 | -63 | 21,320 |

### Non-limiting Example 2

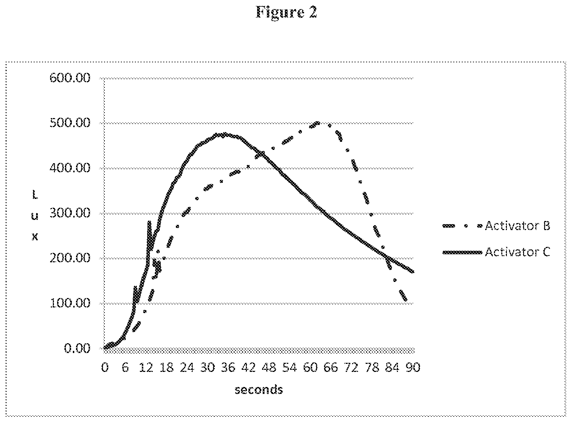

The light output for a variety of activators at low temperatures was measured by reacting the different formulations with an oxalate made from 14% bis(2,4,5-trichloro-6-carbopentoxyphenyl)oxalate (CPPO) and 0.3% rubrene in a solvent comprised of 50% bis(2-methylethyl) malonate and 50% butyl benzoate. The activator solution (1.0 g each) and oxalate solution (0.8 g with 0.1 g of sodium thiosulfate) were sealed in glass ampoules. The sealed ampoules were cooled to - 86 degrees C in a freezer for a minimum of 2 hours. At that point, 2 oxalate and four activator ampoules were placed in the in an ampoule crushing device with a light meter for each test. The tests were conducted measuring the light output with an ILT 1700 light meter. The readings were started within one minute or less after removal from the freezer. The results are shown in Figure 2. Figure 2 represents the chemical light output of activator formulas B & C at -86 degrees C.

In some embodiments of the present disclosure, the present disclosure provides a chemiluminescent system, including: an activator system, including: (a) at least one first solvent, where the at least one first solvent is selected from the group consisting of: trialkyl citrates, dialkyl phthalates, glycols, glycol ethers, and a combination thereof, (b) at least one peroxide, (c) at least one catalyst, (d) at least one second solvent, where the at least one second solvent is selected from the group consisting of: tert-butanol, 3-methyl-3-pentanol, 2-methyl-2-butanol, ethyl 2-hydroxyisobutyrate, methyl 2-hydroxyisobutyrate, ethylene glycol, propylene glycol, ethylene glycol monomethyl ether, ethylene glycol diethyl ether, ethylene glycol monobutyl ether, ethylene glycol dibutyl ether, propylene glycol dimethyl ether, and a combination thereof; where the at least one first solvent is present in a first amount ranging from 15 and 95 percent by weight based on a total weight of the activator system; where the at least one second solvent is present in a second amount ranging from 5 and 85 percent by weight based on the total weight of the activator system; and where a combination of the at least one first solvent and the at least one second solvent is present in a sufficient amount in the chemiluminescent system so as to result in the chemiluminescent system, at a temperature ranging from -110 degrees Celsius to 75 degrees Celsius, producing a light having an illuminescence between 0.1 Ix and 35,000 Ix.

In some embodiments of the present disclosure, the at least one peroxide is present in an amount ranging from 0.25 to 25 percent by weight based on the total weight of the chemiluminescent system.

In some embodiments of the present disclosure, the at least one peroxide is selected from the group consisting of: hydrogen peroxide, sodium peroxide, sodium perborate, sodium pyrophosphate peroxide, urea peroxide, histidine peroxide, t-butylhydroperoxide, peroxynehzoic acid, and sodium percarbonate.

In some embodiments of the present disclosure, the at least one catalyst is present in a fourth amount ranging from 5 to 0.0005 percent by weight based on the total weight of the chemiluminescent system.

In some embodiments of the present disclosure, the chemiluminescent system of claim 1, the at least one catalyst is selected from the group consisting of: dimethylbenzylamine, N,N-dimethyl-1-phenylethylamine, N-ethyl-N-methylbenzylamine, diethylbenzylamine, N-methyl-N-propylbenzylamine, N,N-dibutylbenzylamine, N,N-bis(1-methylethyl)benzenemethanamine, methyl dibenzylamine, ethyl dibenzylamine, n-propyl dibenzylamine, iso-propyl dibenzylamine, butyl dibenzylamine, iso-butyl dibenzylamine, N,N-dibenzyl-2-phenylethanamine, hexyl dibenzylamine, tribenzyl amine, 4-methyl-N,N-bis[(4-methylphenyl)methyl]benzenemethanamine, 4-methyl-N,N-bis(phenylmethyl)benzenemethanamine, N-methyl-N-phenylbenzenemethanamine, N-ethyl-N-phenylbenzenemethanamine, N,4-dimethyl-N-phenylbenzenemethanamine, N-propyl-N-phenylbenzenemethanamine, N, N-diphenylbenzenemethanamine, N,N-bis(4-methylphenyl)benzenemethanamine, lithium benzoate, sodium benzoate, potassium benzoate, cesium benzoate, lithium salicylate, sodium salicylate, potassium salicylate, cesium salicylate, lithium o-anisate, sodium o-anisate, potassium o-anisate, cesium o-anisate, lithium p-anisate, sodium p-anisate, potassium p-anisate, and cesium p-anisate.

In some embodiments of the present disclosure, the present disclosure provides chemiluminescent system, providing: an activator system, including: (a) a solvent, (b) at least one peroxide, (c) at least one catalyst, where the solvent is present in an amount ranging from 5 and 85 percent by weight based on a total weight of the activator system, and where the solvent is configured to be present in a liquidus state at a temperature between -110 degrees Celsius to 75 degrees Celsius.

### Low Temperature Oxalate Systems and Methods for Chemiluminescent Reactions

"Activation" and variations thereof, as used herein, means that the oxalate system of the present disclosure and an activator system containing peroxide and at least one catalyst have been sufficiently combined such as by mixing to provide useable light useable light in a short period such as less than a minute at low temperatures such as down -110 degrees C. In some embodiments of the present disclosure, the oxalate system of the present disclosure produces useable light at low temperatures when activated.

In some embodiments of the present disclosure, the present disclosure relates to an oxalate system for a chemiluminescent reaction for production of useable light in a short period such as less than a minute at low temperatures down to -110 degrees C. In some embodiments of the present disclosure, the oxalate system can be used in military and non-military training, emergency, and situations where potential ignition sources are hazardous when combined with a suitable activator system.

Tracers are employed that allow an observer to visually trace a projectile's trajectory, such as after the firing of munitions in training or combat situations.

Winter and high altitude conditions can greatly diminish the effectiveness of current chemiluminescent markers.

In some embodiments of the present disclosure, the present disclosure is an oxalate system that includes least one oxalate ester, at least one dye, at least one first solvent, and at least one inorganic salt, wherein, when the oxalate system is combined with an activator system to form a chemiluminescent system, the chemiluminescent system is configured to produces light to a temperature of -110 degrees C.

In some embodiments of the present disclosure, the at least one oxalate ester is selected from the group consisting of bis(2,4,5-trichloro-6-carbopentoxyphenyl)oxalate; bis(2,4,5-trichlorophenyl)oxalate; bis(2,4,5-tribromo-6-carbohexoxyphenyl)oxalate; bis(2,4,5-trichloro-6-carboisopentoxyphenyl)oxalate; bis(2,4,5-trichloro-6-carbobenzoxyphenyl)oxalate; bis(2-nitrophenyl)oxalate; bis(2,4-dinitrophenyl)oxalate; bis(2,6-dichloro-4-nitrophenyl)oxalate; bis(2,4,6-trichlorophenyl)oxalate; bis(3-trifluoromethyl-4-nitrophenyl)oxalate; bis(2-methyl-4,6-dinitrophenyl)oxalate; bis(1,2-dimethyl-4,6-dinitrophenyl)oxalate; bis(2,4-dichlorophenyl)oxalate; bis(2,4-dinitrophenyl)oxalate; bis(2,5-dinitrophenyl)oxalate; bis(2-formyl-4-nitrophenyl)oxalate; bis(pentachlorophenyl)oxalate; bis(1,2-dihydro-2-oxo-1-pyridyl)glyoxal; bis(2,4-dinitro-6-methylphenyl)oxalate; and bis-N-phthalimidyl oxalate.

In some embodiments of the present disclosure, the at least one oxalate ester is selected from the group of oxalate esters represented by the general formula (I) 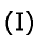 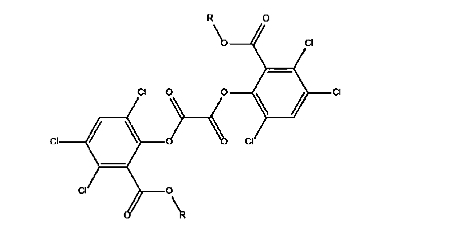 wherein R=CH2A, and A is chosen from alkyl chains, alkyl rings, and aromatic rings or combinations thereof, and wherein R is linear or nonlinear, and comprises from 4-15 carbon atoms.

In some embodiments of the present disclosure, the at least one oxalate ester is selected from the group consisting of bis{3,4,6-trichloro-2-[(2-methylpropoxy)carbonyl]phenyl}oxalate; bis{3,4,6-trichloro-2-[(cyclopropylmethoxy)carbonyl]phenyl}oxalate; bis {3,4,6-trichloro-2-[(2-methylbutoxy)carbonyl]phenyl}oxalate; bis{3,4,6-trichloro-2-[(3-methylbutoxy)carbonyl]phenyl}oxalate; bis{3,4,6-trichloro-2-[(2,2-dimethylpropoxy)carbonyl]phenyl}oxalate; bis{3,4,6-trichloro-2-[(2-methylpentyloxy)carbonyl]phenyl}oxalate; bis{3,4,6-trichloro-2-[(3-methylpentyloxy)carbonyl]phenyl}oxalate; bis{3,4,6-trichloro-2-[(4-methylpentyloxy)carbonyl]phenyl}oxalate; bis{3,4,6-trichloro-2-[(3,3-dimethylbutoxy)carbonyl]phenyl}oxalate; bis{3,4,6-trichloro-2-[(2-ethylbutoxy)carbonyl]phenyl}oxalate; bis{3,4,6-trichloro-2-[(cyclopentylmethoxy)carbonyl]phenyl}oxalate; bis{3,4,6-trichloro-2-[(2-methylhexyloxy)carbonyl]phenyl}oxalate; bis{3,4,6-trichloro-2-[(3-methylhexyloxy)carbonyl]phenyl}oxalate; bis{3,4,6-trichloro-2-[(4-methylhexyloxy)carbonyl]phenyl}oxalate; bis{3,4,6-trichloro-2-[(5-methylhexyloxy)carbonyl]phenyl}oxalate; bis{3,4,6-trichloro-2-[(cyclohexylmethoxy)carbonyl]phenyl}oxalate; bis{3,4,6-trichloro-2-[(phenylmethoxy)carbonyl]phenyl}oxalate; bis{3,4,6-trichloro-2-[(2-phenylethoxy)carbonyl]phenyl}oxalate; bis(3,4,6-trichloro-2-{[(2-methylphenyl)methoxy]carbonyl}phenyl)oxalate; bis(3,4,6-trichloro-2-{[(3-methylphenyl)methoxy]carbonyl}phenyl)oxalate; bis(3,4,6-trichloro-2-{[(4-methylphenyl)methoxy]carbonyl}phenyl)oxalate; bis(3,4,6-trichloro-2-{[(2,3-dimethylphenyl)methoxy]carbonyl}phenyl)oxalate; bis(3,4,6-trichloro-2-{[(2,4-dimethylphenyl)methoxy]carbonyl}phenyl)oxalate; bis(3,4,6-trichloro-2-{[3,4-dimethylphenyl)methoxy]carbonyl}phenyl)oxalate; bis(3,4,6-trichloro-2-{[(3,5-dimethylphenyl)methoxy]carbonyl}phenyl)oxalate; bis(3,4,6-trichloro-2-{[(2,6-dimethylphenyl)methoxy]carbonyl}phenyl)oxalate; bis(3,4,6-trichloro-2-{[(2-ethylphenyl)methoxy]carbonyl)phenyl)oxalate; bis(3,4,6-trichloro-2-{[(3-ethylphenyl)methoxy]carbonyl}phenyl)oxalate; bis(3,4,6-trichloro-2-{[(4-ethylphenyl)methoxy]carbonyl}phenyl)oxalate; bis(3,4,6-trichloro-2-{[2-(2-methylphenyl)ethoxy]carbonyl}phenyl)oxalate; bis(3,4,6-trichloro-2-{[2-(3-methylphenyl)ethoxy]carbonyl}phenyl)oxalate; bis(3,4,6-trichloro-2-{[2-(4-methylphenyl)ethoxy]carbonyl}phenyl)oxalate; bis{3,4,6-trichloro-2-[(2-phenylpropoxy)carbonyl]phenyl}oxalate; bis(3,4,6-trichloro-2-[(3-phenylpropoxy)carbonyI]phenyl}oxalate; bis{3,4,6-trichloro-2[1-naphthalenylmethoxy)carbonyl]phenyl}oxalate; bis{3,4,6-trichloro-2-[2-naphthalenylmethoxy)carbonyl]phenyl}oxalate; bis{3,4,6-trichloro-2-[(2,2-diphenylethoxy)carbonyl]phenyl}oxalate; bis{3,4,6-trichloro-2-[(9-fluorenylmethoxy)carbonyl]phenyl}oxalate; and bis{3,4,6-trichloro-2-[(9-anthracenylmethoxy)carbonyl]phenyl}oxalate.

In some embodiments of the present disclosure, the at least one oxalate ester is present in an amount ranging from 3 percent to 60 percent by weight, based on the total weight of the oxalate system.

In some embodiments of the present disclosure, the at least one first solvent is selected from the group consisting of alkyl benzoates, dialkyl malonates, dialkyl dialkylmalonates, dialkyl arylalkylmalonates, dialkyl succinates, dialkyl glutarates, dialkyl adipates, dialkyl pimelates, dialkyl polyalkylmalonates, acetyl trialkyl citrates, 2-acetyloxy isobutyrates, paraffinic liquids, isoparaffinic liquids, toluene, an nitroethane.

In some embodiments of the present disclosure, the at least one dye is a fluorescer selected from the group consisting of 1-methoxy-9,10-bis(phenylethynyl)anthracene, perylene, rubrene, 16,17-didecycloxyviolanthrone, 2-ethyl-9,10-bis(phenylethynyl)anthracene; 2-chloro-9,10-bis(4-ethoxyphenyl)anthracene;2-chloro-9,10-bis(4-methoxyphenyl)anthracene; 9,10-bis(phenylethynyl)anthracene; 1-chloro-9,10-bis(phenylethynyl)anthracene; 1,8-dichloro-9,10-bis(phenylethynyl)anthracene; 1,5-dichloro-9,10-bis(phenylethynyl)anthracene; 2,3-dichloro-9,10-bis (phenylethynyl)anthracene; 5,12-bis(phenylethynyl)tetracene, 9,10-diphenylanthracene; 1,6,7,12-tetraphenoxy-N,N' -bis(2,6-diisopropylpheny 1)-3,4,9,10-perylene dicarboximide; 1,6,7,12-tetraphenoxy-N,N'bis(2,5-di-t-butylphenyl)-3,4,9,10-perylene dicarboximide; 1,7-dichloro-6,12-diphenoxy-N,N'-bis(2,6-diisopropylphenyl)-3,4,9,10-perylene dicarboximide; 1,6,7,12-tetra(p-bromophenoxy)-N,N' -bis(2,6-diisopropylphenyl)-3 ,4,9,10-perylene dicarboximide; 1,6,7,12-tetraphenoxy-N,N'dineopentyl-3,4,9,10-perylene dicarboximide; 1,6,7,12-tetra-(p-t-butylphenoxy)-N,N'-dineopentyl-3,4,9,10-perylenedicarboximide; 1,6,7,12-tetra(o-chlorophenoxy)-N,N'-bis(2,6-diisopropylphenyl)-3,4,9,10-perylene dicarboximide; 1,6,7,12-tetra(p-chlorophenoxy)-N,N'-bis(2,6-diisopropylphenyl)-3,4,9,10-perylene dicarboximide; 1,6,7,12-tetra(o-fluorophenoxy)-N,N'-bis(2,6-diisopropylphenyl)-3,4,9,10-perylene dicarboximide; 1,6,7,12-tetra(p-fluorophenoxy)-N,N'-bis(2,6-diisopropylphenyl)-3,4,9,10-perylenedicarboximide; 1,6,7,12-tetraphenoxy-N,N'-diethyl-3,4,9,10-perylene dicarboximide; 1,7-dibromo-6,12-diphenoxy-N,N'-bis(2-isopropylphenyl)-3,4,9,10-perylene dicarboximide; 16,17-dihexyloxyviolanthrone; and 1,4-dimethyl-9,10-bis(phenylethynyl)anthracene.

In some embodiments of the present disclosure, the at least one dye is a fluorescer present in an amount ranging from 0.05 percent to 0.9 percent by weight, based on the total weight of the oxalate system.

In some embodiments of the present disclosure, the at least one inorganic salt is selected from the group consisting of sodium thiosulphate, potassium thiosulphate, cobalt acetate, copper acetate, lead acetate, cupric chloride, ferric chloride, calcium iodide, potassium iodide, and silver nitrate.

In some embodiments of the present disclosure, the at least one inorganic salt is present in an amount ranging from 0.1 percent to 30 percent by weight, based on the total weight of the oxalate system.

In some embodiments of the present disclosure, the activator system may include at least one peroxide that may include, but is not limited to, hydrogen peroxide; sodium peroxide; sodium perborate; sodium pyrophosphate peroxide; urea peroxide; histidine peroxide; t-butylhydroperoxide; peroxybenzoic acid, and sodium percarbonate; at least one catalyst that may include, but is not limited to, alkali benzoates, alkali salicylates, alkali anisates, tertiary amines, or nitrogenous heterocyclic aliphatic and aromatic compounds; at least one bridging solvent if necessary to ensure solubility of the peroxide in the activator composition that may include, but is not limited to tertiary alcohols, glycols and their mono or di ethers, esters of 2-hydroxyisobutyrates; and low melting point solvents that may include, but are not limited to, trialkyl citrates, dialkyl phthalates, glycols, and glycol ethers or any combination thereof.

In some embodiments of the present disclosure, the ratio of the weight of the oxalate system to the weight of the activator system ranges from 1:9 to 4:1. In some embodiments of the present disclosure, the ratio of the weight of the oxalate system to the weight of the activator system ranges from 1:5 to 2:1. In some embodiments of the present disclosure, the ratio of the weight of the oxalate system to the weight of the activator system ranges from 1:1 to 3:1. In some embodiments of the present disclosure, the ratio of the weight of the oxalate system to the weight of the activator system ranges from 1:3 to 3:1. In some embodiments of the present disclosure, the ratio of the weight of the oxalate system to the weight of the activator system ranges from 1:2 to 2:1. In some embodiments of the present disclosure, the ratio of the weight of the oxalate system to the weight of the activator system ranges from 2:1 to 4:1. In some embodiments of the present disclosure, the ratio of the weight of the oxalate system to the weight of the activator system ranges from 1:6 to 2:1. In some embodiments of the present disclosure, the ratio of the weight of the oxalate system to the weight of the activator system ranges from 1:1 to 4:1.

In some embodiments of the present disclosure, the ratio of the weight of the oxalate system to the weight of the activator system is 1:9. In some embodiments of the present disclosure, the ratio of the weight of the oxalate system to the weight of the activator system is 1:2. In some embodiments of the present disclosure, the ratio of the weight of the oxalate system to the weight of the activator system is 2:1. In some embodiments of the present disclosure, the ratio of the weight of the oxalate system to the weight of the activator system is 3:1. In some embodiments of the present disclosure, the ratio of the weight of the oxalate system to the weight of the activator system is 1:8. In some embodiments of the present disclosure, the ratio of the weight of the oxalate system to the weight of the activator system is 4:1. In some embodiments of the present disclosure, the ratio of the weight of the oxalate system to the weight of the activator system is 8:2. In some embodiments of the present disclosure, the ratio of the weight of the oxalate system to the weight of the activator system is 1:5. In some embodiments of the present disclosure, the ratio of the weight of the oxalate system to the weight of the activator system is 1:3.

In some embodiments of the present disclosure, the system of the present disclosure, when activated, is configured to produce useable light in a temperature range of -110oC to 75oC. In some embodiments of the present disclosure, the system of the present disclosure, when activated, is configured to produce useable light in a temperature range of -80oC to 50oC. In some embodiments of the present disclosure, the system of the present disclosure, when activated, is configured to produce useable light in a temperature range of -110oC to 50oC. In some embodiments of the present disclosure, the system of the present disclosure, when activated, is configured to produce useable light in a temperature range of -80oC to 75oC. In some embodiments of the present disclosure, the system of the present disclosure, when activated, is configured to produce useable light in a temperature range of -30oC to 30oC. In some embodiments of the present disclosure, the system of the present disclosure, when activated, is configured to produce useable light in a temperature range of -100oC to 0oC. In some embodiments of the present disclosure, the system of the present disclosure, when activated, is configured to produce useable light in a temperature range of -20oC to 75oC. In some embodiments of the present disclosure, the system of the present disclosure, when activated, is configured to produce useable light in a temperature down to -110oC. In some embodiments of the present disclosure, the system of the present disclosure, when activated, is configured to produce useable light in a temperature range of -60oC to 20oC. In some embodiments of the present disclosure, the system of the present disclosure, when activated, is configured to produce useable light in a temperature range of -110oC to -10oC.

In some embodiments of the present disclosure, the system of the present disclosure, when activated, is configured to produce useable light for a duration of 1 second to 3 minutes. In some embodiments of the present disclosure, the system of the present disclosure, when activated, is configured to produce useable light for a duration of 10 second to 3 minutes. In some embodiments of the present disclosure, the system of the present disclosure, when activated, is configured to produce useable light for a duration of 1 second to 2 minutes. In some embodiments of the present disclosure, the system of the present disclosure, when activated, is configured to produce useable light for a duration of 30 second to 1 minute. In some embodiments of the present disclosure, the system of the present disclosure, when activated, is configured to produce useable light for a duration of 20 second to 2 minute. In some embodiments of the present disclosure, the system of the present disclosure, when activated, is configured to produce useable light for a duration of 2 minutes to 3 minute. In some embodiments of the present disclosure, the system of the present disclosure, when activated, is configured to produce useable light for a duration of 1 minute to 2 minutes.

In some embodiments of the present disclosure, the system of the present disclosure, when activated, is configured to produce useable light for a duration of 10 seconds. In some embodiments of the present disclosure, the system of the present disclosure, when activated, is configured to produce useable light for a duration of 1 minute. In some embodiments of the present disclosure, the system of the present disclosure, when activated, is configured to produce useable light for a duration of 30 seconds. In some embodiments of the present disclosure, the system of the present disclosure, when activated, is configured to produce useable light for a duration of 2 minutes. In some embodiments of the present disclosure, the system of the present disclosure, when activated, is configured to produce useable light for a duration of 15 seconds. In some embodiments of the present disclosure, the system of the present disclosure, when activated, is configured to produce useable light for a duration of 1.5 minute. In some embodiments of the present disclosure, the system of the present disclosure, when activated, is configured to produce useable light for a duration of 45 seconds.

In some embodiments of the present disclosure, the oxalate system is comprised of at least one oxalate ester, at least one dye or fluorescer, at least one inorganic salt, and at least one solvent that may include a sufficiently low melting point and compatibility with the chemical reactions needed to produce chemiluminescence.

In some embodiments of the present disclosure, the at least one oxalate ester useful in the present disclosure include but are not limited to bis(2,4,5-trichloro-6-carbopentoxyphenyl)oxalate (CPPO); bis(2,4,5-trichlorophenyl)oxalate; bis(2,4,5-tribromo-6-carbohexoxyphenyl)oxalate; bis(2,4,5-trichloro-6-carboisopentoxyphenyl)oxalate; bis(2,4,5-trichloro-6-carbobenzoxyphenyl) oxalate; bis(2-nitrophenyl)oxalate; bis(2,4-dinitrophenyl)oxalate; bis(2,6-dichloro-4-nitrophenyl)oxalate; bis(2,4,6-trichlorophenyl)oxalate; bis(3-trifluoromethyl-4-nitrophenyl)oxalate; bis(2-methyl-4,6-dinitrophenyl)oxalate; bis(1,2-dimethy1-4, 6-dinitrophenyl)oxalate; bis(2,4-dichlorophenyl)oxalate; bis(2,4-dinitrophenyl)oxalate; bis(2,5-dinitrophenyl)oxalate; bis(2-formyl-4-nitrophenyl)oxalate; bis(pentachlorophenyl)-oxalate; bis(1,2-dihydro-2-oxo-1-pyridyl)glyoxal; bis(2,4-dinitro-6-methylphenyl)oxalate; bis-N-phthalimidyl oxalate.

In some embodiments of the present disclosure, the at least one oxalate ester is represented by the general formula (1), 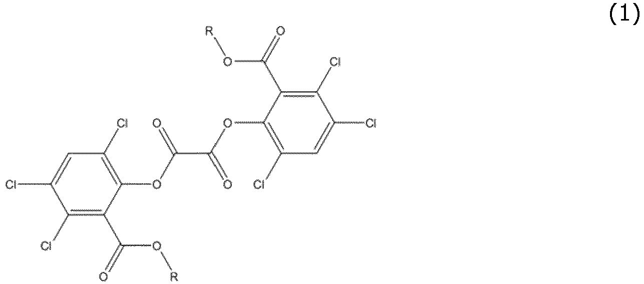 wherein R=CH2A and A is chosen from alkyl chains, alkyl rings, and aromatic rings or combinations thereof, such that R is linear or nonlinear, and further such that R comprises from 4-15 carbons, as well as mixtures of any of the foregoing oxalates.

In some embodiments of the present disclosure, the at least one oxalate ester is from a group that includes but is not limited to: bis{3,4,6-trichloro-2-[(2-methylpropoxy)carbonyl]phenyl}oxalate; bis{3,4,6-trichloro-2-[(cyclopropylmethoxy)carbonyl]phenyl}oxalate; bis{3,4,6-trichloro-2-[(2-methylbutoxy)carbonyl]phenyl}oxalate; bis{3,4,6-trichloro-2-[(3-methylbutoxy)carbonyl]phenyl}oxalate; bis{3,4,6-trichloro-2-[(2,2-dimethylpropoxy)carbonyl]phenyl}oxalate; bis{3,4,6-trichloro-2-[(2-methylpentyloxy)carbonyl]phenyl}oxalate; bis{3,4,6-trichloro-2-[(3-methylpentyloxy)carbonyl]phenyl}oxalate; bis{3,4,6-tri chloro-2-[(4-methylpentyloxy)carbonyl]phenyl}oxalate; bis{3,4,6-trichloro-2-[(3,3-dimethylbutoxy)carbonyl]phenyl}oxalate; bis{3,4,6-trichloro-2-[(2-ethylbutoxy)carbonyl]phenyl}oxalate; bis{3,4,6-trichloro-2-[(cyclopentylmethoxy)carbonyl]phenyl}oxalate; bis{3,4,6-trichloro-2-[(2-methylhexyloxy)carbonyl]phenyl}oxalate; bis{3,4,6-trichloro-2-[(3-methylhexyloxy)carbonyl]phenyl}oxalate; bis{3,4,6-trichloro-2-[(4-methylhexyloxy)carbonyl]phenyl}oxalate; bis{3,4,6-trichloro-2-[(5-methylhexyloxy)carbonyl]phenyl}oxalate; bis{3,4,6-trichloro-2-[(cyclohexylmethoxy)carbonyl]phenyl}oxalate; bis{3,4 6-trichloro-2-[(phenylmethoxy)carbonyl]phenyl}oxalate; bis{3,4,6-trichloro-2-[(2-phenylethoxy)carbonyl]phenyl}oxalate; bis(3,4,6-trichloro-2-{[(2-methylphenyl)methoxy]carbonyl}phenyl)oxalate; bis(3,4,6-trichloro-2-{[(3-methylphenyl)methoxy]carbonyl}phenyl)oxalate; bis(3,4,6-trichloro-2-{[(4-methylphenyl)methoxy]carbonyl}phenyl)oxalate; bis(3,4,6-trichloro-2-{[(2,3-dimethylphenyl)methoxy]carbonyl}phenyl)oxalate; bis(3,4,6-trichloro-2-{[(2,4-dimethylphenyl)methoxy]carbonyl}phenyl)oxalate; bis(3 ,4,6-trichloro-2-{[3,4-dimethylphenyl)methoxy]carbonyl}phenyl)oxalate; bis(3,4,6-trichloro-2-{[(3,5-dimethylphenyl)methoxy]carbonyl}phenyl)oxalate; bis(3,4,6-trichloro-2-{[(2,6-dimethylphenyl)methoxy]carbonyl}phenyl)oxalate; bis(3,4,6-trichloro-2-{[(2-ethylphenyl)methoxy]carbonyl}phenyl)oxalate; bis(3,4,6- trichloro-2-{[(3-ethylphenyl)methoxy]carbonyl}phenyl)oxalate; bis(3,4,6-trichloro-2-{[(4-ethylphenyl)methoxy]carbonyl}phenyl)oxalate; bis(3,4,6-trichloro-2-{[2-(2-methylphenyl)ethoxy]carbonyl}phenyl)oxalate; bis(3,4,6-trichloro-2-{[2-(3-methylphenyl)ethoxy]carbonyl}phenyl)oxalate; bis(3,4,6-trichloro-2-{[2-(4-methylphenyl)ethoxy]carbonyl}phenyl)oxalate; bis{3,4,6-trichloro-2-[(2-phenylpropoxy)carbonyl]phenyl}oxalate; bis{3,4,6-trichloro-2-[(3-phenylpropoxy)carbonyl]phenyl}oxalate; bis{3,4,6-trichloro-2-[1-naphthalenylmethoxy)carbonyl]phenyl}oxalate; bis{3,4,6-trichloro-2-[2-naphthalenylmethoxy)carbonyl]phenyl}oxalate; bis{3,4,6-trichloro-2-[(2,2-diphenylethoxy)carbonyl]phenyl}oxalate; bis{3,4,6-trichloro-2-[(9-fluorenylmethoxy)carbonyl]phenyl}oxalate; and/or bis{3,4,6-trichloro-2-[(9-anthracenylmethoxy)carbonyl]phenyl}oxalate.

Additional examples of oxalate esters represented by general formula (1) are disclosed in U.S. Published Application No. 2011-0084243.

In some embodiments of the present disclosure, the at least one oxalate ester is present in an amount ranging from 3 percent to 60 percent by weight, based upon the total weight of the oxalate system. In some embodiments of the present disclosure, the at least one oxalate ester is present in an amount ranging from 8 percent to 50 percent by weight, based upon the total weight of the oxalate system. In some embodiments of the present disclosure, the at least one oxalate ester is present in an amount ranging from 15 percent to 60 percent by weight, based upon the total weight of the oxalate system. In some embodiments of the present disclosure, the at least one oxalate ester is present in an amount ranging from 10 percent to 40 percent by weight, based upon the total weight of the oxalate system. In some embodiments of the present disclosure, the at least one oxalate ester is present in an amount ranging from 3 percent to 30 percent by weight, based upon the total weight of the oxalate system. In some embodiments of the present disclosure, the at least one oxalate ester is present in an amount ranging from 5 percent to 30 percent by weight, based upon the total weight of the oxalate system.

In some embodiments of the present disclosure, the at least one oxalate ester is present in an amount ranging from 20 percent to 60 percent by weight, based upon the total weight of the oxalate system. In some embodiments of the present disclosure, the at least one oxalate ester is present in an amount ranging from 40 percent to 60 percent by weight, based upon the total weight of the oxalate system. In some embodiments of the present disclosure, the at least one oxalate ester is present in an amount ranging from 3 percent to 20 percent by weight, based upon the total weight of the oxalate system.

In some embodiments of the present disclosure, the at least one oxalate ester is present at 3 percent by weight, based upon the total weight of the oxalate system. In some embodiments of the present disclosure, the at least one oxalate ester is present at 60 percent by weight, based upon the total weight of the oxalate system. In some embodiments of the present disclosure, the at least one oxalate ester is present at more than 3 percent by weight, based upon the total weight of the oxalate system.

In some embodiments of the present disclosure, the at least one oxalate ester is present at the weight percents and the weight percent ranges detailed above, based on the combined weight of the activator system and oxalate system.

In some embodiments of the present disclosure, the at least one solvent may include, but is not limited to, alkyl benzoates, dialkyl malonates, dialkyl dialkylmalonates, dialkyl arylalkylmalonates, dialkyl succinates, dialkyl glutarates, dialkyl adipates, dialkyl pimelates, dialkyl polyalkylmalonates, acetyl trialkyl citrates, 2-acetyloxy isobutyrates, paraffinic liquids, isoparaffinic liquids, toluene, nitroethane, or a mixture of any of the above.

In some embodiments of the present disclosure, the at least one first solvent is present in an amount ranging from 10 percent to 97 percent of the total weight of the oxalate system. In some embodiments of the present disclosure, the at least one first solvent is present in an amount ranging from 20 percent to 80 percent of the total weight of the oxalate system. In some embodiments of the present disclosure, the at least one first solvent is present in an amount ranging from 10 percent to 75 percent of the total weight of the oxalate system. In some embodiments of the present disclosure, the at least one first solvent is present in an amount ranging from 30 percent to 80 percent of the total weight of the oxalate system. In some embodiments of the present disclosure, the at least one first solvent is present in an amount ranging from 15 percent to 50 percent of the total weight of the oxalate system. In some embodiments of the present disclosure, the at least one first solvent is present in an amount ranging from 50 percent to 97 percent of the total weight of the oxalate system. In some embodiments of the present disclosure, the at least one first solvent is present in an amount ranging from 70 percent to 97 percent of the total weight of the oxalate system.

In some embodiments of the present disclosure, the at least one first solvent is present at 10 percent of the total weight of the oxalate system. In some embodiments of the present disclosure, the at least one first solvent is present at 40 percent of the total weight of the oxalate system. In some embodiments of the present disclosure, the at least one first solvent is present at 60 percent of the total weight of the oxalate system. In some embodiments of the present disclosure, the at least one first solvent is present at 75 percent of the total weight of the oxalate system. In some embodiments of the present disclosure, the at least one first solvent is present at 97 percent of the total weight of the oxalate system.

In some embodiments of the present disclosure, the at least one second solvent is present in an amount ranging from 10 percent to 97 percent of the total weight of the oxalate system. In some embodiments of the present disclosure, the at least one second solvent is present in an amount ranging from 20 percent to 80 percent of the total weight of the oxalate system. In some embodiments of the present disclosure, the at least one second solvent is present in an amount ranging from 10 percent to 75 percent of the total weight of the oxalate system. In some embodiments of the present disclosure, the at least one second solvent is present in an amount ranging from 30 percent to 80 percent of the total weight of the oxalate system. In some embodiments of the present disclosure, the at least one second solvent is present in an amount ranging from 15 percent to 50 percent of the total weight of the oxalate system. In some embodiments of the present disclosure, the at least one second solvent is present in an amount ranging from 50 percent to 97 percent of the total weight of the oxalate system. In some embodiments of the present disclosure, the at least one second solvent is present in an amount ranging from 70 percent to 97 percent of the total weight of the oxalate system.

In some embodiments of the present disclosure, the at least one second solvent is present at 10 percent of the total weight of the oxalate system. In some embodiments of the present disclosure, the at least one second solvent is present at 40 percent of the total weight of the oxalate system. In some embodiments of the present disclosure, the at least one second solvent is present at 60 percent of the total weight of the oxalate system. In some embodiments of the present disclosure, the at least one second solvent is present at 75 percent of the total weight of the oxalate system. In some embodiments of the present disclosure, the at least one second solvent is present at 97 percent of the total weight of the oxalate system.

In some embodiments of the present disclosure, the wavelength of light emitted is dependent upon the desired application of the device and the fluorescer chosen, and may include wavelengths in both the visual and infrared spectrum. In some embodiments of the present disclosure, multiple fluorescers may be combined to allow for the emission of light at multiple wavelengths.

In some embodiments of the present disclosure, the at least one fluorescer useful in the present disclosure include 1-methoxy-9,10-bis(phenylethynyl)anthracene, perylene, rubrene, 16,17-didecycloxyviolanthrone, 2-ethyl-9,10-bis(phenylethynyl)anthracene; 2-chloro-9,10-bis(4-ethoxyphenyl)anthracene; 2-chloro-9,10-bis(4methoxyphenyl)anthracene; 9,10-bis(phenylethynyl)anthracene; 1-chloro-9,10-bis(phenylethynyl)anthracene; 1,8-dichloro-9,10-bis(phenylethynyl)anthracene; 1,5-dichloro-9,10-bis(phenylethynyl)anthracene; 2,3-dichloro-9,10-bis(phenylethynyl)anthracene; 5,12-bis(phenylethynyl)tetracene; 9,10-diphenylanthracene; 1,6,7,12-tetraphenoxy-N,N'-bis(2,6-diisopropylphenyl)-3,4,9,10-perylene dicarboximide; 1,6,7,12-tetraphenoxy-N,N'-bis(2,5-di-t-butylphenyl)-3,4,9,10-perylene dicarboximide; 1,7-dichloro-6,12-diphenoxy-N,N'-bis(2,6-diisopropylphenyl)-3,4,9,10-perylene dicarboximide; 1,6,7,12-tetra(pbromophenoxy)-N,N'-bis(2,6-diisopropylphenyl)-3,4,9,10-perylene dicarboximide; 1,6,7,12-tetraphenoxy-N,N'-dineopentyl-3,4,9,10-perylene dicarboximide; 1,6,7,12-tetra (p-t-butylphenoxy)-N,N'-dineopentyl-3,4,9,10-perylenedicarboximide; 1,6,7,12-tetra(o-chlorophenoxy)-N,N'-bis(2,6-diisopropylphenyl)-3,4,9,10-perylene dicarboximide; 1,6,7,12-tetra(p-chlorophenoxy)-N,N'-bis(2,6-diisopropylphenyl)-3,4,9,10-perylene dicarboximide; 1,6,7,12-tetra(o-fluorophenoxy)-N,N'-bis(2,6-diisopropylphenyl)-3,4,9,10-perylene dicarboximide; 1,6,7,12-tetra(p-fluorophenoxy)-N,N'-bis(2,6-diisopropylphenyl)-3,4,9,10-perylenedicarboximide; 1,6,7,12-tetraphenoxy-N,N'-diethyl-3,4,9,10-perylene dicarboximide; 1,7-dibromo-6,12-diphenoxy)-N,N'-bis(2-isopropylphenyl)-3,4,9,10-perylene dicarboximide; 16,17-dihexyloxyviolanthrone; 1,4-dimethyl-9,10-bis(phenylethynyl)anthracene, and/or mixtures thereof.

In some embodiments of the present disclosure, the at least one fluorescer is present in an amount ranging from 0.05 percent to 0.9 percent by weight, based on the total weight of the oxalate system. In some embodiments of the present disclosure, the at least one fluorescer is present in an amount ranging from 0.1 percent to 0.8 percent by weight, based on the total weight of the oxalate system. In some embodiments of the present disclosure, the at least one fluorescer is present in an amount ranging from 0.15 percent to 0.9 percent by weight, based on the total weight of the oxalate system. In some embodiments of the present disclosure, the at least one fluorescer is present in an amount ranging from 0.05 percent to 0.5 percent by weight, based on the total weight of the oxalate system. In some embodiments of the present disclosure, the at least one fluorescer is present in an amount ranging from 0.2 percent to 0.7 percent by weight, based on the total weight of the oxalate system. In some embodiments of the present disclosure, the at least one fluorescer is present in an amount ranging from 0.05 percent to 0.1 percent by weight, based on the total weight of the oxalate system. In some embodiments of the present disclosure, the at least one fluorescer is present in an amount ranging from 0.05 percent to 0.3 percent by weight, based on the total weight of the oxalate system.

In some embodiments of the present disclosure, the at least one fluorescer is present at 0.05 percent by weight, based on the total weight of the oxalate system. In some embodiments of the present disclosure, the at least one fluorescer is present at 0.2 percent by weight, based on the total weight of the oxalate system. In some embodiments of the present disclosure, the at least one fluorescer is present at 0.5 percent by weight, based on the total weight of the oxalate system. In some embodiments of the present disclosure, the at least one fluorescer is present at 0.9 percent by weight, based on the total weight of the oxalate system.

In some embodiments of the present disclosure, the at least one fluorescer is present at the weight percents and the weight percent ranges detailed above, based on the combined weight of the activator system and oxalate system.

In some embodiments of the present disclosure, the ratio of solvents may be derived from the viscosity of the oxalate system at various temperatures and may also depend, at least in part, on the final use.

In some embodiments of the present disclosure, the at least one inorganic salt may include, but is not limited to, sodium thiosulphate, potassium thiosulphate, cobalt acetate, copper acetate, lead acetate, cupric chloride, ferric chloride, calcium iodide, potassium iodide, and/or silver nitrate.

In some embodiments of the present disclosure, the at least one inorganic salt is present in an amount ranging from 0.1 percent to 30 percent by weight, based on the total weight of the oxalate system. In some embodiments of the present disclosure, the at least one inorganic salt is present in an amount ranging from 0.5 percent to 25 percent by weight, based on the total weight of the oxalate system. In some embodiments of the present disclosure, the at least one inorganic salt is present in an amount ranging from 5 percent to 20 percent by weight, based on the total weight of the oxalate system. In some embodiments of the present disclosure, the at least one inorganic salt is present in an amount ranging from 10 percent to 15 percent by weight, based on the total weight of the oxalate system. In some embodiments of the present disclosure, the at least one inorganic salt is present in an amount ranging from 1 percent to 20 percent by weight, based on the total weight of the oxalate system. In some embodiments of the present disclosure, the at least one inorganic salt is present in an amount ranging from 0.1 percent to 10 percent by weight, based on the total weight of the oxalate system. In some embodiments of the present disclosure, the at least one inorganic salt is present in an amount ranging from 0.1 percent to 5 percent by weight, based on the total weight of the oxalate system.

In some embodiments of the present disclosure, the at least one inorganic salt is present at 0.1 percent by weight, based on the total weight of the oxalate system. In some embodiments of the present disclosure, the at least one inorganic salt is present at 30 percent by weight, based on the total weight of the oxalate system. In some embodiments of the present disclosure, the at least one inorganic salt is present at 20 percent by weight, based on the total weight of the oxalate system. In some embodiments of the present disclosure, the at least one inorganic salt is present at 15 percent by weight, based on the total weight of the oxalate system. In some embodiments of the present disclosure, the at least one inorganic salt is present at 1 percent by weight, based on the total weight of the oxalate system. In some embodiments of the present disclosure, the at least one inorganic salt is present at 2 percent by weight, based on the total weight of the oxalate system. In some embodiments of the present disclosure, the at least one inorganic salt is present at 5 percent by weight, based on the total weight of the oxalate system.

In some embodiments of the present disclosure, the at least one inorganic salt is present at the weight percents and the weight percent ranges detailed above, based on the combined weight of the activator system and oxalate system.

### Non-limiting Example 1

The experiments in Table I indicate that the ratio of the solvents, in this case butyl benzoate and diethyl diethylmalonate, used may be adjusted based, at least in part, on the desired operating temperature. The viscosities were measured using a Brookfield viscometer and the temperature of the solution recorded digitally during the experiment.

**Table I**

| [Viscosity of butyl benzoate (BB) and diethyl diethylmalonate (DEDEM) mixtures at different temperatures] | | |
|---|---|---|
| % DEDEM by weight | Temp. (°C) | Viscosity (cP)) |
| 0 | 20 | 20 |
| 0 | 2 | 27 |
| 0 | -37 | Solid |
| 10 | 20 | 21 |
| 10 | 2 | 28 |
| 10 | -37 | Solid |
| 20 | 20 | 21 |
| 20 | 2 | 28 |
| 20 | -37 | Solid |
| 30 | 20 | 21 |
| 30 | 2 | 28 |
| 30 | -44 | Solid |
| 40 | 20 | 21 |
| 40 | 2 | 28 |
| 40 | -44 | 178* |

| | | |
|---|---|---|
| * Super cooled. Solid began to form by the end of the experiment. | | |

### Non-limiting Example 2

The experiments in Table II indicate that the ratio of the solvents, in this case butyl benzoate and bis(2-ethylhexyl) adipate, used may require adjustment based, at least in part, on the desired operating temperature. The viscosities were measured using a Brookfield viscometer and the temperature of the solution recorded digitally during the experiment.

**Table II**

| [Viscosity of butyl benzoate (BB) and bis(2-ethylhexyl) adipate (EHA) mixtures at different temperatures] | | |
|---|---|---|
| % EHA by weight | Temp. (°C) | Viscosity (cP) |
| 0 | -40 | Solid |
| 40 | -50 | Solid |
| 50 | -50 | Solid |
| 60 | -31 | 208 |
| 60 | -64 | 121200 |
| 70 | -64 | 30100 |

### Non-limiting Example 3

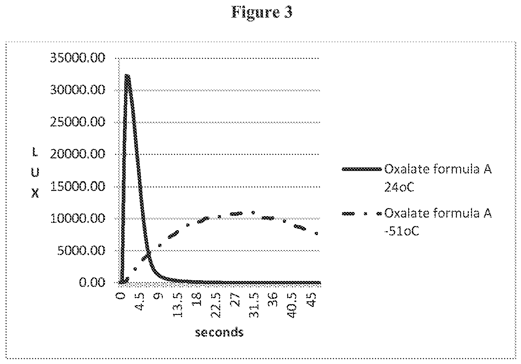

Oxalate formula A was prepared by dissolving 23.5 g of bis(2,4,5-trichloro-6-carbopentoxyphenyl)oxalate (CPPO) and 0.31 g of rubrene in 38.1 g of butyl benzoate (BB) and 38.1 g of diethyl diethylmalonate at 70 deg C with a constant stream of dry nitrogen bubbling through the solution. The activator solution was prepared by combining 23 g of triethyl citrate, 20 g of diethylene glycol diethyl ether, 6 g of 50% aqueous hydrogen peroxide, and 1 g of sodium salicylate. The tests were conducted measuring the light output with an ILT 1700 light meter. First, the solutions were brought to the desired temperature (room temperature and 60 deg C). The reaction vessel was placed into the high speed mixer and 0.5 g of sodium thiosulfate was added, then 5 mL of oxalate formula A was added and the mixer was turned on. The temperature was measured digitally at this time. The mixture at the colder temperature had warmed to -51 deg C. As rapidly as possible, add 5 mL of the activator solution and record the light output. The results are shown in Figure 3. These results demonstrate the production of useable levels of light rapidly at low temperatures. FIG. 1 represents the chemical light output of oxalate formula A at -51 degrees C.

### Non-limiting Example 4

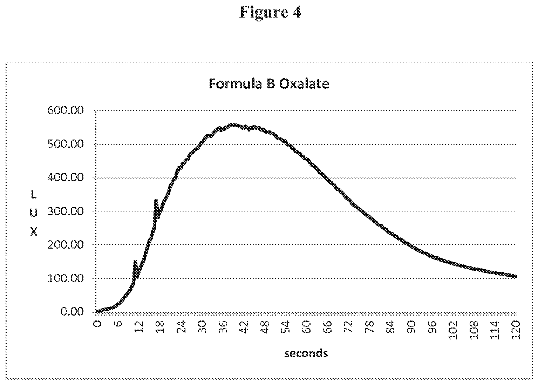

Oxalate formula B was prepared by dissolving 15 g of bis(2,4,5-trichloro-6-carbopentoxyphenyl)oxalate (CPPO) and 0.2 g of rubrene in 25.4 g of butyl benzoate (BB) and 59.4 g of bis(2-ethylhexyl) adipate (EHA) at 70oC with a constant stream of dry nitrogen bubbling through the solution. The activator solution was prepared by combining 199.5 g of triethyl citrate, 250 g of diethylene glycol diethyl ether, 50 g of 50% aqueous hydrogen peroxide, and 0.5 g of sodium salicylate. The oxalate was sealed in glass ampoules under nitrogen so that each ampoule contained 0.8 g of oxalate solution and 0.15 g of sodium thiosulfate. The activator solution was sealed in glass ampoules so each ampoule contained 2.0 g of activator solution. The sealed ampoules were cooled to -86oC in a freezer for a minimum of 2 hours. At that point they were placed in the in an ampoule crushing device with a light meter. The readings were started within one minute or less after removal from the freezer. The results are shown in Figure 4. FIG. 4 represents the chemical light output of oxalate formula B at -86 degrees C.

In some embodiments of the present disclosure, the present disclosure provides a chemiluminescent system, including: an oxalate system, including: (a) at least one oxalate ester in an amount ranging from 3 to 60 percent by weight based on a total weight of the oxalate system, (b) at least one first solvent selected from the group consisting of: alkyl benzoates, dialkyl phthalates, trialkyl acetylcitrates, 2-acetyloxy isobutyrates, paraffinic liquids, isoparaffinic liquids, toluene, nitroethane, and a combination thereof; where the at least one first solvent is present in an amount ranging from 10 to 97 percent by weight based on the total weight of the oxalate system, (c) at least one second solvent is selected from the group consisting of: dialkyl malonates, dialkyl dialkylmalonates, dialkyl arylalkylmalonates, dialkyl succinates, dialkyl glutarates, dialkyl adipates, dialkyl pimelates, dialkyl polyalkylmalonates, and a combination thereof; where the at least one second solvent is present in an amount ranging from 10 to 97 percent by weight based on the total weight of the oxalate system, (d) at least one fluorescer, and (e) at least one inorganic salt in an amount ranging from 0.1 to 30 percent by weight based on the total weight of the oxalate system,where a viscosity of the chemiluminescent system does not exceed 130,000 cP; and where a combination of the at least one first solvent and the at least one second solvent is present in a sufficient amount in the chemiluminescent system so as to result the chemiluminescent system, at a temperature ranging from -110 degrees Celsius to -10 degrees Celsius, producing a light having an illuminescence between 0.1 Ix and 35,000 Ix.

In some embodiments of the present disclosure, the at least one oxalate ester is represented by formula (I): 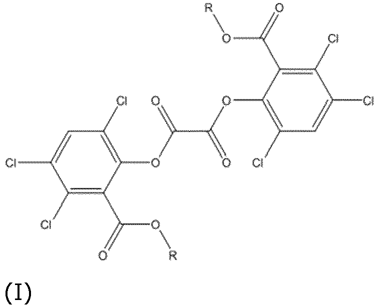 where R=CH2A, and A is selected from the group consisting of an alkyl chain, alkyl ring, an aromatic ring, and a combination thereof, where R is linear or branched, and where R is from C4-15.

In some embodiments of the present disclosure, the at least one oxalate ester is selected from the group consisting of: bis{3,4,6-trichloro-2-[(2-methylpropoxy)carbonyl]phenyl}oxalate, bis{3,4,6-trichloro-2-[(cyclopropylmethoxy)carbonyl]phenyl}oxalate, bis{3,4,6-trichloro-2-[(2-methylbutoxy)carbonyl]phenyl}oxalate, bis{3,4,6-trichloro-2-[(3-methylbutoxy)carbonyl]phenyl}oxalate, bis{3,4,6-trichloro-2-[(2,2-dimethylpropoxy)carbonyl]phenyl}oxalate, bis{3,4,6-trichloro-2-[(2-methylpentyloxy)carbonyl]phenyl}oxalate, bis{3,4,6-trichloro-2-[(3-methylpentyloxy)carbonyl]phenyl}oxalate, bis{3,4,6-trichloro-2-[(4-methylpentyloxy)carbonyl]phenyl}oxalate, bis{3,4,6-trichloro-2-[(3,3-dimethylbutoxy)carbonyl]phenyl}oxalate, bis{3,4,6-trichloro-2-[(2-ethylbutoxy)carbonyl]phenyl}oxalate, bis{3,4,6-trichloro-2-[(cyclopentylmethoxy)carbonyl]phenyl}oxalate, bis{3,4,6-trichloro-2-[(2-methylhexyloxy)carbonyl]phenyl}oxalate, bis{3,4,6-trichloro-2-[(3-methylhexyloxy)carbonyl]phenyl}oxalate, bis{3,4,6-trichloro-2-[(4-methylhexyloxy)carbonyl]phenyl}oxalate, bis{3,4,6-trichloro-2-[(5-methylhexyloxy)carbonyl]phenyl}oxalate, bis{3,4,6-trichloro-2-[(cyclohexylmethoxy)carbonyl]phenyl}oxalate, bis{3,4 6-trichloro-2-[(phenylmethoxy)carbonyl]phenyl}oxalate, bis{3,4,6-trichloro-2-[(2-phenylethoxy)carbonyl]phenyl}oxalate, bis(3,4, 6-trichloro-2-{[(2-methylphenyl)methoxy]carbonyl}phenyl)oxalate, bis(3,4,6-trichloro-2-{[(3-methylphenyl)methoxy]carbonyl}phenyl)oxalate, bis(3,4,6-trichloro-2-{[(4-methylphenyl)methoxy]carbonyl}phenyl)oxalate, bis(3,4,6-trichloro-2-{[(2,3-dimethylphenyl)methoxy]carbonyl}phenyl)oxalate, bis(3,4,6-trichloro-2-{[(2,4-dimethylphenyl)methoxy]carbonyl}phenyl)oxalate, bis(3 ,4,6-trichloro-2-{[3,4-dimethylphenyl)methoxy]carbonyl}phenyl)oxalate, bis(3,4,6-trichloro-2-{[(3,5-dimethylphenyl)methoxy]carbonyl}phenyl)oxalate, bis(3,4,6-trichloro-2-{[(2,6-dimethylphenyl)methoxy]carbonyl}phenyl)oxalate, bis(3,4,6-trichloro-2-{[(2-ethylphenyl)methoxy]carbonyl}phenyl)oxalate, bis(3,4,6- trichloro-2-{[(3-ethylphenyl)methoxy]carbonyl} phenyl)oxalate, bis(3,4,6-trichloro-2-{[(4-ethylphenyl)methoxy]carbonyl}phenyl)oxalate, bis(3,4,6-trichloro-2-{[2-(2-methylphenyl)ethoxy]carbonyl}phenyl)oxalate, bis(3,4,6-trichloro-2-{[2-(3-methylphenyl)ethoxy]carbonyl}phenyl)oxalate, bis(3,4,6-trichloro-2-{[2-(4-methylphenyl)ethoxy]carbonyl}phenyl)oxalate, bis{3,4,6-trichloro-2-[(2-phenylpropoxy)carbonyl]phenyl}oxalate, bis{3,4,6-trichloro-2-[(3-phenylpropoxy)carbonyl]phenyl}oxalate, bis{3,4,6-trichloro-2-[1-naphthalenylmethoxy)carbonyl]phenyl}oxalate, bis{3,4,6-trichloro-2-[2-naphthalenylmethoxy)carbonyl]phenyl}oxalate, bis{3,4,6-trichloro-2-[(2,2-diphenylethoxy)carbonyl]phenyl}oxalate, bis{3,4,6-trichloro-2-[(9-fluorenylmethoxy)carbonyl]phenyl}oxalate, and bis{3,4,6-trichloro-2-[(9-anthracenylmethoxy)carbonyl]phenyl}oxalate.

In some embodiments of the present disclosure, the at least one fluorescer is selected from the group consisting of: 1-methoxy-9,10-bis(phenylethynyl)anthracene, perylene, rubrene, 16,17-didecycloxyviolanthrone, 2-ethyl-9,10-bis(phenylethynyl)anthracene; 2-chloro-9,10-bis(4-ethoxyphenyl)anthracene, 2-chloro-9,10-bis(4-methoxyphenyl)anthracene, 9,10-bis(phenylethynyl)anthracene, 1-chloro-9,10-bis(phenylethynyl)anthracene, 1,8-dichloro-9,10-bis(phenylethynyl)anthracene, 1,5-dichloro-9,10-bis(phenylethynyl)anthracene, 2,3-dichloro-9,10-bis(phenylethynyl)anthracene, 5,12-bis(phenylethynyl)tetracene, 9,10-diphenylanthracene, 1,6,7,12-tetraphenoxy-N,N'-bis(2,6-diisopropylphenyl)-3,4,9,10-perylene dicarboximide, 1,6,7,12-tetraphenoxy-N,N'bis(2,5-di-t-butylphenyl)-3,4,9,10-perylene dicarboximide, 1,7-dichloro-6,12-diphenoxy-N,N'-bis(2,6-diisopropylphenyl)-3,4,9,10-perylene dicarboximide, 1,6,7,12-tetra(p-bromophenoxy)-N,N'-bis(2,6-diisopropylphenyl)-3 ,4,9,10-perylene dicarboximide, 1,6,7,12-tetraphenoxy-N,N'dineopentyl-3,4,9,10-perylene dicarboximide, 1,6,7,12-tetra-(p-t-butylphenoxy)-N,N'-dineopentyl-3,4,9,10-perylenedicarboximide, 1,6,7,12-tetra(o-chlorophenoxy)-N,N'-bis(2,6-diisopropylphenyl)-3,4,9,10-perylene dicarboximide; 1,6,7,12-tetra(p-chlorophenoxy)-N,N'-bis(2,6-diisopropylphenyl)-3,4,9,10-perylene dicarboximide, 1,6,7,12-tetra(o-fluorophenoxy)-N,N'-bis(2,6-diisopropylphenyl)-3,4,9,10-perylene dicarboximide, 1,6,7,12-tetra(p-fluorophenoxy)-N,N' -bis(2,6-diisopropylphenyl)-3 ,4,9,10-perylenedicarboximide, 1,6,7,12-tetraphenoxy-N,N'-diethyl-3,4,9,10-perylene dicarboximide, 1,7-dibromo-6,12-diphenoxy-N,N'-bis(2-isopropylphenyl)-3,4,9,10-perylene dicarboximide, 16,17-dihexyloxyviolanthrone, and 1,4-dimethyl-9,10-bis(phenylethynyl)anthracene.

In some embodiments of the present disclosure, the at least one inorganic salt is selected from the group consisting of: sodium thiosulphate, potassium thiosulphate, cobalt acetate, copper acetate, lead acetate, cupric chloride, ferric chloride, calcium iodide, potassium iodide, and silver nitrate.

In some embodiments of the present disclosure, the at least one fluorescer is present in an amount ranging from 0.05 to 0.9 percent by weight based on the total weight of the oxalate system.

### Mixed Catalyst Systems and Methods for Chemiluminescent Reactions

In some embodiments of the present disclosure, the term "activation" and variations thereof, as used herein, means that the oxalate system (e.g., containing at least one suitable oxalate ester with at least one dye in a suitable solvent with or without other components known to one skilled in the art) and the activator system of the present disclosure have been sufficiently combined such as by mixing to provide useable light.

In some embodiments of the present disclosure, the present disclosure relates to a mixed catalyst system for an oxalate ester chemiluminescent system. In some embodiments of the present disclosure, the combination of two catalysts in a chemiluminescent system would be expected to yield an average of each catalyst's performance profile.

In some embodiments of the present disclosure, the present disclosure relates to a chemiluminescent system that includes an activator system and an oxalate system, where the activator system includes at least two different catalysts, where a first catalyst includes a benzyl amine and a second catalyst includes a salicylate or benzoate derivative, and where the activator system includes a first solvent, a peroxide, and a second solvent.

In some embodiments of the present disclosure, the benzyl amine is selected from the group consisting of dialkylbenzyl amines including, but not restricted to, dimethylbenzylamine, N,N-dimethyl-1-phenylethylamine, N-ethyl-N-methylbenzylamine, diethylbenzylamine, N-methyl-N-propylbenzylamine, N,N-dibutylbenzylamine, and N,N-bis(1-methylethyl)benzenemethanamine.

In some embodiments of the present disclosure, the benzyl amine is present in a concentration ranging from 10 percent to 0.001 percent of the total weight of the combined activator system and oxalate system.

In some embodiments of the present disclosure, the benzyl amine is selected from the group consisting of alkyldibenzyl amines including, but not restricted to, methyl dibenzylamine, ethyl dibenzylamine, n-propyl dibenzylamine, iso-propyl dibenzylamine, butyl dibenzylamine, iso-butyl dibenzylamine, N,N-dibenzyl-2-phenylethanamine, and hexyl dibenzylamine.

In some embodiments of the present disclosure, the benzyl amine is present in a concentration ranging from 10 percent to 0.001 percent of the total weight of the combined activator system and oxalate system.

In some embodiments of the present disclosure, the benzyl amine selected from the group consisting of tribenzyl amines; tribenzyl amine, 4-methyl-N,N-bis[(4-methylphenyl)methyl]benzenemethanamine, and 4-methyl-N,N-bis(phenylmethyl)benzenemethanamine.

In some embodiments of the present disclosure, the benzyl amine is present in a concentration ranging from 10 percent to 0.001 percent of the total weight of the combined activator system and oxalate system.

In some embodiments of the present disclosure, the benzyl amine is selected from the group consisting of alkylarylbenzyl amines, N-methyl-N-phenylbenzenemethanamine, N-ethyl-N-phenylbenzenemethanamine, N,4-dimethyl-N-phenylbenzenemethanamine, and N-propyl-N-phenylbenzenemethanamine.

In some embodiments of the present disclosure, the benzyl amine is present in a concentration ranging from 10 percent to 0.001 percent of the total weight of the combined activator system and oxalate system.

In some embodiments of the present disclosure, the benzyl amine is selected from the group consisting of diarylbenzyl amines; N, N-diphenylbenzenemethanamine, and N,N-bis(4-methylphenyl)benzenemethanamine.

In some embodiments of the present disclosure, the benzyl amine is present in a concentration ranging from 10 percent to 0.001 percent of the total weight of the combined activator system and oxalate system.

In some embodiments of the present disclosure, the benzoate derivative is selected from the group consisting of lithium benzoate, sodium benzoate, potassium benzoate, and cesium benzoate.

In some embodiments of the present disclosure, the benzoate derivative is present in a concentration ranging from 5 percent to 0.0005 percent of the total weight of the combined activator system and oxalate system.

In some embodiments of the present disclosure, the salicylate derivative is selected from the group consisting of lithium salicylate, sodium salicylate, potassium salicylate, cesium salicylate, lithium o-anisate, sodium o-anisate, potassium o-anisate, cesium o-anisate, lithium p-anisate, sodium p-anisate, potassium p-anisate, and cesium p-anisate.

In some embodiments of the present disclosure, the catalysts are dissolved in a first solvent selected from the group consisting of trialkyl citrates, dialkyl phthalates, glycols, and glycol ethers.

In some embodiments of the present disclosure, the at least one peroxide is selected from the group consisting of hydrogen peroxide, sodium peroxide, lithium peroxide, sodium perborate, sodium pyrophosphate peroxide, urea peroxide, histidine peroxide, t-butyl-hydroperoxide, peroxybenzoic acid, and sodium percarbonate.

In some embodiments of the present disclosure, the at least one peroxide is present in a concentration ranging from 1.5 percent to 12 percent of the total weight of the combined activator system and oxalate system.

In some embodiment, the catalysts are dissolved in a second solvent configured to allow sufficient mixing of the at least one peroxide, where the second solvent is selected from the group consisting of tert-butanol, 3-methyl-3-pentanol, 2-methyl-2-butanol, ethyl 2-hydroxyisobutyrate, alkyl 2-hydroxyisobutyrate, and methyl 2-hydroxyisobutyrate; glycols; ethylene glycol and propylene glycol; and glycol ethers; ethylene glycol monomethyl ether, ethylene glycol diethyl ether, ethylene glycol monobutyl ether, ethylene glycol dibutyl ether, and propylene glycol dimethyl ether.

In some embodiments of the present disclosure, the first solvent is present in a concentration ranging from 0 percent to 90 percent of the total weight of the combined activator system and oxalate system. In some embodiments of the present disclosure, the first solvent is present in an amount ranging from 10 percent to 97 percent of the total weight of the combined activator system and oxalate system.

In some embodiments of the present disclosure, the second solvent is present in a concentration ranging from 0 percent to 90 percent of the total weight of the combined activator system and oxalate system. In some embodiments of the present disclosure, the second solvent is present in an amount ranging from 10 percent to 97 percent of the total weight of the combined activator system and oxalate system.

In some embodiments of the present disclosure, the mixed catalyst activator system of the present disclosure in configured to generate the useable light having output characteristics as described herein.

In some embodiments of the present disclosure, the system and method of the present disclosure may include, but are not limited to, at least one activator system combined with at least one oxalate system. Combining may include any suitable method of contacting one system with another system such as by mixing or equivalent. In some embodiments of the present disclosure, the oxalate system may include, but is not limited to, an oxalate solution with at least one oxalate ester, at least one dye such as a fluorescer, and at least one solvent. In some embodiments of the present disclosure, the activator system may include, but is not limited to, a catalytic system comprising at least two different catalysts, at least one first part comprising a benzyl amine and at least one second part comprising a salicylate (or benzoate) derivative; at least one solvent; a peroxide; and a bridging solvent, if necessary.

In some embodiments of the present disclosure, the ratio of the weight of the oxalate system to the weight of the activator system ranges from 1:9 to 4:1. In some embodiments of the present disclosure, the ratio of the weight of the oxalate system to the weight of the activator system ranges from 1:5 to 2:1. In some embodiments of the present disclosure, the ratio of the weight of the oxalate system to the weight of the activator system ranges from 1:1 to 3:1. In some embodiments of the present disclosure, the ratio of the weight of the oxalate system to the weight of the activator system ranges from 1:3 to 3:1. In some embodiments of the present disclosure, the ratio of the weight of the oxalate system to the weight of the activator system ranges from 1:2 to 2:1. In some embodiments of the present disclosure, the ratio of the weight of the oxalate system to the weight of the activator system ranges from 2:1 to 4:1. In some embodiments of the present disclosure, the ratio of the weight of the oxalate system to the weight of the activator system ranges from 1:6 to 2:1. In some embodiments of the present disclosure, the ratio of the weight of the oxalate system to the weight of the activator system ranges from 1:1 to 4:1.

In some embodiments of the present disclosure, the ratio of the weight of the oxalate system to the weight of the activator system is 1:2. In some embodiments of the present disclosure, the ratio of the weight of the oxalate system to the weight of the activator system is 2:1. In some embodiments of the present disclosure, the ratio of the weight of the oxalate system to the weight of the activator system is 3:1. In some embodiments of the present disclosure, the ratio of the weight of the oxalate system to the weight of the activator system is 1:8. In some embodiments of the present disclosure, the ratio of the weight of the oxalate system to the weight of the activator system is 1:9. In some embodiments of the present disclosure, the ratio of the weight of the oxalate system to the weight of the activator system is 4:1. In some embodiments of the present disclosure, the ratio of the weight of the oxalate system to the weight of the activator system is 8:2. In some embodiments of the present disclosure, the ratio of the weight of the oxalate system to the weight of the activator system is 1:5. In some embodiments of the present disclosure, the ratio of the weight of the oxalate system to the weight of the activator system is 1:3.

In some embodiments of the present disclosure, the benzyl amine may include, but is not limited to, dialkylbenzyl amines including, but not restricted to, dimethylbenzylamine, N,N-dimethyl-1-phenylethylamine, N-ethyl-N-methylbenzylamine, diethylbenzylamine, N-methyl-N-propylbenzylamine, N,N-dibutylbenzylamine, and/or N,N-bis(1-methylethyl)benzenemethanamine; alkyldibenzyl amines including, but not restricted to, methyl dibenzylamine, ethyl dibenzylamine, n-propyl dibenzylamine, iso-propyl dibenzylamine, butyl dibenzylamine, iso-butyl dibenzylamine, N,N-dibenzyl-2-phenylethanamine, and/or hexyl dibenzylamine; and/or tribenzyl amines including, but not restricted to tribenzyl amine, 4-methyl-N,N-bis[(4-methylphenyl)methyl]benzenemethanamine, and 4-methyl-N,N-bis(phenylmethyl)benzenemethanamine; alkylarylbenzyl amines including, but not restricted to, N-methyl-N-phenylbenzenemethanamine, N-ethyl-N-phenylbenzenemethanamine, N,4-dimethyl-N-phenylbenzenemethanamine, and/or N-propyl-N-phenylbenzenemethanamine;

In some embodiments of the present disclosure, the benzyl amine is present in a concentration ranging from 10 percent to 0.001 percent by weight, based on the total weight of the combined activator system and oxalate system. In some embodiments of the present disclosure, the benzyl amine is present in a concentration ranging from 5 percent to 0.001 percent by weight, based on the total weight of the combined activator system and oxalate system. In some embodiments of the present disclosure, the benzyl amine is present in a concentration ranging from 1 percent to 0.001 percent by weight, based on the total weight of the combined activator system and oxalate system.

In some embodiments of the present disclosure, the benzyl amine is present in a concentration ranging from 5 percent to 0.1 percent by weight, based on the total weight of the combined activator system and oxalate system. In some embodiments of the present disclosure, the benzyl amine is present in a concentration ranging from 2 percent to 1 percent by weight, based on the total weight of the combined activator system and oxalate system. In some embodiments of the present disclosure, the benzyl amine is present in a concentration ranging from 10 percent to 3 percent by weight, based on the total weight of the combined activator system and oxalate system. In some embodiments of the present disclosure, the benzyl amine is present in a concentration ranging from 5 percent to 1 percent by weight, based on the total weight of the combined activator system and oxalate system. In some embodiments of the present disclosure, the benzyl amine is present in a concentration ranging from 7 percent to 2 percent by weight, based on the total weight of the combined activator system and oxalate system.

In some embodiments of the present disclosure, the benzyl amine is present at 10 percent by weight, based on the total weight of the combined activator system and oxalate system. In some embodiments of the present disclosure, the benzyl amine is present at 7 percent by weight, based on the total weight of the combined activator system and oxalate system. In some embodiments of the present disclosure, the benzyl amine is present at 5 percent by weight, based on the total weight of the combined activator system and oxalate system. In some embodiments of the present disclosure, the benzyl amine is present at 2 percent by weight, based on the total weight of the combined activator system and oxalate system. In some embodiments of the present disclosure, the benzyl amine is present at 1 percent by weight, based on the total weight of the combined activator system and oxalate system. In some embodiments of the present disclosure, the benzyl amine is present at 0.1 percent by weight, based on the total weight of the combined activator system and oxalate system. In some embodiments of the present disclosure, the benzyl amine is present at 0.001 percent by weight, based on the total weight of the combined activator system and oxalate system.

In some embodiments of the present disclosure, the benzyl amine is present at the weight percents and the weight percent ranges detailed above, based on the weight of the activator system.

In some embodiments of the present disclosure, the benzoate derivative is chosen from a group including, but not restricted to, lithium benzoate, sodium benzoate, potassium benzoate, and cesium benzoate.

In some embodiments of the present disclosure, the benzoate derivative is present at a concentration ranging from 5% to 0.0005% by weight, based on the total weight of the combined activator system and oxalate system. In some embodiments of the present disclosure, the benzoate derivative is present at a concentration ranging from 2% to 0.1% by weight, based on the total weight of the combined activator system and oxalate system. In some embodiments of the present disclosure, the benzoate derivative is present at a concentration ranging from 1% to 0.0005% by weight, based on the total weight of the combined activator system and oxalate system. In some embodiments of the present disclosure, the benzoate derivative is present at a concentration ranging from 5% to 2% by weight, based on the total weight of the combined activator system and oxalate system. In some embodiments of the present disclosure, the benzoate derivative is present at a concentration ranging from 0.7% to 0.0005% by weight, based on the total weight of the combined activator system and oxalate system. In some embodiments of the present disclosure, the benzoate derivative is present at a concentration ranging from 0.5% to 0.05% by weight, based on the total weight of the combined activator system and oxalate system. In some embodiments of the present disclosure, the benzoate derivative is present at a concentration ranging from 5% to 3% by weight, based on the total weight of the combined activator system and oxalate system.

In some embodiments of the present disclosure, the benzoate derivative is present at 5% by weight, based on the total weight of the combined activator system and oxalate system. In some embodiments of the present disclosure, the benzoate derivative is present at 0.5% by weight, based on the total weight of the combined activator system and oxalate system. In some embodiments of the present disclosure, the benzoate derivative is present at 0.05% by weight, based on the total weight of the combined activator system and oxalate system. In some embodiments of the present disclosure, the benzoate derivative is present at 0.005% by weight, based on the total weight of the combined activator system and oxalate system. In some embodiments of the present disclosure, the benzoate derivative is present at 0.0005% by weight, based on the total weight of the combined activator system and oxalate system. In some embodiments of the present disclosure, the benzoate derivative is present at 2% by weight, based on the total weight of the combined activator system and oxalate system. In some embodiments of the present disclosure, the benzoate derivative is present at 3% by weight, based on the total weight of the combined activator system and oxalate system.

In some embodiments of the present disclosure, the benzoate derivative is present at the weight percents and the weight percent ranges detailed above, based on the weight of the activator system.

In some embodiments of the present disclosure, salicylate derivative is chosen from a group including, but not restricted to, lithium salicylate, sodium salicylate, potassium salicylate, cesium salicylate, lithium o-anisate, sodium o-anisate, potassium o-anisate, cesium o-anisate, lithium p-anisate, sodium p-anisate, potassium p-anisate, and/or cesium p-anisate.
In some embodiments of the present disclosure, the salicylate derivative is present at a concentration ranging from 5% to 0.0005% by weight, based on the total weight of the combined activator system and oxalate system. In some embodiments of the present disclosure, the salicylate derivative is present at a concentration ranging from 2% to 0.1% by weight, based on the total weight of the combined activator system and oxalate system. In some embodiments of the present disclosure, the salicylate derivative is present at a concentration ranging from 1% to 0.0005% by weight, based on the total weight of the combined activator system and oxalate system. In some embodiments of the present disclosure, the salicylate derivative is present at a concentration ranging from 5% to 2% by weight, based on the total weight of the combined activator system and oxalate system. In some embodiments of the present disclosure, the salicylate derivative is present at a concentration ranging from 0.7% to 0.0005% by weight, based on the total weight of the combined activator system and oxalate system. In some embodiments of the present disclosure, the salicylate derivative is present at a concentration ranging from 0.5% to 0.05% by weight, based on the total weight of the combined activator system and oxalate system. In some embodiments of the present disclosure, the salicylate derivative is present at a concentration ranging from 5% to 3% by weight, based on the total weight of the combined activator system and oxalate system.

In some embodiments of the present disclosure, the salicylate derivative is present at 5% by weight, based on the total weight of the combined activator system and oxalate system. In some embodiments of the present disclosure, the salicylate derivative is present at 0.5% by weight, based on the total weight of the combined activator system and oxalate system. In some embodiments of the present disclosure, the salicylate derivative is present at 0.05% by weight, based on the total weight of the combined activator system and oxalate system. In some embodiments of the present disclosure, the salicylate derivative is present at 0.005% by weight, based on the total weight of the combined activator system and oxalate system. In some embodiments of the present disclosure, the salicylate derivative is present at 0.0005% by weight, based on the total weight of the combined activator system and oxalate system. In some embodiments of the present disclosure, the salicylate derivative is present at 2% by weight, based on the total weight of the combined activator system and oxalate system. In some embodiments of the present disclosure, the salicylate derivative is present at 3% by weight, based on the total weight of the combined activator system and oxalate system.

In some embodiments of the present disclosure, the salicylate derivative is present at the weight percents and the weight percent ranges detailed above, based on the weight of the activator system.

In some embodiments of the present disclosure, the at least one solvent for the activator system may include, but is not limited to, trialkyl citrates, dialkyl phthalates and any combination thereof.

In some embodiments of the present disclosure, the at least one first solvent is present in an amount ranging from 0 percent to 95 percent of the total weight of the activator system. In some embodiments of the present disclosure, the at least one first solvent is present in an amount ranging from 10 percent to 97 percent of the total weight of the activator system. In some embodiments of the present disclosure, the at least one first solvent is present in an amount ranging from 10 percent to 80 percent of the total weight of the activator system. In some embodiments of the present disclosure, the at least one first solvent is present in an amount ranging from 10 percent to 60 percent of the total weight of the activator system. In some embodiments of the present disclosure, the at least one first solvent is present in an amount ranging from 30 percent to 90 percent of the total weight of the activator system. In some embodiments of the present disclosure, the at least one first solvent is present in an amount ranging from 15 percent to 90 percent of the total weight of the activator system. In some embodiments of the present disclosure, the at least one first solvent is present in an amount ranging from 50 percent to 95 percent of the total weight of the activator system. In some embodiments of the present disclosure, the at least one first solvent is present in an amount ranging from 0 percent to 10 percent of the total weight of the activator system. In some embodiments of the present disclosure, the at least one first solvent is present in an amount ranging from 95 percent to 0 percent of the total weight of the activator system.

In some embodiments of the present disclosure, the at least one first solvent is present at 0 percent of the total weight of the activator system. In some embodiments of the present disclosure, the at least one first solvent is present at 20 percent of the total weight of the activator system. In some embodiments of the present disclosure, the at least one first solvent is present at 40 percent of the total weight of the activator system. In some embodiments of the present disclosure, the at least one first solvent is present at 60 percent of the total weight of the activator system. In some embodiments of the present disclosure, the at least one first solvent is present at 95 percent of the total weight of the activator system.
In some embodiments of the present disclosure, the at least one second solvent is present in an amount ranging from 0 percent to 95 percent of the total weight of the activator system. In some embodiments of the present disclosure, the at least one second solvent is present in an amount ranging from 10 percent to 97 percent of the total weight of the activator system. In some embodiments of the present disclosure, the at least one second solvent is present in an amount ranging from 10 percent to 80 percent of the total weight of the activator system. In some embodiments of the present disclosure, the at least one second solvent is present in an amount ranging from 10 percent to 60 percent of the total weight of the activator system. In some embodiments of the present disclosure, the at least one second solvent is present in an amount ranging from 30 percent to 90 percent of the total weight of the activator system. In some embodiments of the present disclosure, the at least one second solvent is present in an amount ranging from 15 percent to 90 percent of the total weight of the activator system. In some embodiments of the present disclosure, the at least one second solvent is present in an amount ranging from 50 percent to 95 percent of the total weight of the activator system. In some embodiments of the present disclosure, the at least one second solvent is present in an amount ranging from 0 percent to 10 percent of the total weight of the activator system. In some embodiments of the present disclosure, the at least one second solvent is present in an amount ranging from 95 percent to 0 percent of the total weight of the activator system.

In some embodiments of the present disclosure, the at least one second solvent is present at 0 percent of the total weight of the activator system. In some embodiments of the present disclosure, the at least one second solvent is present at 20 percent of the total weight of the activator system. In some embodiments of the present disclosure, the at least one second solvent is present at 40 percent of the total weight of the activator system. In some embodiments of the present disclosure, the at least one second solvent is present at 60 percent of the total weight of the activator system. In some embodiments of the present disclosure, the at least one second solvent is present at 95 percent of the total weight of the activator system.

In some embodiments of the present disclosure, the at least one third solvent is present in an amount ranging from 0 percent to 95 percent of the total weight of the activator system. In some embodiments of the present disclosure, the at least one third solvent is present in an amount ranging from 10 percent to 97 percent of the total weight of the activator system. In some embodiments of the present disclosure, the at least one third solvent is present in an amount ranging from 10 percent to 80 percent of the total weight of the activator system. In some embodiments of the present disclosure, the at least one third solvent is present in an amount ranging from 10 percent to 60 percent of the total weight of the activator system. In some embodiments of the present disclosure, the at least one third solvent is present in an amount ranging from 30 percent to 90 percent of the total weight of the activator system. In some embodiments of the present disclosure, the at least one third solvent is present in an amount ranging from 15 percent to 90 percent of the total weight of the activator system. In some embodiments of the present disclosure, the at least one third solvent is present in an amount ranging from 50 percent to 95 percent of the total weight of the activator system. In some embodiments of the present disclosure, the at least one third solvent is present in an amount ranging from 0 percent to 10 percent of the total weight of the activator system. In some embodiments of the present disclosure, the at least one third solvent is present in an amount ranging from 95 percent to 0 percent of the total weight of the activator system.

In some embodiments of the present disclosure, the at least one third solvent is present at 0 percent of the total weight of the activator system. In some embodiments of the present disclosure, the at least one third solvent is present at 20 percent of the total weight of the activator system. In some embodiments of the present disclosure, the at least one third solvent is present at 40 percent of the total weight of the activator system. In some embodiments of the present disclosure, the at least one third solvent is present at 60 percent of the total weight of the activator system. In some embodiments of the present disclosure, the at least one third solvent is present at 95 percent of the total weight of the activator system.

In some embodiments of the present disclosure, the peroxide may include, but is not limited to, hydrogen peroxide, sodium peroxide, lithium peroxide, sodium perborate, sodium pyrophosphate peroxide, urea peroxide, histidine peroxide, t-butyl-hydroperoxide, peroxybenzoic acid, and sodium percarbonate or any combination thereof.

In some embodiments of the present disclosure, the peroxide is present in an amount ranging from 1.5 percent to 25 percent by weight, based on the total weight of the combined activator system and oxalate system. In some embodiments of the present disclosure, the peroxide is present in an amount ranging from 5 percent to 25 percent by weight, based on the total weight of the combined activator system and oxalate system. In some embodiments of the present disclosure, the peroxide is present in an amount ranging from 2 percent to 20 percent by weight, based on the total weight of the combined activator system and oxalate system. In some embodiments of the present disclosure, the peroxide is present in an amount ranging from 10 percent to 15 percent by weight, based on the total weight of the combined activator system and oxalate system. In some embodiments of the present disclosure, the peroxide is present in an amount ranging from1.55 percent to 5 percent by weight, based on the total weight of the combined activator system and oxalate system.

In some embodiments of the present disclosure, the peroxide is present at 1.5 percent by weight, based on the total weight of the combined activator system and oxalate system. In some embodiments of the present disclosure, the at least one peroxide is present at 3 percent by weight, based on the total weight of the combined activator system and oxalate system. In some embodiments of the present disclosure, the peroxide is present at 5 percent by weight, based on the total weight of the combined activator system and oxalate system. In some embodiments of the present disclosure, the peroxide is present at 10 percent by weight, based on the total weight of the combined activator system and oxalate system. In some embodiments of the present disclosure, the peroxide is present at 20 percent by weight, based on the total weight of the combined activator system and oxalate system. In some embodiments of the present disclosure, the peroxide is present at 25 percent by weight, based on the total weight of the combined activator system and oxalate system.

In some embodiments of the present disclosure, the peroxide is present at the weight percents and the weight percent ranges detailed above, based on the weight of the activator system.

In some embodiments of the present disclosure, the bridging solvent may include, but is not limited to, tert-butanol, 3-methyl-3-pentanol, 2-methyl-2-butanol, ethyl 2-hydroxyisobutyrate, alkyl 2-hydroxyisobutyrate and methyl 2-hydroxyisobutyrate; glycols chosen from, but not restricted to ethylene glycol and propylene glycol; and glycol ethers chosen from, but not restricted to ethylene glycol monomethyl ether, ethylene glycol diethyl ether, ethylene glycol monobutyl ether, ethylene glycol dibutyl ether, and propylene glycol dimethyl ether or any combination thereof.

In some embodiments of the present disclosure, the bridging solvent is present in an amount ranging from 0 percent to 95 percent of the total weight of the activator system. In some embodiments of the present disclosure, the bridging solvent is present in an amount ranging from 10 percent to 80 percent of the total weight of the activator system. In some embodiments of the present disclosure, the bridging solvent is present in an amount ranging from 10 percent to 60 percent of the total weight of the activator system. In some embodiments of the present disclosure, the bridging solvent is present in an amount ranging from 30 percent to 90 percent of the total weight of the activator system. In some embodiments of the present disclosure, the bridging solvent is present in an amount ranging from 15 percent to 90 percent of the total weight of the activator system. In some embodiments of the present disclosure, the bridging solvent is present in an amount ranging from 50 percent to 95 percent of the total weight of the activator system. In some embodiments of the present disclosure, the bridging solvent is present in an amount ranging from 0 percent to 10 percent of the total weight of the activator system.

In some embodiments of the present disclosure, the bridging solvent is present at 0 percent of the total weight of the activator system. In some embodiments of the present disclosure, the bridging solvent is present at 20 percent of the total weight of the activator system. In some embodiments of the present disclosure, the bridging solvent is present at 40 percent of the total weight of the activator system. In some embodiments of the present disclosure, the bridging solvent is present at 60 percent of the total weight of the activator system. In some embodiments of the present disclosure, the bridging solvent is present at 95 percent of the total weight of the activator system.

### Non-limiting examples

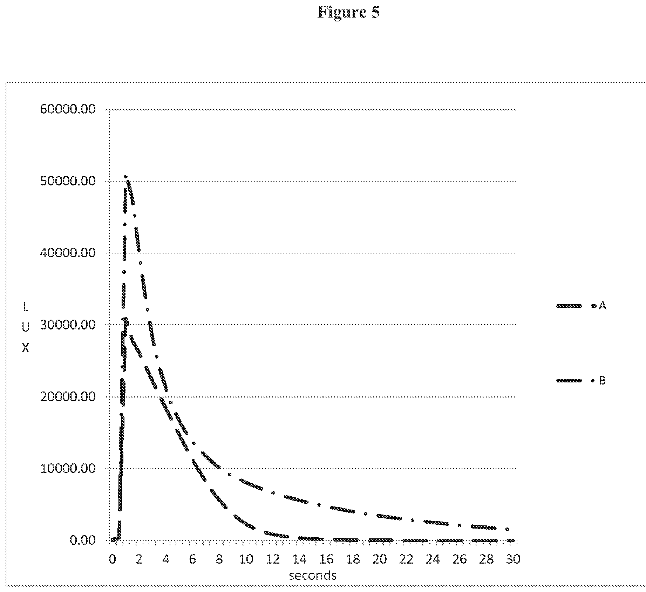

FIG. 5 represents the chemical light output at room temperature of a standard oxalate ester system having a rubrene fluorescer (dye) and an activator system containing 0.2 percent of sodium salicylate in triethyl citrate (TEC) with 2.3 percent peroxide content using 50 percent aqueous hydrogen peroxide (A) and the chemical light output at room temperature of a standard oxalate ester system with rubrene fluorescer (dye) and an activator system containing 0.2 percent of tribenzyl amine in triethyl citrate (TEC) with 2.3 percent peroxide content using 50 percent aqueous hydrogen peroxide (B).

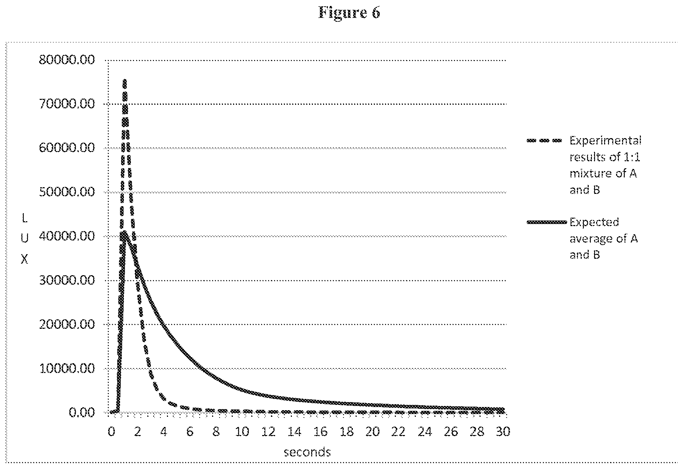

FIG. 6 represents the chemical light output at room temperature of the average of the two results in Figure 5 and the chemical light output of a standard oxalate ester system with rubrene fluorescer (dye) and an activator system containing a 1:1 mixture of A and B shown in Figure 5 such that the total amount of catalyst is unchanged.

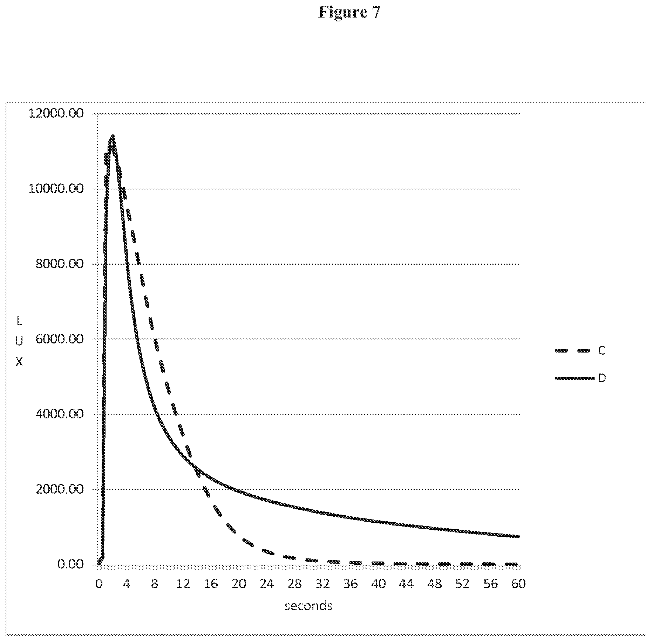

FIG. 7 represents the chemical light output at room temperature of a standard oxalate ester system with rubrene fluorescer (dye) and an activator system containing 0.1 percent of sodium salicylate in triethyl citrate (TEC) with 2.3 percent peroxide content using 70 percent aqueous hydrogen peroxide (C) and the chemical light output at room temperature of a standard oxalate system with rubrene fluorescer (dye) and an activator system containing 0.1 g of tribenzyl amine in triethyl citrate (TEC) with 2.3 percent peroxide content using 70 percent aqueous hydrogen peroxide (D).

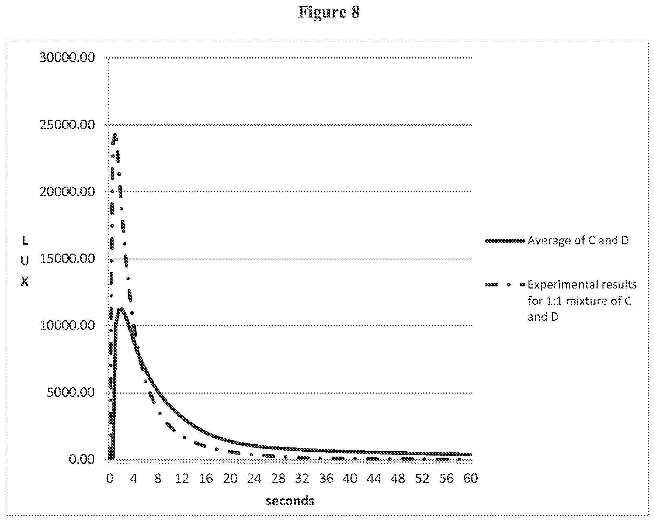

FIG. 8 represents the chemical light output at room temperature of the average of the two results in Figure 7 and the chemical light output of a standard oxalate ester system with rubrene fluorescer (dye) and an activator system containing a 1:1 mixture of C and D shown in Figure 7 such that the total amount of catalyst is unchanged. The tests were conducted measuring the light output with an ILT 1700 light meter.

In some embodiments of the present disclosure, the present disclosure provides a chemiluminescent system, including: an activator system, including: (a) at least one first catalyst including at least one benzyl amine; (b) at least one second catalyst including at least one of: (i) a salicylate derivative, and (ii) a benzoate derivative; (c) at least one first solvent, and (d) at least one peroxide, where the at least one first catalyst is present in an amount ranging from 1 to 99 percent by weight of a combination of the at least one first catalyst and the at least one second catalyst; where the at least one second catalyst is present in an amount ranging from 99 to 1 percent by weight of the combination of the at least one first catalyst and the at least one second catalyst; where a total concentration of the combination ranges from 0.002 to 25 percent by weight based on a total weight of the activator system; and where the chemiluminescent system has at least one chemiluminescent property.

In some embodiments of the present disclosure, the present disclosure further provides an oxalate system, providing: (a) at least one oxalate ester, (b) at least one second solvent, (c) at least one fluorescer, and (d) at least one inorganic salt, where a ratio of a weight of the oxalate system to a weight of the activator system ranges from 1:9 to 4:1.

In some embodiments of the present disclosure, the at least one benzyl amine is selected from the group consisting of: dialkylbenzyl amines, alkyldibenzyl amines, tribenzyl amines, alkylarylbenzyl amines, and diarylbenzyl amines. In some embodiments of the present disclosure, the amount of the at least one benzyl amine ranges from 10 to 0.001 percent by weight based on the total weight of the chemiluminescent system.

In some embodiments of the present disclosure, the salicylate derivative is selected from the group consisting of: lithium salicylate, sodium salicylate, potassium salicylate, cesium salicylate, lithium o-anisate, sodium o-anisate, potassium o-anisate, cesium o-anisate, lithium p-anisate, sodium p-anisate, potassium p-anisate, and cesium p-anisate. In some embodiments of the present disclosure, the amount of the salicylate derivative ranges from 5 to 0.0005 percent by weight based on the total weight of the chemiluminescent system.

In some embodiments of the present disclosure, the benzoate derivative is selected from the group consisting of: lithium benzoate, sodium benzoate, potassium benzoate, and cesium benzoate. In some embodiments of the present disclosure, the amount of the benzoate derivative ranges from 5 to 0.0005 percent by weight based on the total weight of the chemiluminescent system.

In some embodiments of the present disclosure, the at least one first solvent is selected from the group consisting of: trialkyl citrates, dialkyl phthalates, glycols, glycol ethers, and a combination thereof. In some embodiments of the present disclosure, the amount of the at least one first solvent ranges from 15 to 90 percent by weight based on the total weight of the chemiluminescent system.

In some embodiments of the present disclosure, the at least one peroxide is selected from the group consisting of: hydrogen peroxide, sodium peroxide, lithium peroxide, sodium perborate, sodium pyrophosphate peroxide, urea peroxide, histidine peroxide, t-butyl-hydroperoxide, peroxybenzoic acid, and sodium percarbonate. In some embodiments of the present disclosure, the amount of the at least one peroxide ranges from 1.5 to 12 percent by weight based on the total weight of the chemiluminescent system.

In some embodiments of the present disclosure, the at least one second solvent (e.g., bridging solvent) is selected from the group consisting of tert-butanol, 3-methyl-3-pentanol, 2-methyl-2-butanol, ethyl 2-hydroxyisobutyrate, alkyl 2-hydroxyisobutyrate, methyl 2-hydroxyisobutyrate, ethylene glycol, propylene glycol, ethylene glycol monomethyl ether, ethylene glycol diethyl ether, ethylene glycol monobutyl ether, ethylene glycol dibutyl ether, and propylene glycol dimethyl ether. In some embodiments of the present disclosure, the amount of the at least one second solvent ranges from 15 to 90 percent by weight based on the total weight of the chemiluminescent system.

In some embodiments of the present disclosure, the present disclosure further provides a third solvent, where the third solvent is selected from the group consisting of: tert-butanol, 3-methyl-3-pentanol, 2-methyl-2-butanol, ethyl 2-hydroxyisobutyrate, methyl 2-hydroxyisobutyrate, alkyl 2-hydroxyisobutyrate, ethylene glycol, propylene glycol, ethylene glycol monomethyl ether, ethylene glycol diethyl ether, ethylene glycol monobutyl ether, ethylene glycol dibutyl ether, propylene glycol dimethyl ether, and a combination thereof. In some embodiments of the present disclosure, the amount of the third solvent ranges from 15 to 90 percent by weight based on the total weight of the chemiluminescent system.

In some embodiments of the present disclosure, the present disclosure provides a chemiluminescent system, including: an activator system, including: (a) at least one first catalyst including at least one benzyl amine; (b) at least one second catalyst including at least one of: (i) a salicylate derivative, and (ii) a benzoate derivative; and where the chemiluminescent system is configured to exceed an expected illuminescence produced when a combination of at least one first catalyst and at least one second catalyst is utilized.

While a number of embodiments of the present disclosure have been described, it is understood that these embodiments are illustrative only, and not restrictive, and that many modifications may become apparent to those of ordinary skill in the art. Further still, the various steps may be carried out in any desired order (and any desired steps may be added and/or any desired steps may be eliminated).

## Claims

1. A chemiluminescent system, comprising:
- an oxalate system, comprising:
(a) at least one oxalate ester in an amount ranging from 3 to 60 percent by weight based on a total weight of the oxalate system,
(b) at least one first solvent selected from the group consisting of: alkyl benzoates, dialkyl phthalates, trialkyl acetylcitrates, 2-acetyloxy isobutyrates, paraffinic liquids, isoparaffinic liquids, toluene, nitroethane, and a combination thereof,
wherein the at least one first solvent is present in an amount ranging from 10 to 97 percent by weight based on the total weight of the oxalate system;
(c) at least one second solvent selected from the group consisting of: dialkyl malonates, dialkyl dialkylmalonates, dialkyl arylalkylmalonates, dialkyl succinates, dialkyl glutarates, dialkyl adipates, dialkyl pimelates, dialkyl polyalkylmalonates, and a combination thereof, wherein the at least one second solvent is present in an amount ranging from 5 to 85 percent by weight based on the total weight of the oxalate system;
(d) at least one fluorescer, and
(e) at least one inorganic salt, in an amount ranging from 0.1 to 30 percent by weight based on the total weight of the oxalate system, and
- an activator system, comprising:
(a) at least one peroxide,
(b) at least one third solvent selected from the group consisting of: tert-butanol, 3-methyl-3-pentanol, 2- methyl-2-butanol, ethyl 2-hydroxyisobutyrate, methyl 2- hydroxyisobutyrate, ethylene glycol, propylene glycol, ethylene glycol monomethyl ether, ethylene glycol diethyl ether, ethylene glycol monobutyl ether, ethylene glycol dibutyl ether, and propylene glycol dimethyl ether, and a combination thereof;
wherein the at least one third solvent is present in an amount ranging from 5 to 85 percent by weight based on the total weight of the activator system,
(c) at least one fourth solvent selected from the group consisting of: trialkyl citrates, dialkyl phthalates, and a combination thereof; wherein the at least one fourth solvent is present in an amount ranging from 15 to 95 percent by weight based on a total weight of the activator system, and
(d) at least one catalyst, and
wherein the chemiluminescent system, at a temperature ranging from -110 degrees Celsius to 75 degrees Celsius, is configured to produce a light having an illuminescence.

2. The chemiluminescent system of claim 1,
wherein the at least one oxalate ester is represented by formula (I): 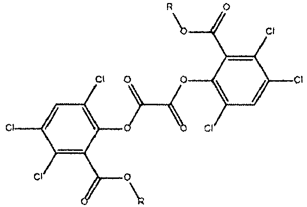 wherein R=CH₂A, and A is selected from the group consisting of an alkyl chain, alkyl ring, an aromatic ring, and a combination thereof,
wherein R is linear or branched, and
wherein R is from C₄₋₁₅.

3. The chemiluminescent system of claim 1,
wherein the at least one oxalate ester is selected from the group consisting of: bis{3,4,6-trichloro-2-[(2-methylpropoxy)carbonyl]phenyl}oxalate, bis{3,4,6-trichloro-2-[(cyclopropylmethoxy)carbonyl]phenyl}oxalate, bis{3,4,6-trichloro-2-[(2-methylbutoxy)carbonyl]phenyl}oxalate, bis{3,4,6-trichloro-2-[(3-methylbutoxy)carbonyl]phenyl}oxalate, bis{3,4,6-trichloro-2-[(2,2-dimethylpropoxy)carbonyl]phenyl}oxalate, bis{3,4,6-trichloro-2-[(2-methylpentyloxy)carbonyl]phenyl}oxalate, bis{3,4,6-trichloro-2-[(3-methylpentyloxy)carbonyl]phenyl}oxalate, bis{3,4,6-tri chloro-2-[(4-methylpentyloxy)carbonyl]phenyl}oxalate, bis{3,4,6-trichloro-2-[(3,3-dimethylbutoxy)carbonyl]phenyl}oxalate, bis{3,4,6-trichloro-2-[(2-ethylbutoxy)carbonyl]phenyl}oxalate, bis{3,4,6-trichloro-2-[(cyclopentylmethoxy)carbonyl]phenyl}oxalate, bis{3,4,6-trichloro-2-[(2-methylhexyloxy)carbonyl]phenyl}oxalate, bis{3,4,6-trichloro-2-[(3-methylhexyloxy)carbonyl]phenyl}oxalate, bis{3,4,6-trichloro-2-[(4-methylhexyloxy)carbonyl]phenyl}oxalate, bis{3,4,6-trichloro-2-[(5-methylhexyloxy)carbonyl]phenyl}oxalate, bis{3,4,6-trichloro-2-[(cyclohexylmethoxy)carbonyl]phenyl}oxalate, bis{3,4 6-trichloro-2-[(phenylmethoxy)carbonyl]phenyl}oxalate, bis{3,4,6-trichloro-2-[(2-phenylethoxy)carbonyl]phenyl}oxalate, bis(3,4, 6-trichloro-2-{[(2-methylphenyl)methoxy]carbonyl}phenyl)oxalate, bis(3,4,6-trichloro-2-{[(3-methylphenyl)methoxy]carbonyl}phenyl)oxalate, bis(3,4,6-trichloro-2-{[(4-methylphenyl)methoxy]carbonyl}phenyl)oxalate, bis(3,4,6-trichloro-2-{[(2,3-dimethylphenyl)methoxy]carbonyl}phenyl)oxalate, bis(3,4,6-trichloro-2-{[(2,4-dimethylphenyl)methoxy]carbonyl}phenyl)oxalate, bis(3 ,4,6-trichloro-2-{[3,4-dimethylphenyl)methoxy]carbonyl}phenyl)oxalate, bis(3,4,6-trichloro-2-{[(3,5-dimethylphenyl)methoxy]carbonyl}phenyl)oxalate, bis(3,4,6-trichloro-2-{[ (2,6-dimethylphenyl)methoxy] carbonyl}phenyl)oxalate, bis(3,4,6-trichloro-2-{[(2-ethylphenyl)methoxy]carbonyl}phenyl)oxalate, bis(3,4,6-trichloro-2-{[(3-ethylphenyl)methoxy]carbonyl}phenyl)oxalate, bis(3,4,6-trichloro-2-{[(4-ethylphenyl)methoxy]carbonyl}phenyl)oxalate, bis(3,4,6-trichloro-2-{[2-(2-methylphenyl)ethoxy]carbonyl}phenyl)oxalate, bis(3,4,6-trichloro-2-{[2-(3-methylphenyl)ethoxy]carbonyl}phenyl)oxalate, bis(3,4,6-trichloro-2-{[2-(4-methylphenyl)ethoxy]carbonyl}phenyl)oxalate, bis{3,4,6-trichloro-2-[(2-phenylpropoxy)carbonyl]phenyl}oxalate, bis{3,4,6-trichloro-2-[(3-phenylpropoxy)carbonyl]phenyl}oxalate, bis{3,4,6-trichloro-2-[1-naphthalenylmethoxy)carbonyl]phenyl}oxalate, bis{3,4,6-trichloro-2-[2-naphthalenylmethoxy)carbonyl]phenyl}oxalate, bis{3,4,6-trichloro-2-[(2,2-diphenylethoxy)carbonyl]phenyl}oxalate, bis{3,4,6-trichloro-2-[(9-fluorenylmethoxy)carbonyl]phenyl}oxalate, and bis{3,4,6-trichloro-2-[(9-anthracenylmethoxy)carbonyl]phenyl}oxalate.

4. The chemiluminescent system of one of claims 1 to 3,
wherein the at least one fluorescer is present in an amount ranging from 0.05 to 0.9 percent by weight based on the total weight of the chemiluminescent system.

5. The chemiluminescent system of one of claims 1 to 4,
wherein the at least one inorganic salt is selected from the group consisting of: sodium thiosulphate, potassium thiosulphate, cobalt acetate, copper acetate, lead acetate, cupric chloride, ferric chloride, calcium iodide, potassium iodide, silver nitrate, and a combination thereof.

6. The chemiluminescent system of one of claims 1 to 5,
wherein the at least one peroxide is selected from the group consisting of: hydrogen peroxide, sodium peroxide, sodium perborate, sodium pyrophosphate peroxide, urea peroxide, histidine peroxide, t-butylhydroperoxide, peroxynehzoic acid, sodium percarbonate, and a combination thereof.

7. The chemiluminescent system of one of claims 1 to 6,
wherein the at least one peroxide is present in an amount ranging from 0.25 to 25 percent by weight based on the total weight of the chemiluminescent system.

8. The chemiluminescent system of one of claims 1 to 7,
wherein the at least one catalyst is selected from the group consisting of: dimethylbenzylamine, N,N-dimethyl-1-phenylethylamine, N-ethyl-N-methylbenzylamine, diethylbenzylamine, N-methyl-N-propylbenzylamine, N,N-dibutylbenzylamine, N,N-bis(1-methylethyl)benzenemethanamine, methyl dibenzylamine, ethyl dibenzylamine, n-propyl dibenzylamine, iso-propyl dibenzylamine, butyl dibenzylamine, iso-butyl dibenzylamine, N,N-dibenzyl-2-phenylethanamine, hexyl dibenzylamine, tribenzyl amine, 4-methyl-N,N-bis[(4-methylphenyl)methyl]benzenemethanamine, 4-methyl-N,N-bis(phenylmethyl)benzenemethanamine, N-methyl-N-phenylbenzenemethanamine, N-ethyl-N-phenylbenzenemethanamine, N,4-dimethyl-N-phenylbenzenemethanamine, N-propyl-N-phenylbenzenemethanamine, N,N-diphenylbenzenemethanamine, N,N-bis(4-methylphenyl)benzenemethanamine, lithium benzoate, sodium benzoate, potassium benzoate, cesium benzoate, lithium salicylate, sodium salicylate, potassium salicylate, cesium salicylate, lithium o-anisate, sodium o-anisate, potassium o-anisate, cesium o-anisate, lithium p-anisate, sodium p-anisate, potassium p-anisate, and/or cesium p-anisate.

9. The chemiluminescent system of one of claims 1 to 8,
wherein the at least one catalyst is present in an amount ranging from 5 to 0.0005 percent by weight based on the total weight of the chemiluminescent system.

## Patentansprüche

1. Ein chemilumineszentes System, das Folgendes umfasst:
- ein Oxalat-System, das Folgendes umfasst:
(a) mindestens einen Oxalat-Ester in einer Menge zwischen 3 und 60 Prozent nach Gewicht, bezogen auf das Gesamtgewicht des Oxalat-Systems,
(b) mindestens ein erstes Lösemittel, das aus einer aus folgenden Lösemitteln bestehenden Gruppe ausgewählt wird: Alkylbenzoate, Dialkylphthalate, Trialkylacetylcitrate, 2-Acetyloxyisobutyrate, paraffinische Flüssigkeiten, isoparaffinische Flüssigkeiten, Toluol, Nitroethan, und eine Verbindung daraus,
wobei das mindestens eine erstes Lösemittel in einer Menge zwischen 10 und 97 Prozent nach Gewicht, bezogen auf das Gesamtgewicht des Oxalat-Systems, vorhanden ist;
(c) mindestens ein zweites Lösemittel, das aus einer aus folgenden Lösemitteln bestehenden Gruppe ausgewählt wird: Dialkylmalonate, Dialkyldialkylmalonate, Dialkylarylalkylmalonate, Dialkylsuccinate, Dialkylglutarate, Dialkyladipate, Dialkylpimelate, Dialkyl- polyalkylmalonate und eine Kombination daraus, wobei das mindestens eine zweites Lösemittel in einer Menge zwischen 5 und 85 Prozent nach Gewicht, bezogen auf das Gesamtgewicht des Oxalat-Systems vorhanden ist;
(d) mindestens ein Fluoreszenzmittel, und
(e) mindestens ein anorganisches Salz in einer Menge zwischen 0,1 und 30 Prozent nach Gewicht, bezogen auf das Gesamtgewicht des Oxalat-Systems, und
- ein Aktivatorsystem, das Folgendes umfasst:
(a) mindestens ein Peroxid,
(b) mindestens ein drittes Lösemittel, das aus einer aus folgenden Lösemitteln bestehenden Gruppe ausgewählt wird: tert-Butanol, 3-Methyl-3-Pentanol, 2-Methyl-2-Butanol, Ethyl 2-Hydroxyibutirat, Methyl 2-Hydroxybutirat, Ethylenglycol, Propylenglycol, Ethylenglycolmonomethylether, Ethylenglycoldiethylether, Ethylenglycolmonobutylether, Ethylenglycoldibutylether und Propylenglycoldimethylether und eine Kombination daraus;
wobei das mindestens eine dritte Lösemittel in einer Menge zwischen 5 und 85 Prozent nach Gewicht, bezogen auf das Gesamtgewicht des Aktivatorsystems, vorhanden ist,
(c) mindestens ein viertes Lösemittel, das aus einer aus folgenden Lösemitteln bestehenden Gruppe ausgewählt wird: Trialkylcitrate, Dialkylphthalate und eine Kombination daraus,
wobei das mindestens eine vierte Lösemittel in einer Menge zwischen 15 und 95 Prozent nach Gewicht, bezogen auf das Gesamtgewicht des Aktivatorsystems vorhanden ist, und
(d) mindestens einen Katalysator, und
wobei das chemilumineszente System bei einer Temperatur zwischen -110 Grad Celsius und 75 Grad Celsius so konfiguriert ist, dass es ein Licht erzeugt, welches eine Leuchtkraft aufweist.

2. Das chemilumineszente System gemäß Anspruch 1,
wobei der mindestens eine Oxalat-Ester durch Formel (1) dargestellt wird: 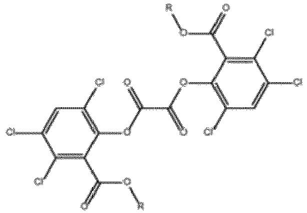 wobei R=CH₂A, und A aus der Gruppe ausgewählt wird, die aus einer Alkylkette, einem Alkylring, einem aromatischen Ring und einer Kombination daraus besteht,
wobei R linear oder verzweigt ist, und
wobei R sich aus C₄₋₁₅ ergibt.

3. Das chemilumineszente System gemäß Anspruch 1,
wobei der mindestens eine Oxalat-Ester aus der Gruppe ausgewählt wird, die aus Folgendem besteht: bis{3,4,6-Trichloro-2-[(2-Methylpropoxy)Carbonyl]Phenyl}Oxalat, bis{3,4,6-Trichloro-2-[(Cyclopropylmethoxy)Carbonyl]Phenyl}Oxalat, bis{3,4,6-Trichloro-2-[(2-Methylbutoxy)Carbonyl]Phenyl}Oxalat, bis{3,4,6-Trichloro-2-[(2,2-Dimethylpropoxy)Carbonyl]Phenyl}Oxalat, bis{3,4,6-Trichloro-2-[(2-Methylpentyloxy)Carbonyl]Phenyl}Oxalat, bis{3,4,6-Trichloro-2-[(3-Methylpenty-loxy)Carbonyl]Phenyl}Oxalat, bis{3,4,6-Trichloro-2-[(4-Methylpentyloxy)Carbonyl]Phenyl}Oxalat, bis{3,4,6-Trichloro-2-[(3,3-Dimethylbutoxy)Carbonyl]Phenyl}Oxalat, bis{3,4,6-Trichloro-2-[(2-Ethylbutoxy)Carbonyl]Phenyl}Oxalat, bis{3,4,6-Trichloro-2-[(Cyclopentylmethoxy)Carbonyl]Phenyl}Oxalat, bis{3,4,6-Trichloro-2-[(2-Methylhexyloxy)Carbonyl]Phenyl}Oxalat, bis{3,4,6-Trichloro-2-[(3-Methylhexyloxy)Carbonyl]Phenyl}Oxalat, bis{3,4,6-Trichloro-2-[(4-Methylhexyloxy)Carbonyl]Phenyl}Oxalat, bis{3,4,6-Trichloro-2-[(5-Methyhexyloxy)Carbony]Phenyl}Oxalat, bis{3,4,6-Trichloro-2-[(Cyclohexylmethoxy)Carbonyl]Phenyl}Oxalat, bis{3,4,6-Trichloro-2-[(Phenylmethoxy)Carbonyl]Phenyl}Oxalat, bis{3,4,6-Trichloro-2-[(2-Phenylethoxy)Carbonyl]Phenyl}Oxalat, bis(3,4,6-Trichloro-2-{ [(2-Methylphenyl)Methoxy]Carbonyl}Phenyl)Oxalat, bis(3,4,6-Trichloro-2-{ [(3-Methylphenyl)Methoxy]Carbonyl}Phenyl)Oxalat, bis(3,4,6-Trichloro-2-{ [(2,3-Dimethylphenyl)Methoxy]Carbonyl}Phenyl)Oxalat, bis(3,4,6-Trichloro-2-{[(2,4-Dimethylphenyl)Methoxy]Carbonyl}Phenyl)Oxalat, bis(3,4,6-Trichloro-2-{[(3,4-Dimethylphenyl)Methoxy]Carbonyl}Phenyl)Oxalat, bis(3,4,6-Trichloro-2-{ [(3,5-Dimethylphenyl)Methoxy]Carbonyl}Phenyl)Oxalat, bis(3,4,6-Trichloro-2-{[(2,6-Dimethylphenyl)Methoxy]Carbonyl}Phenyl)Oxalat, bis(3,4,6-Trichloro-2-{[(2-Ethylphenyl)Methoxy]Carbonyl}Phenyl)Oxalat, , bis(3,4,6-Trichloro-2-{[(3-Ethylphenyl)Methoxy]Carbonyl}Phenyl)Oxalat, , bis(3,4,6-Trichloro-2-{[(4-Ethylphenyl)Methoxy]Carbonyl}Phenyl)Oxalat, bis{3,4,6-Trichloro-2-{[(2-(2-Methylphenyl)Ethoxy]Carbonyl}Phenyl)Oxalat, bis{3,4,6-Trichloro-2-{[(2-(3-Methylphenyl)Ethoxy]Carbonyl}Phenyl)Oxalat, bis{3,4,6-Trichloro-2--{[(2-(4-Methylphenyl)Ethoxy]Carbonyl}Phenyl)Oxalat, bis{3,4,6-Trichloro-2-[(2-Phenylpropoxy)Carbonyl]Phenyl}Oxalat, bis{3,4,6-Trichloro-2-[(3-Phenylpropoxy)Carbonyl]Phenyl}Oxalat, bis{3,4,6-Trichloro-2-[(1-Naphtalenylmethoxy)Carbonyl]Phenyl}Oxalat, bis{3,4,6-Trichloro-2-[(2-Naphtalenylmethoxy)Carbonyl]Phenyl}Oxalat, bis{3,4,6-Trichloro-2-[(2,2-Diphenylethoxy)Carbonyl]Phenyl}Oxalat, bis{3,4,6-Trichloro-2-[(9-Fluorenylmethoxy)Carbonyl]Phenyl}Oxalat und bis{3,4,6-Trichloro-2-[(9-Anthracenylmethoxy)Carbonyl]Phenyl}Oxalat.

4. Das chemilumineszente System gemäß einem der Ansprüche 1 bis 3,
wobei das mindestens eine Fluoreszenzmittel in einer Menge zwischen 0,05 und 0,9 Prozent nach Gewicht, bezogen auf das Gesamtgewicht des chemilumineszenten Systems, vorhanden ist.

5. Das chemilumineszente System gemäß einem der Ansprüche 1 bis 4,
wobei das mindestens eine anorganische Salz aus einer aus Folgendem bestehenden Gruppe ausgewählt wird: Natriumthiosulfat, Kaliumthiosulfat, Kobaldazetat, Kupfer-azetat, Kupferchlorid, Eisenchlorid, Kalziumjodid, Kaliumjodid, Silbernitrat und eine Kombination daraus.

6. Das chemilumineszente System gemäß einem der Ansprüche 1 bis 5,
wobei das mindestens eine Peroxid aus einer aus Folgendem bestehenden Gruppe ausgewählt wird: Wasserstoffperoxid, Natriumperoxid, Natriumperborat, Natriumpy-rophosphat, Ureaperoxid, Histidinperoxid, t-Butylhydroperoxid, Peroxybenzoesäure, Natriumpercarbonat und eine Kombination daraus.

7. Das chemilumineszente System gemäß einem der Ansprüche 1 bis 6,
wobei das mindestens eine Peroxid in einer Menge zwischen 0,25 und 25 Prozent nach Gewicht, bezogen auf das Gesamtgewicht des chemilumineszenten Systems, vorhanden ist.

8. Das chemilumineszente System gemäß einem der Ansprüche 1 bis 7,
wobei der mindestens eine Katalysator aus einer aus Folgendem bestehenden Gruppe ausgewählt wird: Dimethylbenzylamin, N,N-Dimethyl-1-Phenylethylamin, N-Ethyl-N-Methylbenzylamin, Diethylbenzylamin, N-Methyl-N-Propylbenzylamin, N,N-Dibutylbenzylamin, N,N-bis(1-Methylethyl)Benzenemethanamin, Methyldibenzyla-min, Ethyldibenzylamin, n-Propyldibenzylamin, Isopropyldibenzylamin, Butyldi-benzylamin, Isobutyldibenzylamin, N,N-Dibutyl-2-Phenylethanamin, Hexyldi-benzylamin, Tribenzylamin, 4-Menthyl-N,N-bis[(4-Methylphenyl)Methyl]Benzenemethanamin, 4-Methyl-N-N-Phenylbenzenemethanamin, N-Ethyl-N-Phenylbenzenemethanamin, N,4-Dimethyl-N-Phenylbenzenemethanamin, N-Propyl-N-Phenylbenzenemethanamin, N,N-Diphenylbenzenemethanamin, N,N-bis(4-Methylphenyl)Benzenemethanamin, Lithi-umbenzoat, Natriumbenzoat, Kaliumbenzoat, Cäsiumbenzoat, Lithiumsalicylat, Natri-umsalicylat, Kaliumsalicylat, Cäsiumsalicylat, Lithium-o-Anisat, Natrium-o-Anisat, Kalium-o-Anisat, Cäsium-o-Anisat, Lithium-p-Anisat, Natrium-p-Anisat, Kalium-p-Anisat, und/oder Cäsium-p-Anisat.

9. Das chemilumineszente System gemäß einem der Ansprüche 1 bis 8,
wobei der mindestens eine Katalysator in einer Menge zwischen 5 und 0,0005 Prozent nach Gewicht, bezogen auf das Gesamtgewicht des chemilumineszenten Systems, vorhanden ist.

## Revendications

1. Système chimioluminescent, comprenant:
- un système oxalate, comprenant:
(a) au moins un ester d'oxalate dans une quantité dans la plage de 3 à 60 % en poids sur la base d'un poids total du système oxalate,
(b) au moins un premier solvant sélectionné parmi le groupe comprenant: alkyl benzoates, dialkyl phthalates, trialkyl acétylcitrates, 2-acétyloxy isobutyrates, liquides paraffinés, liquides isoparaffinés, toluène, nitroéthane, et une combinaison de ceux-ci,
dans lequel ledit au moins un premier solvant est présent dans une quantité dans la plage de 10 à 97 % en poids sur la base du poids total du système oxalate ;
(c) au moins un second solvant sélectionné parmi le groupe comprenant: dialkyl malonates, dialkyl dialkylmalonates, dialkyl arylalkylmalonates, dialkyl succinates, dialkyl glutarates, dialkyl adipates, dialkyl pimelates, dialkyl polyalkylmalonates, et une combinaison de ceux-ci, dans lequel ledit au moins un second solvant est présent dans une quantité dans la plage de 5 à 85 % en poids sur la base du poids total du système oxalate ;
(d) au moins un agent fluorescent, et
(e) au moins un sel inorganique, dans une quantité dans la plage de 0,1 à 30 % en poids sur la base du poids total du système oxalate, et
- un système activateur, comprenant :
(a) au moins un peroxyde,
(b) au moins un troisième solvant sélectionné parmi le groupe comprenant: tert-butanol, 3-méthyl-3-pentanol, 2-méthyl-2-butanol, éthyl 2-hydroxyisobutyrate, méthyl 2-hydroxyisobutyrate, éthylène glycol, propylène glycol, éthylène glycol monométhyl éther, éthylène glycol diéthyl éther, éthylène glycol monobutyl éther, éthylène glycol dibutyl éther, and propylène glycol diméthyl éther, et une combinaison de ceux-ci ;
dans lequel ledit au moins un troisième solvant est présent dans une quantité dans la plage de 5 à 85 % en poids sur la base du poids total du système activateur,
(c) au moins un quatrième solvant sélectionné parmi le groupe comprenant: trialkyl citrates, dialkyl phtalates, et une combinaison de ceux-ci ;
dans lequel ledit au moins un quatrième solvant est présent dans une quantité dans la plage de 15 à 95 % en poids sur la base d'un poids total du système activateur, et
(d) au moins un catalyseur, et
dans lequel le système chimioluminescent, à une température dans la plage de -110 °C à 75 °C, est configuré pour produire une lumière présentant une luminescence.

2. Système chimioluminescent selon la revendication 1,
dans lequel ledit au moins un ester oxalate est représenté par la formule (I): 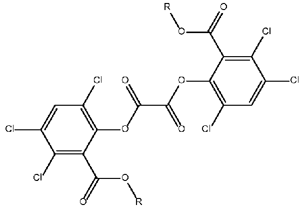 dans laquelle R = CH₂A, et A est sélectionné parmi le groupe comprenant une chaîne alkyl, un cycle alkyl, un cycle aromatique, et une combinaison de ceux-ci,
dans laquelle R est linéaire ou ramifié, et
dans laquelle R est dans la plage de C4-15.

3. Système chimioluminescent selon la revendication 1,
dans lequel ledit au moins un ester oxalate est sélectionné parmi le groupe comprenant :
bis{3,4,6-trichloro-2-[(2-méthylpropoxy)carbonyl]phényl}oxalate, bis{3,4,6-trichloro-2-[(cyclopropylméthoxy)carbonyl]phényl}oxalate, bis{3,4,6-trichloro-2-[(2-méthylbutoxy)carbonyl]phényl}oxalate, bis{3,4,6-trichloro-2-[(3-méthylbutoxy)carbonyl]phényl}oxalate, bis{3,4,6-trichloro-2-[(2,2-diméthylpropoxy)carbonyl]phényl}oxalate, bis{3,4,6-trichloro-2-[(2-méthylpentyloxy)carbonyl]phényl}oxalate, bis{3,4,6-trichloro-2-[(3-méthylpentyloxy)carbonyl]phényl}oxalate, bis{3,4,6-tri chloro-2-[(4-méthylpentyloxy)carbonyl]phényl}oxalate, bis{3,4,6-trichloro-2-[(3,3-diméthylbutoxy)carbonyl]phényl}oxalate, bis{3,4,6-trichloro-2-[(2-éthylbutoxy)carbonyl]phényl}oxalate, bis{3,4,6-trichloro-2-[(cyclopentylméthoxy)carbonyl]phényl}oxalate, bis{3,4,6-trichloro-2-[(2-méthylhexyloxy)carbonyl]phényl}oxalate, bis{3,4,6-trichloro-2-[(3-méthylhexyloxy)carbonyl]phényl}oxalate, bis{3,4,6-trichloro-2-[(4-méthylhexyloxy)carbonyl]phényl}oxalate, bis{3,4,6-trichloro-2-[(5-méthylhexyloxy)carbonyl]phényl}oxalate, bis{3,4,6-trichloro-2-[(cyclohexylméthoxy)carbonyl]phényl}oxalate, bis{3,4,6-trichloro-2-[(phénylméthoxy)carbonyl]phényl}oxalate, bis{3,4,6-trichloro-2-[(2-phényléthoxy)carbonyl]phényl}oxalate, bis(3,4,6-trichloro-2-{[(2-méthylphényl)méthoxy]carbonyl}phényl)oxalate, bis(3,4,6-trichloro-2-{[(3-méthylphényl)méthoxy]carbonyl}phényl)oxalate, bis(3,4,6-trichloro-2-{[(4-méthylphényl)méthoxy]carbonyl}phényl)oxalate, bis(3,4,6-trichloro-2-{[(2,3-diméthylphényl)méthoxy]carbonyl}phényl)oxalate, bis(3,4,6-trichloro-2-{[(2,4-diméthylphényl)méthoxy]carbonyl}phényl)oxalate, bis(3,4 ,6-trichloro-2-{[3,4-diméthylphényl)méthoxy]carbonyl}phényl)oxalate, bis(3,4,6-trichloro-2-{[(3,5-diméthylphényl)méthoxy]carbonyl}phényl)oxalate, bis(3,4,6-trichloro-2-{[(2,6-diméthylphényl)méthoxy] carbonyl}phényl)oxalate, bis(3,4,6-trichloro-2-{[(2-éthylphényl)méthoxy]carbonyl}phényl)oxalate, bis(3,4,6-trichloro-2-{[(3-éthylphényl)méthoxy]carbonyl}phényl)oxalate, bis(3,4,6-trichloro-2-{[(4-éthylphényl)méthoxy]carbonyl}phényl)oxalate, bis(3,4,6-trichloro-2-{[2-(2-méthylphényl)éthoxy]carbonyl}phényl)oxalate, bis(3,4,6-trichloro-2-{[2-(3-méthylphényl)éthoxy]carbonyl}phényl)oxalate, bis(3,4,6-trichloro-2-{[2-(4-méthylphényl)éthoxy]carbonyl}phényl)oxalate, bis{3,4,6-trichloro-2-[(2-phénylpropoxy)carbonyl]phényl}oxalate, bis{3,4,6-trichloro-2-[(3-phénylpropoxy)carbonyl]phényl}oxalate, bis{3,4,6-trichloro-2-[1-naphthalènylméthoxy)carbonyl]phényl}oxalate, bis{3,4,6-trichloro-2-[2-naphthalènylméthoxy)carbonyl]phényl}oxalate, bis{3,4,6-trichloro-2-[(2,2-diphényléthoxy)carbonyl]phényl}oxalate, bis{3,4,6-trichloro-2-[(9-fluorènylméthoxy)carbonyl]phényl}oxalate, et bis{3,4,6-trichloro-2-[(9-anthracènylméthoxy)carbonyl]phényl}oxalate.

4. Système chimioluminescent selon l'une des revendications 1 à 3,
dans lequel ledit au moins un agent fluorescent est présent dans une quantité dans la plage de 0,05 à 0,9 % en poids sur la base du poids total du système chimioluminescent.

5. Système chimioluminescent selon l'une des revendications 1 à 4,
dans lequel ledit au moins un sel inorganique est sélectionné parmi le groupe comprenant:
thiosulphate de sodium, thiosulphate de potassium, acétate de cobalt, acétate de cuivre, acétate de plomb, chlorure cuprique, chlorure ferrique, iodure de calcium, iodure de potassium, nitrate d'argent, et une combinaison de ceux-ci.

6. Système chimioluminescent selon l'une des revendications 1 à 5,
dans lequel ledit au moins un peroxyde est sélectionné parmi le groupe comprenant :
peroxyde d'hydrogène, peroxyde de sodium, perborate de sodium, peroxyde pyrophosphate de sodium, peroxyde d'urée, peroxyde d'histidine, t-butyle hydroperoxyde, acide peroxynehzoique, carbonate de sodium, et une combinaison de ceux-ci.

7. Système chimioluminescent selon l'une des revendications 1 à 6,
dans lequel ledit au moins un peroxyde est présent dans une quantité dans la plage de 0,25 à 25 % en poids sur la base du poids total du système chimioluminescent.

8. Système chimioluminescent selon l'une des revendications 1 à 7,
dans lequel ledit au moins un catalyseur est sélectionné parmi le groupe comprenant :
diméthylbenzylamine, N,N-diméthyl-1-phényléthylamine, N-éthyl-N-méthylbenzylamine, diéthylbenzylamine, N-méthyl-N-propylbenzylamine, N,N-dibutylbenzylamine, N,N-bis(1-méthyléthyl)benzèneméthanamine, méthyl dibenzylamine, éthyl dibenzylamine, n-propyl dibenzylamine, iso-propyl dibenzylamine, butyl dibenzylamine, iso-butyl dibenzylamine, N,N-dibenzyl-2-phényléthanamine, hexyl dibenzylamine, tribenzyl amine, 4-méthyl-N,N-bis[(4-méthylphényl)méthyl]benzèneméthanamine, 4-méthyl-N,N-bis(phénylméthyl)benzèneméthanamine, N-méthyl-N-phénylbenzèneméthanamine, N-éthyl-N-phénylbenzèneméthanamine, N,4-diméthyl-N-phénylbenzèneméthanamine, N-propyl-N-phénylbenzèneméthanamine, N,N-diphénylbenzèneméthanamine, N,N-bis(4-méthylphényl)benzèneméthanamine, benzoate de lithium, benzoate de sodium, benzoate de potassium, benzoate de césium, lithium salicylate, sodium salicylate, potassium salicylate, césium salicylate, o-anisate de lithium, o-anisate de sodium, o-anisate de potassium, o-anisate de césium, p-anisate de lithium, p-anisate de sodium, p-anisate de potassium, et/ou p-anisate de césium.

9. Système chimioluminescent selon l'une des revendications 1 à 8,
dans lequel ledit au moins un catalyseur est présent dans une quantité dans la plage de 5 à 0,0005 % en poids sur la base du poids total du système chimioluminescent.
